(19) Europäisches Patentamt
European Patent Office
Office européen des brevets

(11) EP 3 649 758 B1

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(21) Anmeldenummer: **18737241.2**

(22) Anmeldetag: **03.07.2018**

(51) Int Cl.:
***H04L 5/00*** *(2006.01)*

(86) Internationale Anmeldenummer:
**PCT/EP2018/067891**

(87) Internationale Veröffentlichungsnummer:
**WO 2019/007933 (10.01.2019 Gazette 2019/02)**

(54) **SPEZIFISCHE SPRUNGMUSTER FÜR WIEDERHOLTES SENDEN UND EMPFANGEN VON DATEN**

SPECIFIC HOPPING PATTERN FOR REPEATEDLY SENDING AND RECEIVING DATA

SCHÉMA DE SAUT SPÉCIFIQUE POUR L'ÉMISSION ET LA RÉCEPTION RÉPÉTÉES DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2017 DE 102017211375**

(43) Veröffentlichungstag der Anmeldung:
**13.05.2020 Patentblatt 2020/20**

(60) Teilanmeldung:
**21158768.8 / 3 846 376**

(73) Patentinhaber: **Fraunhofer-Gesellschaft zur Förderung der angewandten Forschung e.V.**
**80686 München (DE)**

(72) Erfinder:
- **KNEISSL, Jakob**
  **90765 Fürth (DE)**
- **BERNHARD, Josef**
  **92507 Nabburg (DE)**
- **KILIAN, Gerd**
  **91056 Erlangen (DE)**
- **WECHSLER, Johannes**
  **91174 Spalt (DE)**
- **MEYER, Raimund**
  **90765 Fürth (DE)**
- **OBERNOSTERER, Frank**
  **90411 Nürnberg (DE)**

(74) Vertreter: **Schlenker, Julian et al**
**Schoppe, Zimmermann, Stöckeler**
**Zinkler, Schenk & Partner mbB**
**Patentanwälte**
**Radlkoferstraße 2**
**81373 München (DE)**

(56) Entgegenhaltungen:
**EP-A2- 2 015 465**
**DE-A1- 10 211 235**
**US-A1- 2005 176 371**
**US-A1- 2016 044 729**

- **ALEX W LAM ET AL: "Time-Hopping and Frequency-Hopping Multiple-Access Packet Communications", IEEE TRANSACTIONS ON COMMUNICATIONS, IEEE SERVICE CENTER, PISCATAWAY, NJ. USA, Bd. 38, Nr. 6, 1. Juni 1990 (1990-06-01), Seiten 875-888, XP002671768, ISSN: 0090-6778, DOI: 10.1109/26.57480**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Ausführungsbeispiele beziehen sich auf einen Datensender und ein Verfahren zum Betrieb desselben. Weitere Ausführungsbeispiele beziehen sich auf einen Datenempfänger und ein Verfahren zum Betrieb desselben. Weitere Ausführungsbeispiele beziehen sich auf eine Erzeugung von spezifischen Sprungmustern für eine wiederholte Aussendung von Daten. Weitere Ausführungsbeispiele beziehen sich auf ein wiederholtes Senden und Empfangen von Daten unter Verwendung von spezifischen Sprungmustern. Manche Ausführungsbeispiele beziehen sich auf einen Optimierungsprozess zur Generierung von Sprungmustern (engl. hopping-pattern) zur Verwendung bei verschachtelten Wiederholungen.

Aus DE 10 2011 082 098 B4 ist das Telegram-Splitting-Verfahren (Telegrammaufteilungsverfahren) bekannt, wonach ein Telegramm (oder Datenpaket) auf eine Mehrzahl von Sub-Datenpakete aufgeteilt wird, die unter Verwendung eines Sprungmusters in der Zeit und optional in der Frequenz verteilt übertragen werden.

In der WO 2015/128385 A1 wird eine Datensendeanordnung beschrieben, die ein Energy-Harvesting-Element als Energiequelle aufweist. Die Datensendeanordnung ist dabei ausgebildet, um Daten unter Verwendung des Telegram Splitting Verfahrens zu senden, wobei ein zum Senden anstehendes Teilpaket in Abhängigkeit von einer von der Energieversorgungseinrichtung bereitstellbaren elektrischen Energiemenge entweder gesendet wird, zwischengespeichert und später gesendet wird, oder verworfen wird.

In der Veröffentlichung [G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013] wird eine verbesserte Reichweite für Niedrigenergietelemetriesysteme, die das Telegram Splitting Verfahren verwenden, beschrieben.

In der Veröffentlichung [G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015] wird eine verbesserte Übertragungssicherheit für Niedrigenergietelemetriesysteme, die das Telegram Splitting Verfahren verwenden, beschrieben.

Das Telegram-Splitting-Verfahren nutzt bestimmte Zeit-Frequenz-Sprungmuster zur Übertragung von Daten über den Funkkanal. Um ein Datenpaket erfolgreich decodieren zu können, ist es notwendig, dass das Sprungmuster, das zum Versenden verwendet wurde, am Empfänger bekannt ist. Um dies zu gewährleisten sind für Telegram-Splitting-Netzwerke globale Zeit- und Frequenzsprungmuster definiert, die allen Teilnehmern bekannt sind.

Bei der Kommunikation mehrerer Teilnehmer mittels Telegram-Splitting im gleichen Band ergibt sich eine schlechtere Störfestigkeit der Übertragung, wenn das gleiche Zeit und/oder Frequenzsprungmuster für die Datenübertragung von mehreren Knoten genutzt wird. Starten zwei Knoten innerhalb eines kurzen Zeitfensters (z.B. die Dauer eines Sub-Datenpakets) eine Übertragung mit dem gleichen Sprungmuster, so überlagern sich alle Sub-Datenpakete des Telegramms und löschen sich im schlechtesten Fall gegenseitig aus.

Die US 2016/044729 A1 bezieht sich auf die Generierung von Übertragungsmustern für eine D2D Kommunikation, wie z.B. Voice OverIP (VoIP). Bei VoIP wird vom Codec alle 20ms ein VoIP Datenpaket generiert, welches innerhalb der 20ms insgesamt 5x ausgesendet wird (Erstaussendung + 4 Wiederholungsaussendungen).

Die Druckschrift US 2005/0176371 A1 bezieht sich auf die Übertragung von Daten in einem Kurzstreckenkommunikationssystem. Im Detail wird bei der Druckschrift D1 zur Übertragung der Daten ein Zeit-Frequenz-Code (time frequency code, TFC) verwendet. Hierbei werden einzelne OFDM Symbole in unmittelbar aufeinander folgenden Zeitschlitzen in unterschiedlichen Frequenzbändern übertragen.

In der Veröffentlichung [ALEX E LAM ET AL: "Time-Hopping and Frequency-Hopping Multiple-Access Packet Communications] wird ein Zeit- und frequenzsprungbasierter Mehrfachzugriff für Paketkommunikationen beschrieben.

Der vorliegenden Erfindung liegt somit die Aufgabe zugrunde, ein Konzept zu schaffen, welches die Übertragungssicherheit erhöht, wenn mehrere Knoten ein Zeit- und/oder Frequenzsprungmuster für die Datenübertragung nutzen.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datensender, gemäß Anspruch 1.

Weitere Ausführungsbeispiele schaffen einen Datenempfänger, gemäß Anspruch 12.

Weitere Ausführungsbeispiele schaffen ein Verfahren zum Senden von Daten, gemäß Anspruch 16.

Weitere Ausführungsbeispiele schaffen ein Verfahren zum Empfangen von Daten, gemäß Anspruch 17.

Ausführungsbeispiele der vorliegenden Erfindung werden bezugnehmend auf die beiliegenden Figuren näher beschrieben. Es zeigen:

Fig. 1 ein schematisches Blockschaltbild eines Systems mit einem Datensender und einem Datenempfänger, gemäß einem Ausführungsbeispiel der vorliegenden Erfindung;

Fig. 2 in einem Diagramm eine Belegung des Übertragungskanals bei der Übertragung einer Mehrzahl von Sub-Datenpaketen entsprechend einem Zeit- und Frequenzsprungmuster;

Fig. 3 ein schematisches Blockschaltbild eines Systems mit einem Datensender und einem Datenempfänger, gemäß einem Ausführungsbeispiel der vorliegenden Erfindung;

Fig. 4 ein Flussdiagramm eines Verfahrens zum Senden von Daten, gemäß einem Ausführungsbeispiel;

Fig. 5 ein Flussdiagramm eines Verfahrens zum Empfangen von Daten, gemäß einem Ausführungsbeispiel;

Fig. 6 ein Flussdiagramm eines Verfahrens zum Erzeugen eines Satzes von Sprungmustern, gemäß einem Ausführungsbeispiel;

Fig. 7 ein Flussdiagramm eines Verfahrens zum Erzeugen von zwei Sätzen von Sprungmustern, gemäß einem Ausführungsbeispiel;

Fig. 8a in einem Diagramm einen Aufbau eines Frames mit einem TSMA Sprungmuster;

Fig. 8b in einem Diagramm eine Belegung von zwei Frequenzkanälen und bei der wiederholten Übertragung von Daten mittels eines ersten Sprungmusters und eines zweiten Sprungmusters;

Fig. 9 in einem Diagramm eine schematische Ansicht eines Aufbaus eines TSMA-Sprungmusters;

Fig. 10a in einem Diagramm Haupt- und Nebenmaxima einer Autokorrelationsfunktion eines Sprungmusters, welches vorgegebene Autokorrelationseigenschaften aufweist, aufgetragen über die Frequenz und die Zeit;

Fig. 10b in einem Diagramm Haupt- und Nebenmaxima einer Autokorrelationsfunktion eines Sprungmusters, welches vorgegebene Autokorrelationseigenschaften nicht aufweist, aufgetragen über die Frequenz und die Zeit;

Fig. 11a in einem Diagramm Haupt- und Nebenmaxima einer Kreuzkorrelationsfunktion zweier Sprungmuster, welche vorgegebene Kreuzkorrelationseigenschaften aufweisen, aufgetragen über die Frequenz und die Zeit;

Fig. 11b in einem Diagramm Haupt- und Nebenmaxima einer Kreuzkorrelationsfunktion zweier Sprungmuster, welche vorgegebene Kreuzkorrelationseigenschaften nicht aufweisen, aufgetragen über die Frequenz und die Zeit; und

Fig. 12 ein Flussdiagramm eines Verfahrens 260 zur Erzeugung von Sprungmustern, gemäß einem Ausführungsbeispiel.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

1. Einfache (nicht wiederholte) Aussendung von Daten unter Verwendung von einem Sprungmuster

Fig. 1 zeigt ein schematisches Blockschaltbild eines Systems mit einem Datensender 100 und einem Datenempfänger 110, gemäß einem Ausführungsbeispiel der vorliegenden Erfindung.

Der Datensender 100 ist ausgebildet, um Daten 120 unter Verwendung eines Sprungmusters zu senden.

Der Datenempfänger 110 ist ausgebildet, um Daten 120 von dem Datensender 100 unter Verwendung eines Sprungmusters zu empfangen.

Wie in Fig. 1 angedeutet ist, kann das Sprungmuster 140 eine Mehrzahl von Sprüngen (engl. hops) 142 aufweisen, die in der Zeit und/oder Frequenz verteilt sind.

Bei Ausführungsbeispielen kann der Datensender 100 ausgebildet sein, um Daten 120 entsprechend des Sprungmusters 140 in der Zeit und/oder Frequenz verteilt zu senden. Dementsprechend kann der Datenempfänger 110 ausgebildet sein, um Daten 120 zu empfangen, die entsprechend des Sprungmusters 140 in der Zeit und/oder Frequenz verteilt gesendet werden.

Wie in Fig. 1 beispielhaft gezeigt ist, kann der Datensender 100 eine Sendeeinrichtung (oder Sendemodul, oder Transmitter) 102 aufweisen, die ausgebildet ist, um die Daten 120 zu senden. Die Sendeeinrichtung 102 kann mit einer Antenne 104 des Datensenders 100 verbunden sein. Der Datensender 100 kann ferner eine Empfangseinrichtung (oder Empfangsmodul, oder Receiver) 106 aufweisen, die ausgebildet ist, um Daten zu empfangen. Die Empfangseinrichtung 106 kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Der Datenempfänger 110 kann eine Empfangseinrichtung (oder Empfangsmodul, oder Receiver) 116 aufweisen, die ausgebildet ist, um Daten 120 zu empfangen. Die Empfangseinrichtung 116 kann mit einer Antenne 114 des Datenempfängers 110 verbunden sein. Ferner kann der Datenempfänger 110 eine Sendeeinrichtung (oder Sendemodul, oder Transmitter) 112 aufweisen, die ausgebildet ist, um Daten zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.

Bei Ausführungsbeispielen kann der Datensender 100 ein Sensorknoten sein, während der Datenempfänger 110 eine Basisstation sein kann. Typischerweise umfasst ein Kommunikationssystem zumindest einen Datenempfänger 110 (Basisstation) und eine Vielzahl von Datensendern (Sensorknoten, wie z.B. Heizungszähler). Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Der Datensender 100 und der Datenempfänger 110 können optional ausgebildet sein, um Daten 120 unter Verwendung des Telegram-Splitting-Verfahrens (dt. Telegrammaufteilungsverfahrens) zu senden bzw. zu empfangen. Hierbei wird ein Telegramm bzw. Datenpaket 120 in eine Mehrzahl von Sub-Datenpakete (oder Teildatenpakte, oder Teilpakete) 142 aufgeteilt und die Sub-Datenpakete 142 entsprechend des Sprungmusters 140 in der Zeit verteilt und/oder in der Frequenz verteilt von dem Datensender 100 zu dem Datenempfänger 110 übertragen, wobei der Datenempfänger 110 die Sub-Datenpakete wieder zusammenfügt (oder kombiniert), um das Datenpaket 120 zu erhalten. Jedes der Sub-Datenpakete 142 enthält dabei nur einen Teil des Datenpakets 120. Das Datenpaket 120 kann ferner kanalcodiert sein, so dass zum fehlerfreien Decodieren des Datenpakets 120 nicht alle Sub-Datenpakete 142 sondern nur ein Teil der Sub-Datenpakete 142 erforderlich ist.

Die zeitliche Verteilung der Mehrzahl von Sub-Datenpaketen 142 kann, wie bereits erwähnt, entsprechend eines Zeit- und/oder Frequenzsprungmusters erfolgen.

Ein Zeitsprungmuster kann eine Abfolge von Sendezeitpunkten oder Sendezeitabständen angeben, mit denen die Sub-Datenpakete gesendet werden. Beispielsweise kann ein erstes Sub-Datenpaket zu einem ersten Sendezeitpunkt (oder in einem ersten Sendezeitschlitz) und ein zweites Sub-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Sub-Datenpaketen können Sendepausen vorhanden sein in denen nicht gesendet wird. Die Sub-Datenpakete können sich auch zeitlich überlappen (überschneiden).

Ein Frequenzsprungmuster kann eine Abfolge von Sendefrequenzen oder Sendefrequenzsprüngen angeben, mit denen die Sub-Datenpakete gesendet werden. Beispielsweise kann ein erstes Sub-Datenpaket mit einer ersten Sendefrequenz (oder in einem ersten Frequenzkanal) und ein zweites Sub-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Sub-Datenpakete 142 auch sowohl in der Zeit- als auch in der Frequenz verteilt von dem Datensender 100 zu dem Datenempfänger 110 übertragen werden. Die Verteilung der Mehrzahl von Sub-Datenpakete in der Zeit und in der Frequenz kann entsprechend einem Zeit- und Frequenzsprungmuster erfolgen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Sub-Datenpakete übertragen werden, wobei den Sendezeitpunkten (oder Sendezeitabständen) Sendefrequenzen (oder Sendefrequenzsprünge) zugeordnet sind.

Fig. 2 zeigt in einem Diagramm eine Belegung des Übertragungskanals bei der Übertragung einer Mehrzahl von Sub-Datenpaketen 142 entsprechend einem Zeit- und Frequenzsprungmuster. Dabei beschreibt die Ordinate die Frequenz und die Abszisse die Zeit.

Wie in Fig. 2 zu erkennen ist, kann das Datenpaket 120 beispielhaft auf n = 7 Sub-Datenpakete 142 aufgeteilt werden und entsprechend eines Zeit- und Frequenzsprungmusters verteilt in der Zeit und der Frequenz von dem Datensender 100 zu dem Datenempfänger 110 übertragen werden.

Wie in Fig. 2 weiter zu erkennen ist, kann auch eine Synchronisationssequenz 144 auf die Mehrzahl von Sub-Datenpakete 142 aufgeteilt werden, so dass die Mehrzahl von Sub-Datenpakete 142 neben Daten (Datensymbole in Fig. 2) 146 jeweils einen Teil der Synchronisationssequenz (Synchronisationssymbole in Fig. 2) 144 enthalten.

## 2. Wiederholte Aussendung von Daten unter Verwendung von zwei Sprungmustern

Der oben beschriebene und beispielsweise in Fig. 1 gezeigte Datensender 100 kann um einen Wiederholungsaussendungsmodus erweitert werden, in dem der Datensender 100 die Daten 120 unter Verwendung eines ersten Sprungmusters und wiederholt (d.h. nochmal) unter Verwendung eines zweiten Sprungmusters sendet. Der Datensender 100 kann dabei sowohl im Wiederholungsaussendungsmodus als auch in einem Einzelaussendungsmodus, d.h. wie zuvor beschrieben, betrieben werden. Natürlich kann der Datensender 100 auch in beiden Modi betrieben werden.

Genauso kann der oben beschriebene und beispielsweise in Fig. 1 gezeigte Datenempfänger 110 um einen Wiederholungsaussendungsmodus erweitert werden, in dem der Datenempfänger 110 die Daten 120 unter Verwendung eines ersten Sprungmusters und wiederholt (d.h. nochmal) unter Verwendung eines zweiten Sprungmusters empfängt. Der Datenempfänger 110 kann dabei sowohl im Wiederholungsaussendungsmodus als auch in einem Einzelaussendungsmodus, d.h. wie zuvor beschrieben, betrieben werden. Natürlich kann der Datenempfänger 110 auch in beiden Modi betrieben werden.

In der nachfolgenden Beschreibung wird primär auf den Wiederholungsaussendungsmodus eingegangen, wobei für den Einzelaussendungsmodus auf die obige Beschreibung verwiesen wird. Ferner sei darauf hingewiesen, dass die oben beschriebenen Aspekte des Einzelaussendungsmodus ebenfalls auf den Wiederholungsaussendungsmodus anwendbar sind.

Fig. 3 zeigt ein schematisches Blockschaltbild eines Systems mit einem Datensender 100 und einem Datenempfänger 110, gemäß einem Ausführungsbeispiel der vorliegenden Erfindung.

Der Datensender 100 ist ausgebildet, um Daten 120 in einem ersten Modus (=Wiederholungsaussendungsmodus) wiederholt unter Verwendung eines ersten Sprungmusters 140_1 und eines zweiten Sprungmusters 140_2 auszusenden. Ferner ist der Datensender 100 ausgebildet, um Daten 120 in einem zweiten Modus (=Einzelaussendungsmodus) einfach (d.h. einmal bzw. nicht wiederholt) unter Verwendung eines dritten Sprungmusters 142 auszusenden (vgl. Fig. 1), wobei die Sprungmuster des ersten Modus und des zweiten Modus unterschiedlich sind.

Der Datenempfänger 110 ist ausgebildet, um Daten 120 in einem ersten Modus wiederholt unter Verwendung eines ersten Sprungmusters 140_1 und eines zweiten Sprungmusters 140_2 zu empfangen. Ferner ist der Datenempfänger 110 ausgebildet, um Daten 120 in einem zweiten Modus einfach (d.h. einmal bzw. nicht wiederholt) unter Verwendung eines dritten Sprungmusters 142 zu empfangen (vgl. Fig. 1), wobei die Sprungmuster des ersten Modus und des zweiten Modus unterschiedlich sind.

Beispielsweise kann der Datenempfänger 110 ausgebildet sein, um eine wiederholte Übertragung von Daten anhand des ersten Sprungmusters 140_1 und/oder des zweiten Sprungmusters 140_2 zu erkennen, und um eine einfache Übertragung von Daten anhand des dritten Sprungmusters zu erkennen.

Bei Ausführungsbeispielen kann der Datenempfänger ausgebildet sein, um eines der zwei Sprungmuster (z.B. das erste Sprungmuster) in einem Empfangsdatenstrom zu detektieren, um die mit dem einem Sprungmuster übertragenen Daten zu empfangen, wobei der Datenempfänger ausgebildet sein kann, um das andere Sprungmuster (z.B. zweites Sprungmuster) in dem Empfangsdatenstrom unter Verwendung des bereits detektierten Sprungmusters (z.B. erstes Sprungmuster) zu ermitteln, um die mit dem anderen Sprungmuster (z.B. zweites Sprungmuster) übertragenen Daten zu empfangen.

Beispielsweise hat dies für den Datenempfänger den Vorteil, dass die Detektion und Synchronisation (z.B. Zeit- und Frequenzschätzung) nur einmal durchgeführt werden muss bzw. es ausreicht eines der beiden Sprungmuster zu detektieren. Die Detektion kann beispielsweise so designt werden, dass sie bis zu einem vorgegebenen Es/N0 (z.B. ca. -3dB) nahezu alle Sprungmuster (z.B. Telegramme) detektiert. Daher kann bei niedrigeren Es/N0 nicht garantiert werden, dass die Detektion bei beiden Aussendung anschlägt. Durch die Zeit- und Frequenzkohärenz zwischen den beiden Aussendungen (erstes Sprungmuster und zweites Sprungmuster) genügt es nur eine der beiden Aussendungen zu detektieren.

Beispielsweise kann der Datenempfänger 110 nach den Sprungmustern 140_1 und 140_2 suchen, wobei er mindestens eins der beiden Sprungmuster 140_1 und 140_2 finden sollte. Dann kann der Datenempfänger 110 dieses Sprungmuster dekodieren und ermitteln ob es fehlerfrei ist. Wenn es nicht fehlerfrei ist, dann kann der Datenempfänger 110 nach dem anderen Sprungmuster suchen, wobei dem Datenempfänger 110 nicht bekannt ist, ob das vorher gefundene Sprungmuster die Erst- oder Zweitaussendung (das erste Sprungmuster 140_1 oder zweite Sprungmusteer 140_2) war. Da dies schwieriger zu finden war, dürfte hier eine Einzeldekodierung nicht weiterhelfen. Insofern MRC (MRC = maximum ratio combining, dt. Maximalverhältniskombinierung): Der Datenempfänger 110 kann von den beiden Aussendungen die LLRs der Daten berechnen und diese aufaddieren (Gewichtung entsprechend den individuellen C/Is),

um dann durch den Decoder zu gehen. Hier im Vergleich zur Einzelaussendung erzielen.

Das erste Sprungmuster 140_1 und das zweite Sprungmuster 140_2 können aus einem ersten Satz von Sprungmustern ausgewählt werden, während das dritte Sprungmuster aus einem zweiten Satz von Sprungmustern ausgewählt werden kann. Der erste Satz von Sprungmustern und der zweite Satz von Sprungmustern können unterschiedlich sein.

Beispielsweise kann der Datensender 100 (oder der Datenempfänger 110) für die Übertragung von Daten in dem ersten Modus das erste Sprungmuster 142_1 und das zweite Sprungmuster 142_2 aus der ersten Klasse von Sprungmustern (z.B. aus den acht in Abschnitt 3.3 aufgeführten Sprungmustern) auswählen, während ein weiterer Datensender für die Übertragung von Daten in dem zweiten Modus ein Sprungmuster aus der zweiten Klasse von Sprungmustern (z.B. aus den acht in Abschnitt 3.2 aufgeführten Sprungmustern) auswählen kann. Da die erste Klasse von Sprungmustern und die zweite Klasse von Sprungmustern unterschiedlich sind, kann sichergestellt werden, dass selbst bei einer zeitgleichen oder zumindest zeitlich überlappenden Übertragung von Daten durch den Datensender und den weiteren Datensender eine Kollisionswahrscheinlichkeit so gering wie möglich gehalten werden kann.

Zum Aufbau einer Verbindung zwischen Datensender und Datenempfänger kann sowohl im ersten Modus das erste Sprungmuster 140_1 und das zweite Sprungmuster 140_2 also auch im zweiten Modus das dritte Sprungmuster aus einem dritten Satz von Sprungmustern ausgewählt werden. Der dritte Satz von Sprungmustern kann eine Untermenge des ersten Satzes von Sprungmustern oder des zweiten Satzes von Sprungmustern sein, oder sich von diesen unterscheiden.

Das erste Sprungmuster 140_1 und das zweite Sprungmuster 140_2 können in zumindest einem aus der Frequenz und der Zeit zueinander verschoben sein, so dass das erste Sprungmuster 142_0 und das zweite Sprungmuster 142_0 zumindest teilweise ineinander verschachtelt sind.

Beispielsweise können sowohl das erste Sprungmuster 140_1 als auch das zweite Sprungmuster 140_2 Sprünge 142 aufweisen, die in der Zeit und/oder Frequenz verteilt sind, so dass die Sprünge 142 eines Sprungmusters in der Zeit und/oder Frequenz voneinander beabstandet sind, wobei das erste Sprungmuster 140_1 und das zweite Sprungmuster 140_2 in der Zeit und/oder Frequenz so zueinander verschoben sein können, dass zumindest ein Teil der Sprünge 142 des zweiten Sprungmusters 140_2 zwischen zumindest einem Teil der Sprünge 142 des ersten Sprungmusters 140_1 angeordnet sind. Zum Beispiel können die Sprünge 142 des ersten Sprungmusters 140_1 und die Sprünge 142 des zweiten Sprungmusters 140_1 in der Zeit abwechselnd angeordnet sein.

Das erste Sprungmuster 140_1 und das zweite Sprungmuster 140_2 können unterschiedlich sein. Sprünge 142 des ersten Sprungmusters 140_1 und Sprünge 142 des zweiten Sprungmusters 140_2 sind unterschiedlich in der Zeit und/oder Frequenz verteilt. Zum Beispiel können zwei aufeinander folgende Sprünge (z.B. erster Sprung und zweiter Sprung) des ersten Sprungmusters 140_1 einen anderen Zeitabstand und/oder Frequenzabstand aufweisen als zwei aufeinander folgende Sprünge (z.B. erster Sprung und zweiter Sprung) des zweiten Sprungmusters 140_2.

Das zweite Sprungmuster 140_2 kann eine in der Frequenz und/oder Zeit verschobene Version des ersten Sprungmusters 140_1 sein. Beispielsweise können das erste Sprungmuster 140_1 und das zweite Sprungmuster 140_2 gleich sein und nur in der Zeit und/oder Frequenz verschoben sein. Zum Beispiel können Sprünge 142 des ersten Sprungmusters 140_1 und Sprünge 142 des zweiten Sprungmusters 140_2 den gleichen relativen Zeitabstand und Frequenzabstand aufweisen.

Der Datensender 100 kann ausgebildet sein, um das erste Sprungmuster 140_1 und das zweite Sprungmuster 140_2 in nur teilweise überlappenden oder unterschiedlichen Frequenzbändern auszusenden.

Ferner kann der Datensender 100 ausgebildet sein, um das erste Sprungmuster 140_1 oder das zweite Sprungmuster 140_2 zufällig in einem von zumindest zwei unterschiedlichen Frequenzbändern zu senden, und um das andere Sprungmuster in dem anderen Frequenzband zu senden.

Der Datensender 100 kann ausgebildet sein, um einen Zeitoffset und/oder einen Frequenzoffset zwischen dem ersten Sprungmuster 140_1 und dem zweiten Sprungmuster 140_2 in Abhängigkeit von einem Betriebsparameter des Datensenders 100 zu ermitteln. In diesem Fall kann dem Datenempfänger 110 der Betriebsparameter des Datensender 100 entweder bekannt sein oder aber der Datenempfänger 110 ist ausgebildet, um den Betriebsparameter zu ermitteln, z.B. zu schätzen oder mittels eines Hypothesentests zu berechnen. Ferner kann der Datenempfänger 110 ausgebildet sein, um alle möglichen Zeitoffsets durchzuprobieren, bis der korrekte Zeitoffset gefunden ist. Ferner kann der Datenempfänger 110 ausgebildet sein, um alle möglichen Frequenzoffsets durchzuprobieren, bis der korrekte Frequenzoffset gefunden ist.

Beispielsweise kann der Betriebsparameter des Datensenders 100 ein immanenter Parameter des Datensenders selbst sein, wie z.B. eine Adressierungsinformation, eine Identifizierungsinformation, eine Quarztoleranz, ein Frequenzversatz oder eine verfügbare Sendeenergie ist.

Beispielsweise kann der Betriebsparameter des Datensenders 100 ein dem Datensender 100 zugewiesener Parameter sein, wie z.B. ein zugewiesener Frequenzoffset, ein zugewiesener Zeitoffset, eine Funkzelle, eine geografische Position, eine Systemzeit oder eine Priorität des Datensenders oder der Daten ist.

Beispielsweise kann der Betriebsparameter des Datensenders 100 zumindest ein Teil von Nutzerdaten oder Fehlerschutzdaten sein.

Beispielsweise kann der Betriebsparameter des Datensenders 100 ein zufälliger Frequenzoffset oder ein zufälliger Zeitoffset sein.

Fig. 4 zeigt ein Flussdiagramm eines Verfahrens 160 zum Senden von Daten, gemäß einem Ausführungsbeispiel. Das Verfahren 160 umfasst einen Schritt 162 des Sendens von Daten in einem ersten Modus wiederholt unter Verwendung eines ersten Sprungmusters und eines zweiten Sprungmusters. Ferner umfasst das Verfahren 160 einen Schritt 164 des Sendens von Daten in einem zweiten Modus einmal unter Verwendung eines dritten Sprungmusters, wobei die Sprungmuster des ersten Modus und des zweiten Modus unterschiedlich sind.

Fig. 5 zeigt ein Flussdiagramm eines Verfahrens 170 zum Empfangen von Daten, gemäß einem Ausführungsbeispiel. Das Verfahren 170 umfasst einen Schritt 172 des Empfangens von Daten in einem ersten Modus wiederholt unter Verwendung eines ersten Sprungmusters und eines zweiten Sprungmusters. Ferner umfasst das Verfahren 170 einen Schritt 174 des Empfangens von Daten in einem zweiten Modus einmal unter Verwendung eines dritten Sprungmusters, wobei die Sprungmuster des ersten Modus und des zweiten Modus unterschiedlich sind.

## 3. Erzeugung von Sprungmustern

Im Folgenden werden Ausführungsbeispiele eines Verfahrens zum Erzeugen von Sprungmustern näher beschrieben. Im Detail zeigt Fig. 6 dabei ein Verfahren zum Erzeugen von Sprungmustern für eine einfache (d.h. einmal) Übertagung von Daten mittels eines Sprungmusters, während Fig. 7 ein Verfahren zum Erzeugen von Sprungmustern für eine wiederholte Übertagung von Daten mittels zwei Sprungmustern zeigt.

Fig. 6 zeigt ein Flussdiagramm eines Verfahrens 200 zum Erzeugen eines Satzes von Sprungmustern, gemäß einem Ausführungsbeispiel. Das Verfahren 200 umfasst einen Schritt 202 des zufälligen Erzeugens einer Mehrzahl von Sprungmustern, wobei die Sprungmuster zumindest zwei Sprünge aufweisen, die in der Frequenz und Zeit verteilt sind. Das Verfahren 200 umfasst ferner einen Schritt 204 des Auswählens der Sprungmuster aus der Mehrzahl von Sprungmustern, deren Autokorrelationsfunktionen vorgegebene Autokorrelationseigenschaften aufweisen, um Sprungmuster mit vorgegebenen Autokorrelationseigenschaften zu erhalten.

Bei Ausführungsbeispielen können diejenigen Sprungmuster die vorgegebenen Autokorrelationseigenschaften erfüllen, deren Autokorrelationsfunktions-Nebenmaxima einen vorgegebenen minimalen Amplitudenschwellwert nicht überschreiten. Der Amplitudenschwellwert kann beispielsweise gleich einer Anzahl von Sprüngen eines Clusters einer Mehrzahl von Clustern sein, in die das Sprungmuster unterteilt ist. Ein Cluster kann beispielsweise eine Anzahl von Sprüngen sein, die den gleichen Zeit- und/oder Frequenzabstand zueinander aufweisen.

Bei Ausführungsbeispielen können diejenigen Sprungmuster die vorgegebenen Autokorrelationseigenschaften erfüllen, deren Teilsumme über eine vorgegebene Anzahl von größten Amplitudenwerten der jeweiligen Autokorrelationsfunktion gebildet, kleiner als ein vorgegebener Schwellwert ist. Der Schwellwert kann dabei so gewählt werden, dass zumindest zwei Sprungmuster (oder eine vorgegebene Anzahl von Sprungmustern) die vorgegebenen Autokorrelationseigenschaften erfüllen.

Wie in Fig. 6 zu erkennen ist, kann das Verfahren 200 ferner einen Schritt 206 des Berechnens von Kreuzkorrelationsfunktionen zwischen den Sprungmustern mit vorgegebenen Autokorrelationseigenschaften aufweisen. Ferner kann das Verfahren 200 einen Schritt 208 des Auswählens der Sprungmuster aus den Sprungmustern mit vorgegebenen Autokorrelationseigenschaften, deren Kreuzkorrelationsfunktionen vorgegebene Kreuzkorrelationseigenschaften aufweisen, um Sprungmuster mit vorgegebenen Autokorrelationseigenschaften und vorgegebenen Kreuzkorrelationseigenschaften zu erhalten.

Bei Ausführungsbeispielen können diejenigen Sprungmuster die vorgegebenen Kreuzkorrelationseigenschaften erfüllen, deren Teilsummen über eine vorgegebene Anzahl von größten Amplitudenwerten der jeweiligen Kreuzkorrelationsfunktion gebildet, am kleinsten sind.

Fig. 7 zeigt ein Flussdiagramm eines Verfahrens 210 zum Erzeugen eines ersten Satzes von Sprungmustern und eines zweiten Satzes von Sprungmustern. Das Verfahren 210 umfasst einen Schritt 212 des zufälligen Erzeugens einer Mehrzahl von Sprungmustern für den ersten Satz von Sprungmustern und einer Mehrzahl von Sprungmustern für den zweiten Satz von Sprungmustern, wobei die Sprungmuster zumindest zwei Sprünge aufweisen, die in der Frequenz und Zeit verteilt sind, wobei die Sprungmuster für den ersten Satz von Sprungmustern und die Sprungmuster für den zweiten Satz von Sprungmustern unterschiedlich sind. Ferner umfasst das Verfahren 210 einen Schritt 214 des Auswählens der Sprungmuster aus der Mehrzahl von Sprungmustern für den ersten Satz von Sprungmustern, deren Autokorrelationsfunktionen vorgegebene Autokorrelationseigenschaften aufweisen, um für den ersten Satz von Sprungmustern Sprungmuster mit vorgegebenen Autokorrelationseigenschaften zu erhalten, und Auswählen der Sprungmuster aus der Mehrzahl von Sprungmustern für den zweiten Satz von Sprungmustern, deren Autokorrelationsfunktionen vorgegebene Autokorrelationseigenschaften aufweisen, um für den zweiten Satz von Sprungmustern Sprungmuster mit vorgegebenen Autokorrelationseigenschaften zu erhalten.

Bei Ausführungsbeispielen kann ein zeitlicher Abstand der Sprünge der Sprungmuster für den zweiten Satz von Sprungmustern mindestens so groß sein wie eine zeitliche Länge eines der Sprünge der Sprungmuster für den ersten Satz von Sprungmustern.

Beispielsweise kann, um möglichst viele Wiederholungen ineinander zu verschachteln können, der kürzeste zeitliche Abstand zwischen zwei Sub-Datenpaketen (oder Bursts) maximiert werden. Dies wäre (T_Frame - N*T_Burst)/(N-1), also eine äquidistante zeitliche Verteilung der Bursts (innerhalb der Cluster und zwischen den Clustern). Da diese Regularität natürlich für den Design-Prozess nicht optimal ist, kann ein leichter Jitter eingefügt werden.

Bei Ausführungsbeispielen können diejenigen Sprungmuster die vorgegebenen Autokorrelationseigenschaften erfüllen, deren Autokorrelationsfunktions-Nebenmaxima einen vorgegebenen minimalen Amplitudenschwellwert nicht überschreiten. Der Amplitudenschwellwert kann beispielsweise gleich einer Anzahl von Sprüngen eines Clusters einer Mehrzahl von Clustern sein, in die das Sprungmuster unterteilt ist. Ein Cluster kann beispielsweise eine Anzahl von Sprüngen sein, die den gleichen Zeit- und/oder Frequenzabstand zueinander aufweisen.

Bei Ausführungsbeispielen können diejenigen Sprungmuster die vorgegebenen Autokorrelationseigenschaften erfüllen, deren Teilsumme über eine vorgegebene Anzahl von größten Amplitudenwerten der jeweiligen Autokorrelationsfunktion gebildet, kleiner als ein vorgegebener Schwellwert ist. Der Schwellwert kann dabei so gewählt werden, dass zumindest zwei Sprungmuster (oder eine vorgegebene Anzahl von Sprungmustern) die vorgegebenen Autokorrelationseigenschaften erfüllen.

Wie in Fig. 7 zu erkennen ist, kann das Verfahren 210 ferner einen Schritt 216 des Berechnens von Kreuzkorrelationsfunktionen zwischen den Sprungmustern mit vorgegebenen Autokorrelationseigenschaften für den ersten Satz von Sprungmustern und von Kreuzkorrelationsfunktionen zwischen den Sprungmustern mit vorgegebenen Autokorrelationseigenschaften für den zweiten Satz von Sprungmustern aufweisen. Ferner kann das Verfahren einen Schritt 218 des Auswählens der Sprungmuster aus den Sprungmustern mit vorgegebenen Autokorrelationseigenschaften für den ersten Satz von Sprungmustern, deren Kreuzkorrelationsfunktionen vorgegebene Kreuzkorrelationseigenschaften aufweisen, um Sprungmuster mit vorgegebenen Autokorrelationseigenschaften und vorgegebenen Kreuzkorrelationseigenschaften für den ersten Satz von Sprungmustern zu erhalten, und der Sprungmuster aus den Sprungmustern mit vorgegebenen Autokorrelationseigenschaften für den zweiten Satz von Sprungmustern, deren Kreuzkorrelationsfunktionen vorgegebene Kreuzkorrelationseigenschaften aufweisen, um Sprungmuster mit vorgegebenen Autokorrelationseigenschaften und vorgegebenen Kreuzkorrelationseigenschaften für den zweiten Satz von Sprungmustern zu erhalten.

Bei Ausführungsbeispielen können diejenigen Sprungmuster die vorgegebenen Kreuzkorrelationseigenschaften erfüllen, deren Teilsummen über eine vorgegebene Anzahl von größten Amplitudenwerten der jeweiligen Kreuzkorrelationsfunktion gebildet, am kleinsten sind.

## 3.1 Erzeugung von Sprungmustern für TSMA

Sprungmuster, die mit dem in Fig. 6 oder Fig. 7 gezeigtem Verfahren erzeugt sind, können beispielsweise in einem System zur unidirektionalen oder bidirektionalen Datenübertragung von vielen Sensorknoten zu einer Basisstation unter Verwendung des sogenannten "Telegram Splitting Multiple Access (TSMA)" Zugriffsverfahrens zum Einsatz kommen.

Bei TSMA wird dabei die Übertragung einer Nachricht in eine Vielzahl kurzer Bursts (= Sprünge, oder Sub-Datenpakete) 142 unterteilt, zwischen denen sich jeweils unterschiedlich lange übertragungsfreie Zeitintervalle befinden. Die Bursts 142 können dabei nach einem echten oder einem Pseudo-Zufallsprinzip sowohl über die Zeit als auch über die zur Verfügung stehenden Frequenzen verteilt werden.

Dieser Ansatz des Telegram-Splittings liefert dabei eine besonders große Robustheit gegenüber Störungen anderer Sensorknoten, egal ob sie nun aus dem eigenen oder aus fremden Systemen kommen. Die Störrobustheit bei den eigenen Sensorknoten wird insbesondere durch das möglichst gleichmäßige Verteilen der verschiedenen Nutzersignal-Bursts sowohl über den Zeit- wie auch den Frequenzbereich erzielt.

Diese zufallsähnliche Verteilung kann durch verschiedene Maßnahmen erreicht werden, wie z.B. (1) durch unvermeidbare Toleranzabweichungen des Kristallreferenzoszillators bzgl. der Frequenz, (2) durch den zufälligen asynchronen Kanalzugriff erfolgt eine beliebige Granularität im Zeitbereich, und (3) durch unterschiedliche Burst-Anordnung der verschiedenen Sensorknoten zu verschiedenen Sprungmustern.

Um eine weitere Steigerung der Ausfallwahrscheinlichkeit in der Datenübertragung zu erzielen, kann es beim Senden der Nutzerdaten nun zum Einsatz von Zeit- und Frequenzdiversität kommen. Die Sub-Datenpakete (Bursts) können mindestens zweimal zeitlich versetzt in z.B. möglichst unterschiedlichen Sprungmustern und in z.B. möglichst verschiedenen Frequenzbändern gesendet werden. Da für die Übertragung des Signals nur ein Sender im Sensorknoten zur Verfügung steht, resultieren für die verschachtelte Wiederholung bestimmte Einschränkungen hinsichtlich der zeitlichen Burst-Anordnung im Sprungmuster. Die Art und Weise der Verschachtelung von Erst- und Zweitaussendung im Wiederholungsfall wird an späterer Stelle noch genauer erläutert.

Die diversitär redundanten Signale können empfangsseitig beispielsweise in allen möglichen Formen, wie Maximal-Ratio Combining (MRC), Equal-Gain Combining, Scanning/Switching Combining oder Selection Combining zusammenführt werden. Beim Design solcher diversitär redundanter Sprungmuster gilt es aber auch zu beachten, dass der Kombinierer (engl. combiner) möglichst einfach erkennt, dass eine Wiederholung und keine Erstaussendung gesendet wurde.

Der Entwurf und die Optimierung derartiger Sprungmuster (engl. hopping pattern) wird im Folgenden detailliert erläutert.

Bei dem Übertragungsverfahren TSMA sind die einzelnen Bursts eines Datenpakets 120 (im Folgenden auch als Frame bezeichnet), wie in Fig. 8a dargestellt, sowohl über die Zeit wie auch über die Frequenzen verteilt.

Im Detail zeigt Fig. 8a in einem Diagramm einen Aufbau eines Frames 120 mit einem TSMA Sprungmuster 140. Dabei beschreibt die Ordinate die Frequenz bzw. Kanäle (Frequenzkanäle) und die Abszisse die Zeit.

Die Startzeit $T_0$ eines Frames 120 mit der Gesamtdauer $T_{Frame}$ wird vom Sensorknoten 100 aufgrund der asynchronen Übertragung zufällig ausgewählt. Die Zeitdauer $T_{Burst}$ eines Bursts 142 kann variieren, ist im Folgenden ohne Einschränkung der Allgemeingültigkeit als konstant angenommen, wohingegen die Zeitintervalle $t_{n\,,\,(n+1)}$, welche jeweils den Abstand zweier benachbarter Burst-Mitten (hier der beiden Bursts mit den Indizes $n$ und $n$+1) kennzeichnen, jeweils Zufallsgrößen sind, die alle innerhalb eines vorgebbaren Bereichs $T_{A_min} \leq t_{n,(n+1)} \leq T_{A_max}$ für $n \in \{1,2,...,N-1\}$ liegen. $N$ ist die Anzahl der Bursts 142 innerhalb eines Frames 120. Für die zur Übertragung verwendeten Frequenzen wird angenommen, dass diese in Form diskreter Frequenzkanäle vorliegen, welche in einem vorgegebenen Frequenzkanalraster liegen. Die Frequenzseparierung $f_{n,(n+1)}$ zwischen 2 Bursts 142 ist ein Vielfaches des in TSMA verwendeten Trägerabstandes $B_C$ und damit unabhängig von der verwendeten Symbolrate $S_R$. ($S_R \leq B_C$). Die relative Startfrequenz eines Frames sei mit fo bezeichnet.

Die Anzahl der verfügbaren Frequenzkanäle sei mit $L$ vorgegeben und es gelte $N \leq L$. Insofern sind üblicherweise mehr oder exakt so viele Frequenzkanäle vorhanden, wie von den $N$ Bursts 142 benötigt werden und innerhalb eines Frames 120 befindet sich damit jeder der $N$ Bursts 142 in einem anderen Frequenzkanal. Die von den $N$ Bursts genutzten Frequenzen müssen nicht zusammenhängend sein, sondern können sich innerhalb der $L$ vorhanden Frequenzen beliebig verteilen.

Die Anordnung der $N$ Bursts 142 in Zeit und Frequenz wird im Folgenden als TSMA-Muster (TSMA-Sprungmuster) bezeichnet. Ist dieses Sprungmuster dem Empfänger bekannt, dann kann dieser sich anhand der in manchen oder jedem Burst 142 befindlichen Pilot-Sequenzen darauf synchronisieren und anschließend die Empfangsdaten dekodieren.

Bezüglich des Designs einer oder mehrerer TSMA-Muster können nachfolgend aufgeführte systembedingte Annahmen und Einschränkungen beachtet werden.

(1) Die Frequenzabweichung des Oszillators von seiner Nominalfrequenz kann berücksichtigt werden. Ja nach den Systemparametern und Hardwareanforderungen kann die Frequenzabweichung durchaus ein Mehrfaches des Trägerabstandes $B_c$ sein. Da dieser Frequenzoffset sowohl positive als auch negative Werte annehmen kann, kann entsprechend an beiden Rändern des insgesamt zur Nutzung betrachteten Frequenzbereichs ein Sicherheitsstreifen 156 von S Frequenzkanal vorgesehen werden, in denen kein Burst liegt (siehe auch Fig. 9). Insofern reduziert sich der Freiheitsgrad für die einzelnen Bursts des Sprungmusters auf $(L\text{-}2\cdot S)$ Frequenzen, wobei immer noch $N \leq (L\text{-}2\cdot S)$ gilt. (2) Aufgrund der zeitlich asynchronen Übertragung ist dem Empfänger 110 nicht bekannt, wann ein Sender 100 sendet und auch welcher Sender mit welchem Hopping-Pattern sendet ist dem Empfänger unbekannt. Insofern wäre es für die Detektion eines Signales mit einem erheblichen Mehraufwand verbunden, wenn die Muster-Anordnung, also die Gruppierung der $N$ Bursts 142 innerhalb des Zeitbereichs $T_{Frame}$ und über die $(L\text{-}2\cdot S)$ Frequenzen völlig zufällig wäre. Insofern können beispielsweise $C$ aufeinanderfolgende Bursts 142 zu einem sogenannten Cluster 148 zusammengefasst werden, die bezüglich ihrer Zeit- und Frequenzabstände relativ zueinander z.B. identisch sind. Ein Sprungmuster 140 besteht damit aus $N/C$ Cluster 148 mit jeweils $C$ Bursts 142. $C$ kann dabei vorteilhafterweise so gewählt werden, dass es ganzzahliger Teiler von $N$ ist. Es gilt also

$$N/C \mid N \;\Leftrightarrow\; \exists\, k \in \mathbb{Z} \;:\; k \cdot N/C = N.$$

Details werden in Fig. 9 gezeigt besprochen. Es sei aber schon hier erwähnt, dass ein Sprungmuster-Aufbau, bestehend aus $N/C$ Clustern 148, die in ihrer inneren Struktur völlig identisch sind, gewisse Nachteile bezüglich ihrer Korrelationseigenschaften aufweisen (Auftreten von stark ausgeprägten Nebenmaximas mit jeweils einer Amplitude von $N/C$ in der 2D-Autokorrelationfunktion. Alle ersten Bursts 142 in den $N/C$ Clustern haben frequenzversetzt (und eventuell auch zeitversetzt) identisches Wiederholmuster. Entsprechend kommt es vor, dass sich zeitgleich $N/C$ Burst 142 gegenseitig stören. Dieser Nachteil kann aber in Hinblick auf die dadurch erzielbaren Vereinfachungen im Empfänger in Kauf genommen werden. Eine Clustergröße von C=1 (und somit kein Cluster) ist immer am vorteilhaftesten bezüglich der Korrelationseigenschaften. (3) Aufgrund des Telegram Splittings ist die Zeitdauer $T_{Burst}$ eines Bursts 142 relativ kurz im Verhältnis zur Übertragungszeit $T_{Frame}$ des gesamten Frames 120. Lässt man nach dem Senden des ersten Bursts 142 eine gewisse Mindestzeit $T_{A_min}$ verstreichen, kann dies bzgl. des Stromverbrauchs der batteriebetriebenen Sensorknoten gewisse Vorteile aufweisen (Erholungszeit der Batterie nach vergleichsweise energieintensivem Sendevorgang). Dieser Mindestabstand $T_{A_min}$ sollte als Designvorgabe auch möglichst innerhalb der Cluster sowie zwischen den Clustern eingehalten werden.

Die oben genannten Punkte 1) bis 3) können als Ausgangspunkt für das Design von Sprungmustern für einfach (= einmal oder nicht wiederholt) ausgesendete Daten (Nutzerdaten) verwendet werden.

Um die Ausfallwahrscheinlichkeit in der Datenübertragung weiter zu steigern, kann es beim Senden der Nutzerdaten nun optional zum Einsatz von Zeit- und Frequenzdiversität in Form von verschachtelten Wiederholungen kommen. Hierbei können die Bursts (=Sprünge oder Sub-Datenpakete) 142 der beiden zu wiederholenden Sprungmuster beispielsweise frameweise wie in Fig. 8b angedeutet zeitlich ineinander verwoben werden. Damit die für beide Wiederholungen benötigte Sendezeit möglichst gering bleibt, bietet sich eine alternierende Verschachtelung an, wo sich die Bursts von Erst- und Zweitaussendung abwechseln.

Welche weiteren Anforderungen für die neu zu entwerfenden Sprungmuster noch existieren, wird in den nächsten Punkten beschreiben. Die neuen Sprungmuster für wiederholt ausgesendete Daten können dabei optional mit den Sprungmustern für einfach ausgesendete Daten zusammenpassen, d.h. eine möglichst geringe Kreuzkorrelation haben.
(4) Auswahl des Frequenzsprungmusters. Die TSMA Sprungmuster sollten a) gegenüber externen Störungen aus anderen Systemen (hier ist weder die Bandbreite noch die Zeitdauer der Störung bekannt) robust sein, ebenso wie b) gegenüber Störungen aus dem eigenen System. Optional kann es c) dem Empfänger möglichst einfach gemacht werden, zwischen Sendungen mit und ohne Wiederholung zu unterscheiden, speziell bei Verwendung von Maximal-Ratio Combining. Die Aspekte a) und c) sind unabhängig vom Entwurfsprozess und können vorab festgelegt werden. Eine verbesserte oder sogar maximale Störfestigkeit gegenüber externen Störungen kann beispielsweise dadurch erreicht werden, dass die beiden zu wiederholenden Frames in zwei verschiedene Frequenzbänder (mit ihren jeweils $L$ Frequenzkanälen) gelegt werden. Je größer der Frequenzabstand ist (siehe Fig. 8b), desto geringer ist die Wahrscheinlichkeit, dass ein externer Störer beide Frames gleichzeitig stören kann. Im Detail zeigt Fig. 8b in einem Diagramm eine Belegung von zwei Frequenzkanälen 150_1 und 150_2 bei der wiederholten Übertragung von Daten mittels eines ersten Sprungmusters 140_1 und eines zweiten Sprungmusters 140_2. Dabei beschreibt die Ordinate die Frequenz und die Abszisse die Zeit. Mit anderen Worten, Fig. 8b zeigt eine verschachtelte Frameübertragung mit Wiederholung bei Verwendung von zwei verschiedenen Frequenzbändern.

Der Empfänger (Datenempfänger) kann beispielsweise anhand des Sprungmusters zwischen Aussendungen mit und ohne Wiederholung unterscheiden, wenn für beide Sendeformen unterschiedliche Sprungmuster verwendet werden. Ohne Einschränkung der Allgemeinheit können für Übertragungen ohne Wiederholung beispielsweise die in Abschnitt 3.2 gezeigten Sprungmuster verwendet werden und für Übertragungen mit Wiederholung können beispielsweise die in Abschnitt 3.3 gezeigten Sprungmuster verwendet werden. Prinzipiell kann bei der ersten Übertragung im Wiederholungs-Modus ein anderes (neues) Sprungmuster verwendet werden wie bei der zweiten Übertragung. Es hat sich aber gezeigt, dass mit entsprechenden, weiter unten beschriebenen Maßnahmen die Verwendung eines einzigen Sprungmusters für alle Aussendungen im Wiederholungs-Modus ausreicht. Zudem erleichtert auch diese Maßnahme dem Empfänger das gemeinsame Erkennen der einzelnen Bursts bei gleichen Pattern im Wiederholungs-Modus.

Wie bei der bei Verwendung von gleichen Sprungmustern bei der Erst- und Zweitaussendung im Wiederholungsfall eine verbesserte oder sogar maximale Robustheit gegenüber Störungen aus dem eigenen System erreicht werden kann (Punkt (4b)), wird im Folgenden erläutert. Da gemäß einem Ausführungsbeispiel für die Einzelaussendung jeweils andere Sprungmuster verwenden werden (z.B. die Sprungmuster aus Abschnitt 3.2) als für die Erst- und Zweitaussendung im Wiederholungsfall verwendet werden (z.B. die Sprungmuster aus Abschnitt 3.2), ist eine Vollstörung mit den Sprungmustern im Wiederholungsfall (die Überlappung aller N Bursts eines Frames) nicht möglich. In einem späteren Beispiel wird anhand der Kreuzkorrelierten gezeigt, dass sich im schlimmsten Fall maximal C Bursts (eines Clusters) treffen können. Weisen die für den für den Wiederholungsfall zu verwendenden Sprungmustern zusätzlich noch (etwas) andere Zeitabstände zwischen den Bursts im Cluster auf, so kann die mittlere Trefferanzahl nochmals reduziert werden. Im Folgenden wird die Störfestigkeit von Sendern betrachtet, die im Wiederholmodus jeweils das gleiche Sprungmuster verwenden. Würden zwei Sender mit identischen Sprungmustern zum gleichen Zeitpunkt $T_0$ (siehe Fig. 8b) im gleichen Frequenzband starten, dann käme es ohne irgendeine Gegenmaßnahmen zu einer vollständigen Überlagerung aller $2N$ Bursts in beiden Frames des Wiederholmodus. Eine derartige Situation kann durch Parametervariation fast gänzlich verhindert werden. Beispielsweise kann eine Vielfalt durch die Einführung eines variablen, mehrstufigen Zeitoffsets $T_W$ (siehe Bild 2), oder dem zufälligen Starten des ersten Bursts in einem der beiden Frequenzbändern A oder B erreicht werden. Zusätzlich kann das TSMA Muster noch mit einem beispielsweise zufälligen positiven oder negativen Frequenzoffset (z.B. in Vielfachen des Trägerabstandes $B_C$) beaufschlagt werden. Nach den Vorgaben in [ETSI TS 103 357 V0.0.5 (2017-03), "ERM-Short Range Devices - Low Throughput Networks; Protocols for Interfaces A, B and C ", Kapitel 7 "Telegram splitting ultra narrow band (TS-UNB) family, März 2017] würden sich bei zusätzlicher Vorgabe von acht verschiedenen Wiederholungs-Sprungmustern eine Restwahrscheinlichkeit von 0,2% ergeben, dass sich bei zufällig gleichem $T_0$ zwei Sprungmuster vollständig auslöschen würden. Ein zufälliges Zusammentreffen der Aussendungen zweier Datensender bei $T_0$ hängt vom Duty-Cycle und der Burstdauer ab und liegt üblicherweise ebenfalls schon im niedrigen Promillebereich.

Im Folgenden werden Einschränkungen im Zeitbereichsverhalten beschrieben. Als Zeiteinschränkungen wurden unter Punkt 2) die Unterteilung des Frames in *N/C* Cluster mit jeweils *C* Bursts eingeführt, wobei die einzelnen Bursts der Cluster immer gleiche zeitliche Abstände zu ihren benachbarten Bursts aufweisen. Und in Punkt 3) wurde wegen der Stromökonomie noch ein Mindestzeit $T_{A_min}$ zwischen den Bursts eingeführt, die nicht unterschritten werden sollte. Generell kann festgehalten werden, dass je kleiner das für die *N* Bursts zur Verfügung stehende Frequenzband mit seinen ($L$-2·$S$) möglichen belegbaren Frequenzen ist, umso wichtiger ist das Pseudo-Zufallsprinzip der Zeitintervalle $t_{n,(n+1)}$ zwischen den Clustern. Inwieweit dieses Zufallsprinzip aufgrund des in Punkt 4) geforderten variablen, mehrstufigen Zeitoffsets $T_W$ (siehe Fig. 8b) für die Wiederholungs-Sprungmuster aufrechterhalten werden kann, muss geklärt werden. Dass das gleiche Sprungmuster im Wiederholungsfall verwendet wird ist in Bezug auf das Pseudo-Zufallsprinzip auf jeden Fall als positiv anzusehen.

Unter Berücksichtigung der oben aufgeführten Einschränkungen ergibt sich der in Fig. 9 dargestellte Aufbau eines TSMA-Musters 142.

Im Detail zeigt Fig. 9 in einem Diagramm eine schematische Ansicht eines Aufbaus eines TSMA-Sprungmusters 142. Dabei beschreibt die Ordinate die Frequenz in Frequenzkanälen und die Abszisse die Zeit. Mit anderen Worten, Fig. 9 zeigt eine Struktur des TSMA-Sprungmusters 142 mit Cluster-Anordnung und Frequenzbelegung.

Zur besseren Verständlichkeit seien in Fig. 9 die Werte soweit nötig und rein beispielhaft mit konkreten Zahlen unterlegt: $L = 44$, $S = 4$, $N = 24$, $C = 3$. Jeweils $S=4$ Frequenzbänder sind aufgrund der Frequenzabweichung des Oszillators von seiner Nominalfrequenz für die BurstBelegung gesperrt, wodurch noch 36 Frequenzbänder für die 24 Bursts, bzw. die 8 Cluster verbleiben.

Es ergeben sich die im Folgenden beschriebenen Freiheitsgrade bezüglich der Frequenzkanalbelegung. Da die 3 Bursts in den 8 Cluster relativ zueinander jeweils einen gleichen Frequenzabstand haben können, können mindestens 8 weitere Frequenzbänder reserviert werden, womit maximal ein Hub von 28 Frequenzbändern für die Basiszuordnung der 3 Bursts übrigbleibt. Beispielsweise kann eine beliebige relative Zuordnung mit 3 verschiedenen Frequenzbändern erfolgen. Ein möglichst großer Frequenzhub bei benachbarten Bursts wie es beispielsweise bei den Basiszuordnungen (1,28,14) oder (1,24,12) der Fall ist, erweist sich in Bezug auf die späteren Optimierungen als vorteilhaft. Auch die Zuordnung der einzelnen Cluster zueinander kann nach dem Zufallsprinzip erfolgen. Beispielsweise kann bei den Basiszuordnungen (1,28,14) die Reihenfolge der Zahlen {1,2,3,4,5,6,7,8} beliebig miteinander permutiert werden (Matlab-Befehl: randperm(8)) und diese 8 verschiedenen Werte können jeweils mit der Basiszuordnung addiert werden, um die Frequenzzuordnung der Bursts in den 8 Clustern zu erhalten. Bei den Basiszuordnungen (1,24,12) ist sogar eine Permutation von 12 Startwerten (Matlab-Befehl: randperm(12)) möglich und die ersten 8 Werte können erneut mit der entsprechenden Basiszuordnung (1,24,12) addiert werden. Sofern zwei Gruppen von Sprungmustern zu entwerfen sind, beispielsweise zwei Gruppen von 8 Sprungmustern mit und ohne Wiederholung, dann empfiehlt es sich zwei Basisanordnungen mit unterschiedlichem Frequenzhub zu nehmen. Dann können zwischen den Gruppen keine ganzen Cluster kollidieren.

Es ergeben sich die im Folgenden beschriebene Freiheitsgrade bezüglich der Zeitintervalle. Hier gilt es sowohl die 2 Zeitintervalle zwischen den 3 Bursts der Cluster festzulegen, wie auch die 7 Zeitabstände zwischen den 8 Clustern. Eine gewisse Mindestzeit $T_{A_min}$ soll dabei nicht unterschritten werden. Eine obere Zeitschranke $T_{A_max}$ ergibt sich durch die Vorgabe der Framedauer $T_{Frame}$. Die Bestimmung der Zufalls-Zeitintervalle kann ebenfalls durch auswürfeln erfolgen (Matlab-Befehl: $\Delta T = T_{A_min} + (T_{A_max} - T_{A_min}) \cdot rand(7,1)$). Auch hier empfiehlt es sich unterschiedliche Burst-Zeitabstände in den Clustern zu verwenden, falls ein Entwurf von zwei unterschiedlichen Sprungmuster-Gruppen geplant ist. Bei den Zeitabständen zwischen den Clustern kann bei den Wiederholungs-Sprungmustern auch noch überprüft werden inwieweit die Verschiebung durch den mehrstufige Zeitoffset $T_W$ zu keinen Burstüberlappungen führt und inwieweit auch noch $T_{A_min}$ zwischen allen verschachtelten Bursts eingehalten wird. Ist dies nicht der Fall, so kann die Zeitskalierung erneut durchgeführt werden. Es sollte auch noch erwähnt werden, dass sich bei obigem Matlab-Befehl mit Gleichsetzung von $T_{A_max} = T_{A_min}$ auch äquidistante Zeitabstände $\Delta T$ erzielen lassen.

Beim "Telegram Splitting Multiple Access (TSMA)" Zugriffsverfahren wird die Nachricht entsprechend dem Sprungmuster 140 sowohl in Zeit- wie auch in Frequenzrichtung in viele kleine Bursts 142 zerlegt. Durch die asynchrone Übertragung und die unterschiedlichen Frequenzablagen der einzelnen Sensorknoten 100 werden die Bursts 142 sowohl über die Zeit als auch über das zur Verfügung stehende Frequenzspektrum verschmiert. Besitzen alle Sensorknoten 100 das gleiche Sprungmuster, dann kommt es mit steigender Teilnehmerzahl immer öfter dazu, dass sich Bursts unterschiedlicher Teilnehmer zeitlich (im schlimmsten Fall vollständig) überlagern und damit gegenseitig stören. Je mehr Bursts 142 innerhalb eines Frames 120 von Bursts anderer Teilnehmer gestört werden, umso größer wird die Wahrscheinlichkeit, dass die empfängerseitige Fehlerkorrektur versagt und Übertragungsfehler auftreten.

Ausführungsbeispiele schaffen einen Satz von Sprungmustern, welche idealerweise die Paketfehlerrate (Frame oder Paket Error Rate, FER, PER) des Funkübertragungssystems minimieren. Dies geschieht unter der Annahme, dass alle Funkteilnehmer denselben Satz von Sprungmustern verwenden. Während hinsichtlich der Anordnung der Funkfrequenzen in einem Sprungmuster durch Einführung von diskreten Funkkanälen nur eine endliche (wenn auch i.d.R. relativ große) Anzahl von Permutationen möglich ist, führt die zeitliche Anordnung der Bursts 142 aufgrund einer kontinuierlichen Zeitachse zu einer extrem großen Anzahl von Permutationsmöglichkeiten, d.h. Sprungmustern. Damit ist eine "Vollsuche" über alle möglichen Sprungmuster fast ausgeschlossen. Das der Erfindung zugrundeliegende Verfahren basiert daher auf einem Monte-Carlo-Ansatz, welcher aus einer sehr großen Zahl von (pseudo-) zufällig erzeugten Sprungmuster durch geeignete Design-Kriterien einen Satz mit den besten Eigenschaften im Sinne einer zu erwartenden, minimalen Fehlerrate auswählt. Die Anzahl der Sprungmuster in diesem Satz beläuft sich auf $P_{Auswahl}$.

Zur Erstellung geeigneter Sprungmuster 142 wird eine Metrik benötigt, welche idealerweise mit der zu erwartenden Paketfehlerrate in einem streng monotonen Zusammenhang steht, deren Minimierung also idealerweise die Paketfehlerrate minimiert. Bei Ausführungsbeispielen kann als Entwurfskriterium die zweidimensionale (2D-)Autokorrelierte bzw. Kreuzkorrelierte des Sprungmusters betrachtet werden.

Die 2D-Autokorrelierte (AKF) $\Theta_{x,x}$ der Matrix **X** des Sprungmusters 142, welche die Fläche über die mit Vielfachen von $T_A$ abgetastete Zeitdauer $T_{Frame}$ und das belegte Frequenzspektrum mit den L Frequenzbändern aufspannt, lässt sich wie folgt angeben:

$$\theta_{x,x}(f,t) = \sum_{l=0}^{L-1} \sum_{m=0}^{M-1} x_{l,m} \cdot x_{l+f,m+t}$$

wobei *L* die Zeilenanzahl der Matrix ***X*** und $M = T_{Frame}/T_A$ die Spaltenanzahl der Matrix ***X*** ist. Falls sich an der betreffenden Stelle *x(/,m)* der Matrix ***X*** ein Burst befindet, dann erfolgt an dieser Stelle ein Eintrag in *X* mit *x(l,m)* = 1, ansonsten bleibt *x(l,m) = 0*. Die indizierten Elemente von ***X***, die außerhalb des belegten Bereichs liegen, sind ebenfalls Null:

$$x(l,m) = 0,\ l < 0 \text{ oder } l \geq L \text{ oder } m < 0 \text{ oder } m \geq M$$

Da sich der Oszillator-Frequenzfehler pro Teilnehmer definitionsgemäß maximal auf eine Abweichung von *S* Frequenzkanälen belaufen kann, erstreckt sich der Frequenz-Index *f* in der AKF von -2S bis +2S. Der Zeit-Index *t* läuft dagegen von $-T_{Frame}$ bis $T_{Frame}$, in Schritten von $T_{Frame}/T_A$. Die AKF-Dimension von $\Theta_{x,x}$ ist damit *(4S+1) x (2M+1)*.

In der Zeit- und Frequenzinformations-Matrix ***X*** kann, falls gewünscht, auch der Einfluss von Nachbarkanalstörungen berücksichtigt werden. Dies ist dann wichtig, wenn die Empfangsfilter im Empfänger 110 keine besondere Trennschärfe (Selektivität) hinsichtlich von Nachbarkanalstörungen aufweisen. Dazu kann ein Metrik-Vektor $\boldsymbol{m_{Met}}$ = *{Gleichkanal, 1ster Nachbarkanal, 2ter Nachbarkanal,* ...*}* eingeführt werden, der in der Matrix ***X*** die entsprechende Information einfügt. Spezifiziert man beispielsweise eine Metrik mit $\boldsymbol{m_{Met}}$ = *{1, 0.5, 0.1}*, dann werden in ***X*** an der Stelle *x(l,m),* wo wir die Anwesenheit eines Burst unterstellen, eine *1* und an den beiden Positionen der Nachbarfrequenzen *x(l-1,m)* und *x(l+1,m)* steht eine *0.5.* Entsprechend befindet sich noch weiter außen bei *x(l-2,m)* und *x(l+2,m)* der Wert *0.1* für den 2ten Nachbarkanal. Diese Indizierung kann an allen Positionen geschehen, wo sich ein Burst in ***X*** befindet.

Fig. 10a und 10b zeigen zwei AKF-Beispiele. In Fig. 10a treten neben dem unvermeidbaren Hauptmaximum bei *t* = *f* = 0 (Da die unverschobene Folge mit sich selbst am ähnlichsten ist, hat die 2D-AKF für die in beiden Dimensionen (Zeit und Frequenz) unverschobene Folge den höchsten Wert, in unserem Fall eben *N* Burst-Kollisionen) und den 2 oder 4 möglichen Nebenmaximas mit den Amplituden von jeweils *N/C* aufgrund der Cluster-Bildung, nur noch Werte auf, die kleiner oder gleich einem Schwellwert $N_{Schwelle}$ sind. Je niedriger diese Schwelle ist, desto weniger Bursts sind dann in einem Frame gestört und die Wahrscheinlichkeit eines Übertragungsfehlers sinkt. Fig. 10b zeigt dagegen ein ungünstigeres Sprungmuster, bei dem der Schwellwert an einigen Stellen z.B. deutlich überschritten wird. Die Wahrscheinlichkeit von Übertragungsfehlern steigt dadurch an.

Im Folgenden werden die einzelnen Designschritte detailliert beschrieben.

In einem ersten Design-Schritt können daher $P_{Optimal}$ Kandidaten der Sprungmuster generiert werden, deren AKF-Nebenmaxima einen vorgegebenen minimalen Amplitudenschwellwert $N_{Schwelle} \geq C$ (*C* ist die Cluster-Größe) nicht übersteigen. Die Erzeugung von Kandidaten der Sprungmuster erfolgt im Rahmen einer Monte-Carlo-Simulation, in welcher Sprungmuster mit zufälligen Zeit- und Frequenzmustern (im Rahmen der erwähnten Randbedingungen, siehe oben) generiert werden. Falls für den Schwellwert $N_{Schwelle} > C$ gilt, sollte die Anzahl der Werte, die den Wert *C* übersteigen, möglichst gering sein.

Dazu können die *(4S+1) x (2M+1)* Elemente der 2D-Autokorrelierten $\Theta_{x,x}$ in aufsteigender Reihenfolge in einem Vektor $V_{Sort}$ sortiert werden. Da die Gesamtsumme über alle AKF-Elemente für alle Sprungmuster immer annähernd konstant ist und die meisten AKF-Elemente Werte von 0, 1 oder C (vollständige Cluster-Kollision) aufweisen, interessieren lediglich, falls vorhanden, die Werte größer C. Insofern reicht es aus, dass lediglich die letzten $v_{AKF}$ Elemente von $\boldsymbol{V}_{Sort}$ ,also $\boldsymbol{V_{Sort}}$*(end-* $v_{AKF}$*+1:end)* betrachtet werden. Als Kriterium (vorgegebene Autokorrelationseigenschaft) kann daher festgelegt werden, dass die Summe $SUM_{AKF}$ dieser VAKF Elemente möglichst einen Summenschwellwert von $S_{Sum_AKF_Schwelle} = (v_{AKF}-1)\cdot C+N$ nicht übersteigt. Findet man hierzu nicht genügend verschiedene Sprungmuster, dann kann der Wert von $S_{Sum_AKF_Schwelle}$ schrittweise um 1 erhöht werden, bis eine ausreichende Anzahl $P_{Optimal}$ von Sprungmustern zur Verfügung steht. Speziell wenn mittels des Metrik-Vektor $\boldsymbol{m_{Met}}$ Nachbarkanalstörungen in die Berechnung der 2D-AKF einfließen, dann kann der Summenschwellwert $S_{Sum_AKF_Schwelle}$ deutlich ansteigen.

Falls unterschiedliche Sätze von Sprungmustern 142 gesucht werden sollen, kann der erste Design-Schritt mit einem neuen Parametersatz wiederholt werden. Beispielsweise kann der Wunsch bestehen, mehrere Sätze von Sprungmustern mit unterschiedlichen Oszillator-Abweichungen zu generieren und gemeinsam zu optimieren. Unterschiedliche Oszillator-Abweichung bewirken verschieden Sicherheitsstreifen *S,* wodurch sich der Freiheitsgrad der möglichen Burstbelegung verändert. Insofern ändern sich dadurch auch einige Parameter innerhalb der AKF-Berechnung. Oder es soll ein neuer Sprungmuster-Satz erzeugt werden, der mehrfache Wiederholungen unter Verwendung eines mehrstufigen Zeitoffsets $T_W$ ermöglicht. Hier ändern sich die Anforderungen an das Zeitverhalten. Ist eine burstweise alternierende Verschachtelung der Sprungmuster vorgesehen, so kann der kürzeste Abstand zwischen zwei ursprünglichen Bursts eines Sprungmusters ermittelt und vorgegeben werden, welcher dann den Zeitoffsets $T_W$ festlegt. Der Zeitoffsets $T_W$ sollte dabei deutlich größer als die Mindestzeit $T_{A_min}$ gewählt werden.

Der erste Design-Schritt, das Auffinden von $P^1_{\mathrm{Optimal}}$ Kandidaten eines Satzes von Sprungmustern-Pattern, erfolgt gänzlich unabhängig vom Auffinden von $P^2_{\mathrm{Optimal}}$ Kandidaten eines anderen Pattern-Satzes. Insofern können sämtliche Parametervorgaben bei den Pattern (Cluster, Frequenzmuster, Zeitabstände, usw.), wie auch die Designparameter ($N_{Schwelle}$, $V_{\mathrm{Sort}}$ ,Zeilen- und Spaltenanzahl der 2D-AKF $\Theta_{x,x}$, usw.) beliebig geändert werden. Erst im zweiten Design-Schritt, der Berechnung der Kreuzkorrelierten, erfolgt eine Zusammenführung aller entworfener Kandidaten.

Wenn eine vorgegebene Zahl $P_{Auswahl}$ verschiedener Sprungmuster gesucht wird, dann sollte jedes einzelne Sprungmusterpaar möglichst orthogonal zueinander sein und die einzelnen 2D-Kreuzkorrelationsmatrizen (2D-KKF)

$$\theta_{x,y}(f,t) = \sum_{l=0}^{L-1}\sum_{m=0}^{M-1} x_{l,m}\cdot y_{l+f,m+t}$$

der beiden Sprungmuster mit den Matrizen **X** und **Y** möglichst geringe Maximal-Werte aufweisen, da hohe Maximal-Werte in der Funkübertragung potentiell einer großen Zahl von kollidierenden Bursts in einem einzelnen Frame entsprechen. Der Zeit-Index von $\Theta_{x,y}$ läuft unverändert in Schritten von $T_{Frame}/T_{\mathrm{A}}$ von - $T_{Frame}$ bis $T_{Frame.}$. Der KKF-Frequenz-Index *f* erstreckt sich dagegen allgemein von $-(S_x+S_y)$ bis $+(S_x+S_y)$, da die beiden betrachteten Sprungmuster unterschiedliche Abweichungen in ihrem Frequenzfehlerverhalten (Oszillatorfrequenzabweichungen) aufweisen können. Fig. 11a und 11b zeigen wieder zwei 2D-KKF-Beispiele, einen günstigen Fall (Fig. 11a) sowie einen ungünstigen Fall (Fig. 11b).

In einem zweiten Design-Schritt können, ausgehend von den $P_{\mathrm{Optimal}}$ vorab ausgewählten Sprungmuster-Kandidaten mit ihren zugehörigen 2D-Autokorrelationsfolgen $\Theta_{x,x}$, sämtliche ($P_{\mathrm{Optimal}}$ -1) x ($P_{\mathrm{Optimal}}$) möglichen, i.d.R. unterschiedlichen Kreuzkorrelationsfolgen $\Theta_{x,\mathrm{y}}$ berechnet werden. Bei jeder 2D-KKF können dann im Anschluss die Werte von $\Theta_{x,\mathrm{y}}$ erneut in aufsteigender Reihenfolge sortiert (analog dem Prozedere bei der 2D-AKF), die Summe der letzten $v_{KKF}$ Elemente berechnet, *also* $SUM_{KKF} = sum(\boldsymbol{V_{Sort}}(end- v_{kKF}+1:end))$ und in einer quadratischen ($P_{\mathrm{Optimal}}$ x $P_{\mathrm{Optimal}}$) Matrix $\boldsymbol{O}_{vKKF}$ abgespeichert werden.

Wurden im ersten Design-Schritt die 2D-Autokorrelationsfolgen $\Theta_{x,x}$ von verschiedenen Sätzen von Sprungmustern berechnet, so werden die verschiedenen Kandidatensätze ($P^1_{\mathrm{Optimal}}$ und $P^2_{\mathrm{Optimal}}$) der Reihe nach abgearbeitet und es entsteht dann ebenfalls eine quadratischen Matrix $\boldsymbol{O}_{vKKF}$ der Dimension (($P^1_{\mathrm{Optimal}}$ + $P^2_{\mathrm{Optimal}}$) x ($P^1_{\mathrm{Optimal}}$ + $P^2_{\mathrm{Optimal}}$)), die sämtliche Kreuzkorrelationsfolgen $\Theta_{x,\mathrm{y}}$ aller möglicher Kombinationen beinhaltet.

In einem dritten Schritt gilt es die $P_{Auswahl}$ verschiedenen Sprungmuster 142 zu suchen, welche untereinander die günstigsten 2D-KKF-Eigenschaften aufweisen, da diese mit einer vergleichsweise niedrigen maximalen Anzahl kollidierender Bursts in einem Frame korrelieren. Dazu können die Eigenschaften von (($P_{Auswahl}$ -1)· $P_{Auswahl}$)/2 verschiedenen 2D-KKF anhand der abgespeicherten Summen $SUM_{KKF}$ in der Matrix $\boldsymbol{O}_{vKKF}$ ausgewertet werden. Diejenigen $P_{Auswahl}$ verschiedener Sprungmuster, deren Gesamtsumme über die (($P_{Auswahl}$ -1)· $P_{Auswahl}$)/2 verschiedenen Teilsummen $SUM_{KKF}$ aus $\boldsymbol{O}_{vKKF}$ ein Minimum ergibt, ergibt die optimalen $P_{Auswahl}$ Sprungmuster. Da im Zuge einer umfangreichen Monte-Carlo-Simulation $P_{Auswahl} << P_{Optimal}$ anzustreben ist, existieren entsprechend dem Binomialkoeffizienten "$P_{Optimall}$ über $P_{\mathrm{Auswahl}}$" verschiedene Kombinationsmöglichkeiten, ein Umfang, der in der Regel nicht mehr vollständig abzuarbeiten ist. Insofern können immer $P_{Auswahl}$ Sprungmuster neu und zufällig aus den $P_{Optimal}$ vorhandenen Sprungmuster ausgewählt werden Matlab-Befehle: F=randperm(1:$P_{Optimal}$) und $Pattern_{Auswahl}$ = F(1:$P_{Auswahl}$)) und immer jeweils die Gesamtsumme GS aus den verschiedenen Teilsummen $SUM_{KKF}$ berechnet werden. Bei entsprechend großem Stichprobenumfang ergibt sich ein lokales Minimum der Gesamtsumme, welches dann den gewünschten Satz von $P_{Auswahl}$ Sprungmuster liefert.

Wurden im ersten Design-Schritt die 2D-Autokorrelationsfolgen $\Theta_{x,x}$ von verschiedenen Sätzen von Sprungmustern berechnet, so erfolgt eine zufällige, ständig zu permutierende Auswahl von $P^1_{Auswahl}$ aus den $P^1_{Optimal}$ vorhandenen Sprungmustern von Satz 1, sowie eine zufällige, ständig permutierte Auswahl von $P^2_{Auswahl}$ aus den $P^2_{Optimal}$ vorhandenen Sprungmustern von Satz 2. Über diesen Sprungmuster-Satz [$P^1_{Auswahl}$, $P^2_{Auswahl}$] wird dann immer die Gesamtsumme GS aus den verschiedenen Teilsummen $SUM_{KKF}$ berechnet und anschließend der Satz mit dem lokalen Minimum ausgewählt.

Der vollständige Design-Prozess, wie auch die Freiheitsgrade bei der Festlegung der Sprungmuster ist in Fig. 12 nochmals dargestellt. Die Möglichkeit mehrere Sätze von Sprungmustern gleichzeitig zu optimieren, ist berücksichtigt, aber nur angedeutet.

Im Detail zeigt Fig. 12 ein Flussdiagramm eines Verfahrens 260 zur Erzeugung von Sprungmustern, gemäß einem Ausführungsbeispiel.

In einem ersten Schritt 262 wird das Verfahren 260 gestartet.

In einem zweiten Schritt 264 wird n gleich eins gesetzt, wobei n eine Laufvariable ist.

In einem dritten Schritt 266 kann ein Sprungmuster zufällig erzeugt werden. Hierbei können die oben genannten Freiheitsgrade bezüglich der Frequenzkanalbelegung, wie zum Beispiel eine Frequenzkanalzuordnung der Burts mit Basiszuordnung der Bursts innerhalb des Clusters und eine Zuordnung der Cluster zueinander, berücksichtigt werden. Ferner können die oben genannten Freiheitsgrade bezüglich der Zeitintervalle, wie zum Beispiel eine Bestimmung der Zeitintervalle innerhalb des Clusters und zwischen den Clustern, berücksichtigt werden.

In einem vierten Schritt 268 kann die Autokorrelationsfunktion des zufällig erzeugten Sprungmusters berechnet werden. Beispielsweise kann eine 2D-AKF-Berechnung $\Theta_{x,x}(f,t)$ erfolgen. Ferner können die 2D-AKF-Werte in einem Vektor $v_{Sort}$ sortiert werden. Ferner kann eine Teilsumme über eine vorgegebene Anzahl von größten Amplitudenwerten der Autokorrelationsfunktion gebildet werden, $SUM_{AKF} = sum(\mathbf{v}_{Sort}(end-V_{AKF}+1:end))$.

In einem fünften Schritt 270 kann ermittelt werden, ob das zufällig erzeugte Sprungmuster die vorgegebenen Autokorrelationseigenschaften aufweist. Beispielsweise kann ermittelt werden, ob die AKF-Nebenmaxima des Sprungmusters einen vorgegebenen minimalen Amplitudenschwellwert $N_{Schwelle} \geq C$ ($C$ ist die Cluster-Größe) nicht übersteigen, im Detail, kann ermittelt werden, ob die Summe $SUM_{AKF}$ dieser $v_{AKF}$ Elemente (Teilsumme) den Summenschwellwert von $S_{Sum_AKF_Schwelle}$ von beispielsweise $(v_{AKF}-1)\cdot C+N$ nicht übersteigt.

Wenn das Sprungmuster die vorgegebenen Autokorrelationseigenschaften nicht aufweist, dann wird der dritte Schritt wiederholt. Wenn das Sprungmuster die vorgegebenen Autokorrelationseigenschaften aufweist, dann wird das Verfahren fortgesetzt.

In einem sechsten Schritt 272 wird kann das Sprungmuster (mit den vorgegebenen Autokorrelationseigenschaften) und die Matrix **X** gespeichert werden. Ferner kann der Index n um eins erhöht werden, n = n+1.

In einem siebten Schritt 274 kann überprüft werden, ob eine optimale Anzahl $P_{Optimal}$ von Sprungmustern zur Verfügung steht.

Wenn keine eine optimale Anzahl $P_{Optimal}$ von Sprungmustern zur Verfügung steht, dann wird der dritte Schritt 266 wiederholt. Wenn eine optimale Anzahl $P_{Optimal}$ von Sprungmustern zur Verfügung steht, dann wird das Verfahren fortgesetzt.

In einem achten Schritt 276 wird ermittelt, ob ein neuer Satz von Sprungmustern erzeugt werden soll. Wenn ja, dann wird der zweite Schritt 264 wiederholt. Wenn nein, dann wird das Verfahren fortgesetzt. Ferner kann ermittelt werden, ob optional ein weiterer Satz von Sprungmustern für einen anderen Parametersatz, wie z.B. einem anderen Oszillatoroffset oder ein anderes Clusteraussehen mit verändertem zeitlichen Abständen bzw. Frequenzsprüngen, erzeugt werden soll.

In einem neunten Schritt 278 werden die Kreuzkorrelationsfunktionen zwischen den Sprungmustern mit vorgegebenen Autokorrelationseigenschaften berechnet. Beispielsweise kann eine 2D-KKF-Berechnung $\Theta_{x,y}(f,t)$ für alle Sprungmuster-Sätze erfolgen, die 2D-KKF-Werte in einem Vektor $v_{Sort}$ sortiert werden, die Teilsummen $SUM_{KKF} = sum(v_{Sort}(end-v_{KKF}+1:end))$ berechnet werden, und die Teilsummen $SUM_{KKF}$ in einer Matrix $\mathbf{O}_{vKKF}$ gespeichert werden.

In einem zehnten Schritt 280 kann n gleich eins und $GS_{Schwelle}$ auf eine große Schwelle, wie zum Beispiel $10^6$ gesetzt werden.

In einem elften Schritt 282 werden $P^1_{Auswahl}$ Sprungmuster neu und zufällig aus den $P^1_{Optimal}$ vorhandenen ersten Sprungmustern und $P^2_{Auswahl}$ Sprungmuster neu und zufällig aus den $P^2_{Optimal}$ vorhandenen zweiten Sprungmustern ausgewählt. Hierzu werden $P^1_{Optimal}$ verschiedene Zahlen in zufälliger Reihenfolge herausgewürfelt, $F^1 = randperm(1: P^1_{Optimal})$ und $P^2_{Optimal}$ verschiedene Zahlen in zufälliger Reihenfolge herausgewürfelt, $F^2 = randperm(1: P^2_{Optimal})$. Hiervon können die ersten $P^1_{Auswahl}$ davon ausgewählt werden, $Pattern1_{Auswahl} = F(1: P^1_{Auswahl})$, und die ersten $P^2_{Auswahl}$ davon ausgewählt werden, $Pattern2_{Auswahl} = F(1: P^2_{Auswahl})$. Anhand des $Pattern1_{Auswahl}$ und $Pattern2_{Auswahl}$ kann dann die Gesamtsumme GS aus den einzelnen Teilsummen $SUM_{KKF}$, die in der Matrix $\mathbf{O}_{vKKF}$ stehen, über $P_{Auswahl} = [P^1_{Auswahl}; P^2_{Auswahl}]$ berechnet werden.

In einem zwölften Schritt 282 kann ermittelt werden, ob $GS \leq GS_{Schwelle}$ ist. Wenn $GS \leq GS_{Schwelle}$ nicht erfüllt ist, dann wird n um eins erhöht, n = n+1, und der elfte Schritt 282 wiederholt. Wenn $GS \leq GS_{Schwelle}$ ist, dann wird die Schwelle $GS_{Schwelle}$ mit GS überschrieben und das Verfahren fortgesetzt.

In einem dreizehnten Schritt 286 kann das ausgewählte Sprungmuster gespeichert werden.

In einem vierzehnten Schritt 288 kann ermittelt werden ob, $n \geq$ Abbruch ist. Wenn $n \geq$ Abbruch nicht erfüllt ist, dann wird n um eins erhöht, $n = n+1$, und der elfte Schritt 282 wiederholt. Wenn $n \geq$ Abbruch erfüllt ist, dann ist das Verfahren beendet.

Im Folgenden werden beispielhaft Sprungmuster beschrieben, die mit dem oben genannten Verfahren erzeugt wurden.

3.2 Sprungmuster für eine Einzelaussendung von Daten

Bei Ausführungsbeispielen kann für die einzelne Übertagung von Daten mittels eines Sprungmusters ein Zeitsprungmuster, ein Frequenzsprungmuster oder eine Kombination aus einem Zeitsprungmuster und dem Frequenzsprungmuster verwendet werden.

Das Zeitsprungmuster kann eines der in der folgenden Tabelle genannten acht Zeitsprungmuster mit jeweils 24 Sprüngen sein:

| | # von Sub-Datenpaketen im Kernrahmen SC | | | | | | | | | | | | | | | | | | | | | | |
|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

In der Tabelle ist jede Zeile ein Zeitsprungmuster, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in - vorzugsweise Vielfachen von - Symboldauern angibt.

Das Frequenzsprungmuster kann eines aus der in der folgenden Tabelle genannten acht Frequenzsprungmuster mit jeweils 24 Sprüngen sein:

| | # von Sub-Datenpaketen im Kernrahmen SC | | | | | | | | | | | | | | | | | | | | | | | |
|---|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

In der Tabelle ist jede Zeile ein Frequenzsprungmuster, wobei in der Tabelle jede Spalte ein Sprung des jeweiligen Frequenzsprungmusters ist, wobei in der Tabelle jede Zelle eine Sendefrequenz des jeweiligen Sprungs des jeweiligen Frequenzsprungmusters in Trägern von UCG_C0 bis UCG_23 angibt.

Bei einer Kombination des Sprungmusters aus einem Zeitsprungmuster und einem Frequenzsprungmuster, kann das jeweilige Zeitsprungmuster und das jeweilige Frequenzsprungmuster in der jeweiligen Tabelle die gleiche Zeilennummer aufweisen.

3.3 Sprungmuster für eine wiederholte Aussendung von Daten

Bei Ausführungsbeispielen kann für die wiederholte Übertagung von Daten mittels zwei Sprungmustern (z.B. erstes Sprungmuster und zweites Sprungmuster) jeweils ein Zeitsprungmuster, ein Frequenzsprungmuster oder eine Kombination aus einem Zeitsprungmuster und dem Frequenzsprungmuster verwendet werden.

Das Zeitsprungmuster kann eines der in der folgenden Tabelle genannten acht Zeitsprungmuster mit jeweils 24 Sprüngen sein:

| | # von Sub-Datenpaketen im Kernrahmen SC | | | | | | | | | | | | | | | | | | | | | | |
|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 545 | 373 | 319 | 443 | 373 | 319 | 349 | 373 | 319 | 454 | 373 | 319 | 578 | 373 | 319 | 436 | 373 | 319 | 398 | 373 | 319 |
| 2 | 373 | 319 | 371 | 373 | 319 | 410 | 373 | 319 | 363 | 373 | 319 | 354 | 373 | 319 | 379 | 373 | 319 | 657 | 373 | 319 | 376 | 373 | 319 |
| 3 | 373 | 319 | 414 | 373 | 319 | 502 | 373 | 319 | 433 | 373 | 319 | 540 | 373 | 319 | 428 | 373 | 319 | 467 | 373 | 319 | 409 | 373 | 319 |
| 4 | 373 | 319 | 396 | 373 | 319 | 516 | 373 | 319 | 631 | 373 | 319 | 471 | 373 | 319 | 457 | 373 | 319 | 416 | 373 | 319 | 354 | 373 | 319 |
| 5 | 373 | 319 | 655 | 373 | 319 | 416 | 373 | 319 | 367 | 373 | 319 | 400 | 373 | 319 | 415 | 373 | 319 | 342 | 373 | 319 | 560 | 373 | 319 |
| 6 | 373 | 319 | 370 | 373 | 319 | 451 | 373 | 319 | 465 | 373 | 319 | 593 | 373 | 319 | 545 | 373 | 319 | 380 | 373 | 319 | 365 | 373 | 319 |
| 7 | 373 | 319 | 393 | 373 | 319 | 374 | 373 | 319 | 344 | 373 | 319 | 353 | 373 | 319 | 620 | 373 | 319 | 503 | 373 | 319 | 546 | 373 | 319 |
| 8 | 373 | 319 | 367 | 373 | 319 | 346 | 373 | 319 | 584 | 373 | 319 | 579 | 373 | 319 | 519 | 373 | 319 | 351 | 373 | 319 | 486 | 373 | 319 |

In der Tabelle ist jede Zeile ein Zeitsprungmuster, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in - vorzugsweise Vielfachen von - Symboldauern angibt.

Das Frequenzsprungmuster kann eines aus der in der folgenden Tabelle genannten acht Frequenzsprungmuster mit jeweils 24 Sprüngen sein:

| | # von Sub-Datenpaketen im Kernrahmen SC | | | | | | | | | | | | | | | | | | | | | | | |
|---|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 20 | 12 | 0 | 16 | 8 | 3 | 19 | 11 | 5 | 21 | 13 | 1 | 17 | 9 | 7 | 23 | 15 | 2 | 18 | 10 | 6 | 22 | 14 |
| 2 | 3 | 19 | 11 | 7 | 23 | 15 | 2 | 18 | 10 | 5 | 21 | 13 | 4 | 20 | 12 | 0 | 16 | 8 | 1 | 17 | 9 | 6 | 22 | 14 |
| 3 | 6 | 22 | 14 | 0 | 16 | 8 | 1 | 17 | 9 | 4 | 20 | 12 | 3 | 19 | 11 | 5 | 21 | 13 | 2 | 18 | 10 | 7 | 23 | 15 |
| 4 | 3 | 19 | 11 | 1 | 17 | 9 | 4 | 20 | 12 | 5 | 21 | 13 | 2 | 18 | 10 | 7 | 23 | 15 | 6 | 22 | 14 | 0 | 16 | 8 |
| 5 | 5 | 21 | 13 | 2 | 18 | 10 | 0 | 16 | 8 | 6 | 22 | 14 | 7 | 23 | 15 | 1 | 17 | 9 | 4 | 20 | 12 | 3 | 19 | 11 |
| 6 | 1 | 17 | 9 | 3 | 19 | 11 | 4 | 20 | 12 | 6 | 22 | 14 | 7 | 23 | 15 | 5 | 21 | 13 | 2 | 18 | 10 | 0 | 16 | 8 |
| 7 | 5 | 21 | 13 | 1 | 17 | 9 | 2 | 18 | 10 | 4 | 20 | 12 | 3 | 19 | 11 | 0 | 16 | 8 | 6 | 22 | 14 | 7 | 23 | 15 |
| 8 | 3 | 19 | 11 | 6 | 22 | 14 | 5 | 21 | 13 | 1 | 17 | 9 | 7 | 23 | 15 | 2 | 18 | 10 | 0 | 16 | 8 | 4 | 20 | 12 |

In der Tabelle ist jede Zeile ein Frequenzsprungmuster, wobei in der Tabelle jede Spalte ein Sprung des jeweiligen Frequenzsprungmusters ist, wobei in der Tabelle jede Zelle eine Sendefrequenz des jeweiligen Sprungs des jeweiligen Frequenzsprungmusters in Trägern von UCG_C0 bis UCG_23 angibt.

Bei einer Kombination des Sprungmusters aus einem Zeitsprungmuster und einem Frequenzsprungmuster, kann das jeweilige Zeitsprungmuster und das jeweilige Frequenzsprungmuster in der jeweiligen Tabelle die gleiche Zeilennummer aufweisen.

4. Weitere Ausführungsbeispiele

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Abkürzungsverzeichnis

| | |
|---|---|
| $B_c$ | Frequenzträgerabstand, entspricht der Distanz zweier benachbarter Frequenzkanäle |
| *BS* | Base-Station |
| *C* | Anzahl der Bursts die ein Cluster bilden |
| *Frame* | Datenpaket, aus *N* Bursts bestehend |
| *L* | Anzahl der zur Verfügung stehender Frequenzbänder |
| *MRC* | Maximal-Ratio Combining |
| *N* | Anzahl der Bursts aus denen ein Frame besteht |
| $N_{Schwelle}$ | Amplitudenschwellwert bei der AKF-Kandidatenerzeugung |
| $P_{Auswahl}$ | Anzahl der bzgl. 2D-AKF und KKF-Eigenschaften optimierenden Hopping-Pattern |
| *S* | Anzahl der Frequenzbänder die aufgrund von Oszillator-Frequenzfehler als Sicherheitsstreifen keine Bursts beinhalten dürfen |
| $S_R$ | verwendete Symbolrate |
| $T_0$ | Startzeitpunkt eines Frames |
| $T_A$ | Abtastrate der Zeitachse |
| $T_{Burst}$ | Zeitdauer eines Bursts |
| $T_{Frame}$ | Zeitdauer eines Frames |
| *TSMA* | Telegram Splitting Multiple Access |
| *TSMA* pattern | Hopping Pattern eines Frames im Zeit- und Frequenzbereich |
| **X** | Matrix mit Zeit- und Frequenzinformation der Hopping-Pattern |
| $\Theta_{x,x}$ | 2D-Autokorrelationsfunktion (2D-AKF) |
| $\Theta_{x,y}$ | 2D-Kreuzkorrelationsfunktion (2D-KKF) |

## Patentansprüche

1. Datensender (100), der ausgebildet ist, um Daten (120) in einem ersten Modus unter Verwendung eines ersten Sprungmusters (140_1) und wiederholt unter Verwendung eines zweiter Sprungmusters (140_2) auszusenden;

   wobei der Datensender (100) ausgebildet ist, um Daten (120) in einem zweiten Modus einmal unter Verwendung eines dritten Sprungmusters (140) auszusenden;
   wobei die Sprungmuster des ersten Modus und des zweiten Modus unterschiedlich sind, so dass Sprünge der Sprungmuster des ersten Modus und Sprünge des Sprungmusters des zweiten Modus unterschiedlich in der Zeit und/oder Frequenz verteilt sind;
   wobei der Datensender (100) ausgebildet ist, um das erste Sprungmuster (140_1) und das zweite Sprungmuster (140_2) aus einem ersten Satz von Sprungmustern auszuwählen, und um das dritte Sprungmuster (140) aus einem zweiten Satz von Sprungmustern auszuwählen;
   wobei Sprungmuster des ersten Satzes von Sprungmustern und Sprungmuster des zweiten Satzes von Sprungmustern unterschiedlich sind.

2. Datensender (100) nach einem der vorangehenden Ansprüche, wobei das erste Sprungmuster (140_1) und das zweite Sprungmuster (140_2) in zumindest einem aus der Frequenz und der Zeit zueinander verschoben sind, und wobei das erste Sprungmuster (140_1) und das zweite Sprungmuster (140_2) zumindest teilweise ineinander verschachtelt sind.

3. Datensender (100) nach einem der Ansprüche 1 bis 2, wobei das zweite Sprungmuster (140_2) eine in der Frequenz und/oder Zeit verschobene Version des ersten Sprungmusters (140_1) ist.

4. Datensender (100) nach einem der vorangehenden Ansprüche, wobei der Datensender (100) ausgebildet ist, um das erste Sprungmuster (140_1) und das zweite Sprungmuster (140_2) in unterschiedlichen Frequenzbändern auszusenden.

5. Datensender (100) nach einem der vorangehenden Ansprüche, wobei der Datensender (100) ausgebildet ist, um einen Zeitoffset zwischen dem ersten Sprungmuster (140_1) und dem zweiten Sprungmuster (140_2) in Abhängigkeit von einem Betriebsparameter des Datensenders (100) zu ermitteln.

6. Datensender (100) nach einem der vorangehenden Ansprüche, wobei der Datensender (100) ausgebildet ist, um einen Frequenzoffset zwischen dem ersten Sprungmuster (140_1) und dem zweiten Sprungmuster (140_2) in Abhängigkeit von einem Betriebsparameter des Datensenders (100) zu ermitteln.

7. Datensender (100) nach einem der Ansprüche 5 bis 6, wobei der Betriebsparameter des Datensenders (100) zumindest ein Teil von Nutzerdaten oder Fehlerschutzdaten ist.

8. Datensender (100) nach einem der vorangehenden Ansprüche, wobei das erste Sprungmuster (140_1) und das zweite Sprungmuster (140_2) jeweils ein Frequenzsprungmuster, ein Zeitsprungmuster oder eine Kombination aus einem Frequenzsprungmuster und einem Zeitsprungmuster ist.

9. Datensender (100) nach einem der vorangehenden Ansprüche, wobei die Daten (120) ein Datenpaket sind, wobei der Datensender (100) ausgebildet ist, um das Datenpaket in eine Mehrzahl von Sub-Datenpakete aufzuteilen, wobei jedes der Sub-Datenpakete kürzer ist als das Datenpaket;
wobei der Datensender (100) ausgebildet ist, um die Mehrzahl von Sub-Datenpakete entsprechend des ersten Sprungmusters in der Frequenz und/oder Zeit verteilt zu senden und wiederholt entsprechend des zweiten Sprungmusters der Frequenz und/oder Zeit verteilt zu senden.

10. Datensender (100) nach einem der vorangehenden Ansprüche, wobei

- das erste Sprungmuster (140_1) und das zweite Sprungmuster (140_2) jeweils,
- oder das dritte Sprungmuster (140)

ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 24 Sprüngen ist:

| | # von Sub-Datenpaketen im Kernrahmen SC | | | | | | | | | | | | | | | | | | | | | | |
|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 545 | 373 | 319 | 443 | 373 | 319 | 349 | 373 | 319 | 454 | 373 | 319 | 578 | 373 | 319 | 436 | 373 | 319 | 398 | 373 | 319 |
| 2 | 373 | 319 | 371 | 373 | 319 | 410 | 373 | 319 | 363 | 373 | 319 | 354 | 373 | 319 | 379 | 373 | 319 | 657 | 373 | 319 | 376 | 373 | 319 |
| 3 | 373 | 319 | 414 | 373 | 319 | 502 | 373 | 319 | 433 | 373 | 319 | 540 | 373 | 319 | 428 | 373 | 319 | 467 | 373 | 319 | 409 | 373 | 319 |
| 4 | 373 | 319 | 396 | 373 | 319 | 516 | 373 | 319 | 631 | 373 | 319 | 471 | 373 | 319 | 457 | 373 | 319 | 416 | 373 | 319 | 354 | 373 | 319 |
| 5 | 373 | 319 | 655 | 373 | 319 | 416 | 373 | 319 | 367 | 373 | 319 | 400 | 373 | 319 | 415 | 373 | 319 | 342 | 373 | 319 | 560 | 373 | 319 |
| 6 | 373 | 319 | 370 | 373 | 319 | 451 | 373 | 319 | 465 | 373 | 319 | 593 | 373 | 319 | 545 | 373 | 319 | 380 | 373 | 319 | 365 | 373 | 319 |
| 7 | 373 | 319 | 393 | 373 | 319 | 374 | 373 | 319 | 344 | 373 | 319 | 353 | 373 | 319 | 620 | 373 | 319 | 503 | 373 | 319 | 546 | 373 | 319 |
| 8 | 373 | 319 | 367 | 373 | 319 | 346 | 373 | 319 | 584 | 373 | 319 | 579 | 373 | 319 | 519 | 373 | 319 | 351 | 373 | 319 | 486 | 373 | 319 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in - vorzugsweise Vielfachen von - Symboldauern angibt;
wobei das Frequenzsprungmuster eines aus den in der folgenden Tabelle genannten acht Frequenzsprungmustern mit jeweils 24 Sprüngen ist:

| Nr. | # von Sub-Datenpaketen im Kernrahmen SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 20 | 12 | 0 | 16 | 8 | 3 | 19 | 11 | 5 | 21 | 13 | 1 | 17 | 9 | 7 | 23 | 15 | 2 | 18 | 10 | 6 | 22 | 14 |
| 2 | 3 | 19 | 11 | 7 | 23 | 15 | 2 | 18 | 10 | 5 | 21 | 13 | 4 | 20 | 12 | 0 | 16 | 8 | 1 | 17 | 9 | 6 | 22 | 14 |
| 3 | 6 | 22 | 14 | 0 | 16 | 8 | 1 | 17 | 9 | 4 | 20 | 12 | 3 | 19 | 11 | 5 | 21 | 13 | 2 | 18 | 10 | 7 | 23 | 15 |
| 4 | 3 | 19 | 11 | 1 | 17 | 9 | 4 | 20 | 12 | 5 | 21 | 13 | 2 | 18 | 10 | 7 | 23 | 15 | 6 | 22 | 14 | 0 | 16 | 8 |
| 5 | 5 | 21 | 13 | 2 | 18 | 10 | 0 | 16 | 8 | 6 | 22 | 14 | 7 | 23 | 15 | 1 | 17 | 9 | 4 | 20 | 12 | 3 | 19 | 11 |
| 6 | 1 | 17 | 9 | 3 | 19 | 11 | 4 | 20 | 12 | 6 | 22 | 14 | 7 | 23 | 15 | 5 | 21 | 13 | 2 | 18 | 10 | 0 | 16 | 8 |
| 7 | 5 | 21 | 13 | 1 | 17 | 9 | 2 | 18 | 10 | 4 | 20 | 12 | 3 | 19 | 11 | 0 | 16 | 8 | 6 | 22 | 14 | 7 | 23 | 15 |
| 8 | 3 | 19 | 11 | 6 | 22 | 14 | 5 | 21 | 13 | 1 | 17 | 9 | 7 | 23 | 15 | 2 | 18 | 10 | 0 | 16 | 8 | 4 | 20 | 12 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle eine Sendefrequenz des jeweiligen Sprungs des jeweiligen Frequenzsprungmusters in Trägern 0 bis 23 angibt.

**11.** Datensender (100) nach einem der vorangehenden Ansprüche, wobei

- das dritte Sprungmuster (140),
- oder das erste Sprungmuster (140_1) und das zweite Sprungmuster (140_2) jeweils ein Zeitsprungmuster, ein Frequenzsprungmuster oder eine Kombination aus dem Zeitsprungmuster und dem Frequenzsprungmuster ist;

wobei das Zeitsprungmuster eines aus den in der folgenden Tabelle genannten acht Zeitsprungmuster mit jeweils 24 Sprüngen ist:

| Nr. | # von Sub-Datenpaketen im Kernrahmen SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in - vorzugsweise Vielfachen von - Symboldauern angibt;
wobei das Frequenzsprungmuster eines aus den in der folgenden Tabelle genannten acht Frequenzsprungmustern mit jeweils 24 Sprüngen ist:

| Nr. | # von Sub-Datenpaketen im Kernrahmen SC | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle eine Sendefrequenz des jeweiligen Sprungs des jeweiligen Frequenzsprungmusters in Trägern 0 bis 23 angibt.

**12.** Datenempfänger (110), der ausgebildet ist, um in einem ersten Modus Daten (120) unter Verwendung eines ersten Sprungmusters (140_1) und wiederholt unter Verwendung eines zweiten Sprungmusters (140_2) zu empfangen;
wobei der Datensender (100) ausgebildet ist, um in einem zweiten Modus Daten (120) unter Verwendung eines dritten Sprungmusters (140) einmal zu empfangen;
wobei die Sprungmuster des ersten Modus und des zweiten Modus unterschiedlich sind, so dass Sprünge der Sprungmuster des ersten Modus und Sprünge des Sprungmusters des zweiten Modus unterschiedlich in der Zeit und/oder Frequenz verteilt sind;
wobei der Datenempfänger (110) ausgebildet ist, um das erste Sprungmuster (140_1) und das zweite Sprungmuster (140_2) aus einem ersten Satz von Sprungmustern auszuwählen, und um das dritte Sprungmuster (140) aus einem zweiten Satz von Sprungmustern auszuwählen;
wobei Sprungmuster des ersten Satzes von Sprungmustern und Sprungmuster des zweiten Satzes von Sprungmustern unterschiedlich sind.

**13.** Datenempfänger (110) nach einem der vorangehenden Ansprüche, wobei

- das erste Sprungmuster (140_1) und das zweite Sprungmuster (140_2) jeweils,
- oder das dritte Sprungmuster (140)

ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 24 Sprüngen ist:

| Nr. | # von Sub-Datenpaketen im Kernrahmen SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 545 | 373 | 319 | 443 | 373 | 319 | 349 | 373 | 319 | 454 | 373 | 319 | 578 | 373 | 319 | 436 | 373 | 319 | 398 | 373 | 319 |
| 2 | 373 | 319 | 371 | 373 | 319 | 410 | 373 | 319 | 363 | 373 | 319 | 354 | 373 | 319 | 379 | 373 | 319 | 657 | 373 | 319 | 376 | 373 | 319 |
| 3 | 373 | 319 | 414 | 373 | 319 | 502 | 373 | 319 | 433 | 373 | 319 | 540 | 373 | 319 | 428 | 373 | 319 | 467 | 373 | 319 | 409 | 373 | 319 |
| 4 | 373 | 319 | 396 | 373 | 319 | 516 | 373 | 319 | 631 | 373 | 319 | 471 | 373 | 319 | 457 | 373 | 319 | 416 | 373 | 319 | 354 | 373 | 319 |
| 5 | 373 | 319 | 655 | 373 | 319 | 416 | 373 | 319 | 367 | 373 | 319 | 400 | 373 | 319 | 415 | 373 | 319 | 342 | 373 | 319 | 560 | 373 | 319 |
| 6 | 373 | 319 | 370 | 373 | 319 | 451 | 373 | 319 | 465 | 373 | 319 | 593 | 373 | 319 | 545 | 373 | 319 | 380 | 373 | 319 | 365 | 373 | 319 |
| 7 | 373 | 319 | 393 | 373 | 319 | 374 | 373 | 319 | 344 | 373 | 319 | 353 | 373 | 319 | 620 | 373 | 319 | 503 | 373 | 319 | 546 | 373 | 319 |
| 8 | 373 | 319 | 367 | 373 | 319 | 346 | 373 | 319 | 584 | 373 | 319 | 579 | 373 | 319 | 519 | 373 | 319 | 351 | 373 | 319 | 486 | 373 | 319 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in - vorzugsweise Vielfachen von - Symboldauern angibt; wobei das Frequenzsprungmuster eines aus den in der folgenden Tabelle genannten acht Frequenzsprungmustern mit jeweils 24 Sprüngen ist:

| | # von Sub-Datenpaketen im Kernrahmen SC | | | | | | | | | | | | | | | | | | | | | | | |
|---|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 20 | 12 | 0 | 16 | 8 | 3 | 19 | 11 | 5 | 21 | 13 | 1 | 17 | 9 | 7 | 23 | 15 | 2 | 18 | 10 | 6 | 22 | 14 |
| 2 | 3 | 19 | 11 | 7 | 23 | 15 | 2 | 18 | 10 | 5 | 21 | 13 | 4 | 20 | 12 | 0 | 16 | 8 | 1 | 17 | 9 | 6 | 22 | 14 |
| 3 | 6 | 22 | 14 | 0 | 16 | 8 | 1 | 17 | 9 | 4 | 20 | 12 | 3 | 19 | 11 | 5 | 21 | 13 | 2 | 18 | 10 | 7 | 23 | 15 |
| 4 | 3 | 19 | 11 | 1 | 17 | 9 | 4 | 20 | 12 | 5 | 21 | 13 | 2 | 18 | 10 | 7 | 23 | 15 | 6 | 22 | 14 | 0 | 16 | 8 |
| 5 | 5 | 21 | 13 | 2 | 18 | 10 | 0 | 16 | 8 | 6 | 22 | 14 | 7 | 23 | 15 | 1 | 17 | 9 | 4 | 20 | 12 | 3 | 19 | 11 |
| 6 | 1 | 17 | 9 | 3 | 19 | 11 | 4 | 20 | 12 | 6 | 22 | 14 | 7 | 23 | 15 | 5 | 21 | 13 | 2 | 18 | 10 | 0 | 16 | 8 |
| 7 | 5 | 21 | 13 | 1 | 17 | 9 | 2 | 18 | 10 | 4 | 20 | 12 | 3 | 19 | 11 | 0 | 16 | 8 | 6 | 22 | 14 | 7 | 23 | 15 |
| 8 | 3 | 19 | 11 | 6 | 22 | 14 | 5 | 21 | 13 | 1 | 17 | 9 | 7 | 23 | 15 | 2 | 18 | 10 | 0 | 16 | 8 | 4 | 20 | 12 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle eine Sendefrequenz des jeweiligen Sprungs des jeweiligen Frequenzsprungmusters in Trägern 0 bis 23 angibt.

**14.** Datenempfänger (110) nach einem der vorangehenden Ansprüche, wobei

- das dritte Sprungmuster (140),
- oder das erste Sprungmuster (140_1) und das zweite Sprungmuster (140_2) jeweils ein Zeitsprungmuster, ein Frequenzsprungmuster oder eine Kombination aus dem Zeitsprungmuster und dem Frequenzsprungmuster ist;

wobei das Zeitsprungmuster eines aus den in der folgenden Tabelle genannten acht Zeitsprungmuster mit jeweils 24 Sprüngen ist:

| | # von Sub-Datenpaketen im Kernrahmen SC | | | | | | | | | | | | | | | | | | | | | | |
|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in - vorzugsweise Vielfachen von - Symboldauern angibt;
wobei das Frequenzsprungmuster eines aus den in der folgenden Tabelle genannten acht Frequenzsprungmustern mit jeweils 24 Sprüngen ist:

| | # von Sub-Datenpaketen im Kernrahmen SC | | | | | | | | | | | | | | | | | | | | | | | |
|---|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle eine Sendefrequenz des jeweiligen Sprungs des jeweiligen Frequenzsprungmusters in Trägern 0 bis 23 angibt.

**15.** System, mit folgenden Merkmalen:

einem Datensender (100) nach einem der Ansprüche 1 bis 11; und
einem Datenempfänger (110) nach einem der Ansprüche 12 bis 14.

**16.** Verfahren (160) zum Senden von Daten durch einen Datensender, wobei das Verfahren aufweist:

Senden (162) von Daten in einem ersten Modus unter Verwendung eines ersten Sprungmusters und wiederholt unter Verwendung eines zweiten Sprungmusters;
Senden von Daten (164) in einem zweiten Modus einmal unter Verwendung eines dritten Sprungmusters;
wobei die Sprungmuster des ersten Modus und des zweiten Modus unterschiedlich sind, so dass Sprünge der Sprungmuster des ersten Modus und Sprünge des Sprungmusters des zweiten Modus unterschiedlich in der Zeit und/oder Frequenz verteilt sind,
wobei das erste Sprungmuster und das zweite Sprungmuster aus einem ersten Satz von Sprungmustern ausgewählt werden, und wobei das dritte Sprungmuster aus einem zweiten Satz von Sprungmustern ausgewählt wird,
wobei Sprungmuster des ersten Satzes von Sprungmustern und Sprungmuster des zweiten Satzes von Sprungmustern unterschiedlich sind.

**17.** Verfahren (170) zum Empfangen von Daten durch einen Datenempfänger, wobei das Verfahren aufweist:

Empfangen (172) von Daten in einem ersten Modus unter Verwendung eines ersten Sprungmusters und wiederholt unter Verwendung eines zweiten Sprungmusters;
Empfangen (174) von Daten in einem zweiten Modus einmal unter Verwendung eines dritten Sprungmusters;
wobei die Sprungmuster des ersten Modus und des zweiten Modus unterschiedlich sind, so dass Sprünge der Sprungmuster des ersten Modus und Sprünge des Sprungmusters des zweiten Modus unterschiedlich in der Zeit und/oder Frequenz verteilt sind,
wobei das erste Sprungmuster und das zweite Sprungmuster aus einem ersten Satz von Sprungmustern ausgewählt werden, und wobei das dritte Sprungmuster aus einem zweiten Satz von Sprungmustern ausgewählt wird,
wobei Sprungmuster des ersten Satzes von Sprungmustern und Sprungmuster des zweiten Satzes von Sprungmustern unterschiedlich sind.

**18.** Computerprogramm umfassend Befehle, die bei der Ausführung des Programms durch einen Computer diesen veranlassen, das Verfahren nach einem der Ansprüche 16-17 auszuführen.

## Claims

**1.** Data transmitter (100) configured to, in a first mode, transmit data (120) using a first hopping pattern (140_1) and repeatedly using a second hopping pattern (140_2);

wherein the data transmitter (100) is configured to, in a second mode, transmit data (120) once using a third hopping pattern (140);
wherein the hopping patterns of the first mode and the second mode are different so that hops of the hopping patterns of the first mode and hops of the hopping pattern of the second mode are differently distributed in time and/ in frequency;
wherein the data transmitter (100) is configured to select the first hopping pattern (140_1) and the second hopping pattern (140_2) from a first set of hopping patterns, and to select the third hopping pattern (140) from a second set of hopping patterns;
wherein hopping patterns of the first set of hopping patterns and hopping patterns of the second set of hopping patterns are different.

**2.** Data transmitter (100) according to any one of the preceding claims, wherein the first hopping pattern (140_1) and the second hopping pattern (140_2) are shifted relative to each other in frequency and/or time, and wherein the first hopping pattern (140_1) and the second hopping pattern (140_2) are at least partially interleaved.

**3.** Data transmitter (100) according to any one of claims 1 to 2, wherein the second hopping pattern (140_2) is a frequency-shifted and/or time-shifted version of the first hopping pattern (140_1).

**4.** Data transmitter (100) according to any one of the preceding claims, wherein the data transmitter (100) is configured to transmit the first hopping pattern (140_1) and the second hopping pattern (140_2) in different frequency bands.

**5.** Data transmitter (100) according to any one of the preceding claims, wherein the data transmitter (100) is configured to determine a time offset between the first hopping pattern (140_1) and the second hopping pattern (140_2) in dependence on an operation parameter of the data transmitter (100).

**6.** Data transmitter (100) according to any one of the preceding claims, wherein the data transmitter (100) is configured to determine a frequency offset between the first hopping pattern (140_1) and the second hopping pattern (140_2) in dependence on an operation parameter of the data transmitter (100).

**7.** Data transmitter (100) according to any one of claims 5 to 6, wherein the operation parameter of the data transmitter (100) is at least a part of payload data or error protection data.

**8.** Data transmitter (100) according to any one of the preceding claims, wherein the first hopping pattern (140_1) and the second hopping pattern (140_2) are a frequency hopping pattern, a time hopping pattern or a combination of a frequency hopping pattern and a time hopping pattern, respectively.

**9.** Data transmitter (100) according to any one of the preceding claims, wherein the data (120) is a data packet, wherein the data transmitter (100) is configured to divide the data packet into a plurality of sub-data packets, wherein each of the sub-data packets is shorter than the data packet;
wherein the data transmitter (100) is configured to transmit the plurality of sub-data packets distributed in frequency and/or time according to the first hopping pattern, and to repeatedly transmit the same distributed in frequency and/or time according to the second hopping pattern.

**10.** Data transmitter (100) according to any one of the preceding claims, wherein

- the first hopping pattern (140_1) and the second hopping pattern (140_2) each,
- or the third hopping pattern (140),

is a time hopping pattern, a frequency hopping pattern or a combination of the time hopping pattern and the frequency hopping pattern;
wherein the time hopping pattern is one of the following eight time hopping patterns having 24 hops each:

| no. | # of sub-data packets in the core frame SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 545 | 373 | 319 | 443 | 373 | 319 | 349 | 373 | 319 | 454 | 373 | 319 | 578 | 373 | 319 | 436 | 373 | 319 | 398 | 373 | 319 |
| 2 | 373 | 319 | 371 | 373 | 319 | 410 | 373 | 319 | 363 | 373 | 319 | 354 | 373 | 319 | 379 | 373 | 319 | 657 | 373 | 319 | 376 | 373 | 319 |
| 3 | 373 | 319 | 414 | 373 | 319 | 502 | 373 | 319 | 433 | 373 | 319 | 540 | 373 | 319 | 428 | 373 | 319 | 467 | 373 | 319 | 409 | 373 | 319 |
| 4 | 373 | 319 | 396 | 373 | 319 | 516 | 373 | 319 | 631 | 373 | 319 | 471 | 373 | 319 | 457 | 373 | 319 | 416 | 373 | 319 | 354 | 373 | 319 |
| 5 | 373 | 319 | 655 | 373 | 319 | 416 | 373 | 319 | 367 | 373 | 319 | 400 | 373 | 319 | 415 | 373 | 319 | 342 | 373 | 319 | 560 | 373 | 319 |
| 6 | 373 | 319 | 370 | 373 | 319 | 451 | 373 | 319 | 465 | 373 | 319 | 593 | 373 | 319 | 545 | 373 | 319 | 380 | 373 | 319 | 365 | 373 | 319 |
| 7 | 373 | 319 | 393 | 373 | 319 | 374 | 373 | 319 | 344 | 373 | 319 | 353 | 373 | 319 | 620 | 373 | 319 | 503 | 373 | 319 | 546 | 373 | 319 |
| 8 | 373 | 319 | 367 | 373 | 319 | 346 | 373 | 319 | 584 | 373 | 319 | 579 | 373 | 319 | 519 | 373 | 319 | 351 | 373 | 319 | 486 | 373 | 319 |

wherein each line in the table is a time hopping pattern, wherein each column in the table is a hop of the respective time hopping pattern starting from a second hop so that each time hopping pattern comprises 24 hops, wherein each cell in the table indicates a time interval of a reference point of the respective hop to a same reference point of an immediately subsequent hop in - preferably multiples of - symbol durations;
wherein the frequency hopping pattern is one of the following eight frequency hopping patterns having 24 hops each:

| no. | # of sub-data packets in the core frame SC | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 20 | 12 | 0 | 16 | 8 | 3 | 19 | 11 | 5 | 21 | 13 | 1 | 17 | 9 | 7 | 23 | 15 | 2 | 18 | 10 | 6 | 22 | 14 |
| 2 | 3 | 19 | 11 | 7 | 23 | 15 | 2 | 18 | 10 | 5 | 21 | 13 | 4 | 20 | 12 | 0 | 16 | 8 | 1 | 17 | 9 | 6 | 22 | 14 |
| 3 | 6 | 22 | 14 | 0 | 16 | 8 | 1 | 17 | 9 | 4 | 20 | 12 | 3 | 19 | 11 | 5 | 21 | 13 | 2 | 18 | 10 | 7 | 23 | 15 |
| 4 | 3 | 19 | 11 | 1 | 17 | 9 | 4 | 20 | 12 | 5 | 21 | 13 | 2 | 18 | 10 | 7 | 23 | 15 | 6 | 22 | 14 | 0 | 16 | 8 |
| 5 | 5 | 21 | 13 | 2 | 18 | 10 | 0 | 16 | 8 | 6 | 22 | 14 | 7 | 23 | 15 | 1 | 17 | 9 | 4 | 20 | 12 | 3 | 19 | 11 |
| 6 | 1 | 17 | 9 | 3 | 19 | 11 | 4 | 20 | 12 | 6 | 22 | 14 | 7 | 23 | 15 | 5 | 21 | 13 | 2 | 18 | 10 | 0 | 16 | 8 |
| 7 | 5 | 21 | 13 | 1 | 17 | 9 | 2 | 18 | 10 | 4 | 20 | 12 | 3 | 19 | 11 | 0 | 16 | 8 | 6 | 22 | 14 | 7 | 23 | 15 |
| 8 | 3 | 19 | 11 | 6 | 22 | 14 | 5 | 21 | 13 | 1 | 17 | 9 | 7 | 23 | 15 | 2 | 18 | 10 | 0 | 16 | 8 | 4 | 20 | 12 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers of 0 to 23.

**11.** Data transmitter (100) according to any one of the preceding claims, wherein

- the third hopping pattern (140),
- or the first hopping pattern (140_1) and the second hopping pattern (140_2) each,

is a time hopping pattern, a frequency hopping pattern or a combination of the time hopping pattern and the frequency hopping pattern;
wherein the time hopping pattern is one of the following eight time hopping patterns having 24 hops each:

| no. | # of sub-data packets in the core frame SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

wherein each line in the table is a time hopping pattern, wherein each column in the table is a hop of the respective time hopping pattern starting from a second hop so that each time hopping pattern comprises 24 hops, wherein each cell in the table indicates a time interval of a reference point of the respective hop to a same reference point of an immediately subsequent hop in - preferably multitudes of - symbol durations;
wherein frequency hopping pattern is one of the following eight frequency hopping patterns having 24 hops each:

| | # of sub-data packets in the core frame SC | | | | | | | | | | | | | | | | | | | | | | | |
|---|---|---|---|---|---|---|---|---|---|---|---|---|---|---|---|---|---|---|---|---|---|---|---|---|
| no. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

wherein each line in the table in the table is a frequency hopping pattern, wherein each column in the table is a hop of the respective frequency hopping pattern, wherein each cell in the table indicates a transmission frequency of the respective hop of the respective frequency hopping pattern in carriers of 0 to 23.

**12.** Data receiver (110) configured to, in a first mode, receive data (120) using a first hopping pattern (140_1) and repeatedly using a second hopping pattern (140_2);
wherein the data receiver (110) is configured to, in a second mode, receive data (120) once using a third hopping pattern (140);
wherein the hopping patterns of the first mode and the second mode are different so that hops of the hopping patterns of the first mode and hops of the hopping pattern of the second mode are differently distributed in time and/ in frequency;
wherein the data receiver (110) is configured to select the first hopping pattern (140_1) and the second hopping pattern (140_2) from a first set of hopping patterns, and to select the third hopping pattern (140) from a second set of hopping patterns;
wherein hopping patterns of the first set of hopping patterns and hopping patterns of the second set of hopping patterns are different.

**13.** Data receiver (110) according to any one of the preceding claims, wherein

- the first hopping pattern (140_1) and the second hopping pattern (140_2) each,
- or the third hopping pattern (140)

is a time hopping pattern, a frequency hopping pattern or a combination of the time hopping pattern and the frequency hopping pattern;
wherein the time hopping pattern is one of the following eight time hopping patterns having 24 hops each:

| | # of sub-data packets in the core frame SC | | | | | | | | | | | | | | | | | | | | | | |
|---|---|---|---|---|---|---|---|---|---|---|---|---|---|---|---|---|---|---|---|---|---|---|---|
| no. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 545 | 373 | 319 | 443 | 373 | 319 | 349 | 373 | 319 | 454 | 373 | 319 | 578 | 373 | 319 | 436 | 373 | 319 | 398 | 373 | 319 |
| 2 | 373 | 319 | 371 | 373 | 319 | 410 | 373 | 319 | 363 | 373 | 319 | 354 | 373 | 319 | 379 | 373 | 319 | 657 | 373 | 319 | 376 | 373 | 319 |
| 3 | 373 | 319 | 414 | 373 | 319 | 502 | 373 | 319 | 433 | 373 | 319 | 540 | 373 | 319 | 428 | 373 | 319 | 467 | 373 | 319 | 409 | 373 | 319 |
| 4 | 373 | 319 | 396 | 373 | 319 | 516 | 373 | 319 | 631 | 373 | 319 | 471 | 373 | 319 | 457 | 373 | 319 | 416 | 373 | 319 | 354 | 373 | 319 |
| 5 | 373 | 319 | 655 | 373 | 319 | 416 | 373 | 319 | 367 | 373 | 319 | 400 | 373 | 319 | 415 | 373 | 319 | 342 | 373 | 319 | 560 | 373 | 319 |
| 6 | 373 | 319 | 370 | 373 | 319 | 451 | 373 | 319 | 465 | 373 | 319 | 593 | 373 | 319 | 545 | 373 | 319 | 380 | 373 | 319 | 365 | 373 | 319 |
| 7 | 373 | 319 | 393 | 373 | 319 | 374 | 373 | 319 | 344 | 373 | 319 | 353 | 373 | 319 | 620 | 373 | 319 | 503 | 373 | 319 | 546 | 373 | 319 |
| 8 | 373 | 319 | 367 | 373 | 319 | 346 | 373 | 319 | 584 | 373 | 319 | 579 | 373 | 319 | 519 | 373 | 319 | 351 | 373 | 319 | 486 | 373 | 319 |

wherein each line in the table is a time hopping pattern, wherein each column in the table is a hop of the respective time hopping pattern starting from a second hop so that each time hopping pattern comprises 24 hops, wherein each cell in the table indicates a time interval of a reference point of the respective hop to a same reference point of an immediately subsequent hop in - preferably multiples of - symbol durations;
wherein the frequency hopping pattern is one of the following eight frequency hopping patterns having 24 hops each:

| | # of sub-data packets in the core frame SC | | | | | | | | | | | | | | | | | | | | | | | |
|---|---|---|---|---|---|---|---|---|---|---|---|---|---|---|---|---|---|---|---|---|---|---|---|---|
| no. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 20 | 12 | 0 | 16 | 8 | 3 | 19 | 11 | 5 | 21 | 13 | 1 | 17 | 9 | 7 | 23 | 15 | 2 | 18 | 10 | 6 | 22 | 14 |
| 2 | 3 | 19 | 11 | 7 | 23 | 15 | 2 | 18 | 10 | 5 | 21 | 13 | 4 | 20 | 12 | 0 | 16 | 8 | 1 | 17 | 9 | 6 | 22 | 14 |
| 3 | 6 | 22 | 14 | 0 | 16 | 8 | 1 | 17 | 9 | 4 | 20 | 12 | 3 | 19 | 11 | 5 | 21 | 13 | 2 | 18 | 10 | 7 | 23 | 15 |
| 4 | 3 | 19 | 11 | 1 | 17 | 9 | 4 | 20 | 12 | 5 | 21 | 13 | 2 | 18 | 10 | 7 | 23 | 15 | 6 | 22 | 14 | 0 | 16 | 8 |
| 5 | 5 | 21 | 13 | 2 | 18 | 10 | 0 | 16 | 8 | 6 | 22 | 14 | 7 | 23 | 15 | 1 | 17 | 9 | 4 | 20 | 12 | 3 | 19 | 11 |
| 6 | 1 | 17 | 9 | 3 | 19 | 11 | 4 | 20 | 12 | 6 | 22 | 14 | 7 | 23 | 15 | 5 | 21 | 13 | 2 | 18 | 10 | 0 | 16 | 8 |
| 7 | 5 | 21 | 13 | 1 | 17 | 9 | 2 | 18 | 10 | 4 | 20 | 12 | 3 | 19 | 11 | 0 | 16 | 8 | 6 | 22 | 14 | 7 | 23 | 15 |
| 8 | 3 | 19 | 11 | 6 | 22 | 14 | 5 | 21 | 13 | 1 | 17 | 9 | 7 | 23 | 15 | 2 | 18 | 10 | 0 | 16 | 8 | 4 | 20 | 12 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers of 0 to 23.

**14.** Data receiver (110) according to any one of the preceding claims, wherein

- the third hopping pattern (140),
- or the first hopping pattern (140_1) and the second hopping pattern (140_2) each,

is a time hopping pattern, a frequency hopping pattern or a combination of the time hopping pattern and the frequency hopping pattern;
wherein the time hopping pattern is one of the following eight time hopping patterns having 24 hops each:

| | # of sub-data packets in the core frame SC | | | | | | | | | | | | | | | | | | | | | | |
|---|---|---|---|---|---|---|---|---|---|---|---|---|---|---|---|---|---|---|---|---|---|---|---|
| no. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

wherein each line in the table is a time hopping pattern, wherein each column in the table is a hop of the respective time hopping pattern starting from a second hop so that each time hopping pattern comprises 24 hops, wherein each cell in the table indicates a time interval of a reference point of the respective hop to a same reference point of an immediately subsequent hop in - preferably multitudes of - symbol durations;
wherein frequency hopping pattern is one of the following eight frequency hopping patterns having 24 hops each:

| | # of sub-data packets in the core frame SC | | | | | | | | | | | | | | | | | | | | | | | |
|---|---|---|---|---|---|---|---|---|---|---|---|---|---|---|---|---|---|---|---|---|---|---|---|---|
| no. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

wherein each line in the table in the table is a frequency hopping pattern, wherein each column in the table is a hop of the respective frequency hopping pattern, wherein each cell in the table indicates a transmission frequency of the respective hop of the respective frequency hopping pattern in carriers of 0 to 23.

**15.** System, comprising:

a data transmitter (100) according to any one of claims 1 to 11; and
a data receiver (110) according to any one of claims 12 to 14.

**16.** Method (160) for transmitting data via a data transmitter, comprising:

transmitting (162), in a first mode, data using a first hopping pattern and repeatedly using a second hopping pattern;
transmitting (164), in a second mode, data once using a third hopping pattern;
wherein the hopping patterns of the first mode and the second mode are different so that hops of the hopping patterns of the first mode and hops of the hopping pattern of the second mode are differently distributed in time and/or frequency,
wherein the first hopping pattern and the second hopping pattern are selected from a first set of hopping patterns, and wherein the third hopping pattern is selected from a second set of hopping patterns,
wherein hopping patterns of the first set of hopping patterns and hopping patterns of the second set of hopping patterns are different.

**17.** Method (170) for receiving data via a data receiver, comprising:

receiving (172), in a first mode, data using a first hopping pattern and repeatedly using a second hopping pattern;
receiving (174), in a second mode, data once using a third hopping pattern;
wherein the hopping patterns of the first mode and the second mode are different so that hops of the hopping patterns of the first mode and hops of the hopping pattern of the second mode are differently distributed in time and/or frequency,
wherein the first hopping pattern and the second hopping pattern are selected from a first set of hopping patterns, and wherein the third hopping pattern is selected from a second set of hopping patterns,
wherein hopping patterns of the first set of hopping patterns and hopping patterns of the second set of hopping patterns are different.

**18.** Computer program comprising instructions which, when the program ist executed by a computer, cause the same to execute the method according to any one of claims 16 to 17.

## Revendications

**1.** Emetteur de données (100) qui est conçu pour émettre des données (120) dans un premier mode à l'aide d'un premier modèle de saut (140_1) et de manière répétée à l'aide d'un deuxième modèle de saut (140_2);
dans lequel l'émetteur de données (100) est conçu pour émettre des données (120) dans un deuxième mode une fois à l'aide d'un troisième modèle de saut (140);
dans lequel les modèles de saut du premier mode et du deuxième mode sont différents, de sorte que les sauts des modèles de saut du premier mode et les sauts du modèle de saut du deuxième mode soient répartis de manière différente dans le temps et/ou en fréquence;
dans lequel l'émetteur de données (100) est conçu pour sélectionner le premier modèle de saut (140_1) et le deuxième modèle de saut (140_2) parmi un premier ensemble de modèles de saut, et pour sélectionner le troisième modèle de saut (140) parmi un deuxième ensemble de modèles de saut;
dans lequel les modèles de saut du premier ensemble de modèles de saut et les modèles de saut du deuxième ensemble de modèles de saut sont différents.

**2.** Emetteur de données (100) selon l'une des revendications précédentes, dans lequel le premier modèle de saut (140_1) et le deuxième modèle de saut (140_2) sont décalés l'un par rapport à l'autre dans au moins l'un parmi la fréquence et le temps, et dans lequel le premier modèle de saut (140_1) et le deuxième modèle de saut (140_2) sont au moins partiellement entrelacés l'un dans l'autre.

**3.** Emetteur de données (100) selon l'une des revendications 1 à 2, dans lequel le deuxième modèle de saut (140_2) est une version décalée en fréquence et/ou dans le temps du premier modèle de saut (140_1).

**4.** Emetteur de données (100) selon l'une des revendications précédentes, dans lequel l'émetteur de données (100) est conçu pour émettre le premier modèle de saut (140_1) et le deuxième modèle de saut (140_2) dans des bandes de fréquences différentes.

**5.** Emetteur de données (100) selon l'une des revendications précédentes, dans lequel l'émetteur de données (100) est conçu pour déterminer un décalage dans le temps entre le premier modèle de saut (140_1) et le deuxième modèle de saut (140_2) en fonction d'un paramètre de fonctionnement de l'émetteur de données (100).

**6.** Emetteur de données (100) selon l'une des revendications précédentes, dans lequel l'émetteur de données (100) est conçu pour déterminer un décalage de fréquence entre le premier modèle de saut (140_1) et le deuxième modèle de saut (140_2) en fonction d'un paramètre de fonctionnement de l'émetteur de données (100).

**7.** Emetteur de données (100) selon l'une des revendications 5 à 6, dans lequel le paramètre de fonctionnement de l'émetteur de données (100) est au moins une partie des données d'utilisateur ou des données de protection contre les erreurs.

**8.** Emetteur de données (100) selon l'une des revendications précédentes, dans lequel le premier modèle de saut (140_1) et le deuxième modèle de saut (140_2) sont, chacun, un modèle de saut en fréquence, un modèle de saut dans le temps ou une combinaison d'un modèle de saut en fréquence et d'un modèle de saut dans le temps.

**9.** Emetteur de données (100) selon l'une des revendications précédentes, dans lequel les données (120) sont un paquet de données, dans lequel l'émetteur de données (100) est conçu pour diviser le paquet de données en une pluralité de sous-paquets de données, dans lequel chacun des sous-paquets de données est plus court que le paquet de données;
dans lequel l'émetteur de données (100) est conçu pour envoyer la pluralité de sous-paquets de données selon le premier modèle de saut de manière répartie en fréquence et/ ou dans le temps et pour les envoyer de manière répétée selon le deuxième modèle de saut de manière répartie en fréquence et/ ou dans le temps.

**10.** Emetteur de données (100) selon l'une des revendications précédentes, dans lequel

- le premier modèle de saut (140_1) et le deuxième modèle de saut (140_2) sont, chacun,
- ou le troisième modèle de saut (140) est

un modèle de saut dans le temps, un modèle de saut en fréquence ou une combinaison du modèle de saut dans le temps et du modèle de saut en fréquence;
dans lequel le modèle de saut dans le temps est l'un parmi les huit modèles de saut dans le temps cités dans le tableau ci-après avec, chacun, 24 sauts:

| Nr. | # de sous-paquets de données dans le cadre principal SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 545 | 373 | 319 | 443 | 373 | 319 | 349 | 373 | 319 | 454 | 373 | 319 | 578 | 373 | 319 | 436 | 373 | 319 | 398 | 373 | 319 |
| 2 | 373 | 319 | 371 | 373 | 319 | 410 | 373 | 319 | 363 | 373 | 319 | 354 | 373 | 319 | 379 | 373 | 319 | 657 | 373 | 319 | 376 | 373 | 319 |
| 3 | 373 | 319 | 414 | 373 | 319 | 502 | 373 | 319 | 433 | 373 | 319 | 540 | 373 | 319 | 428 | 373 | 319 | 467 | 373 | 319 | 409 | 373 | 319 |
| 4 | 373 | 319 | 396 | 373 | 319 | 516 | 373 | 319 | 631 | 373 | 319 | 471 | 373 | 319 | 457 | 373 | 319 | 416 | 373 | 319 | 354 | 373 | 319 |
| 5 | 373 | 319 | 655 | 373 | 319 | 416 | 373 | 319 | 367 | 373 | 319 | 400 | 373 | 319 | 415 | 373 | 319 | 342 | 373 | 319 | 560 | 373 | 319 |
| 6 | 373 | 319 | 370 | 373 | 319 | 451 | 373 | 319 | 465 | 373 | 319 | 593 | 373 | 319 | 545 | 373 | 319 | 380 | 373 | 319 | 365 | 373 | 319 |
| 7 | 373 | 319 | 393 | 373 | 319 | 374 | 373 | 319 | 344 | 373 | 319 | 353 | 373 | 319 | 620 | 373 | 319 | 503 | 373 | 319 | 546 | 373 | 319 |
| 8 | 373 | 319 | 367 | 373 | 319 | 346 | 373 | 319 | 584 | 373 | 319 | 579 | 373 | 319 | 519 | 373 | 319 | 351 | 373 | 319 | 486 | 373 | 319 |

dans lequel chaque rangée dans le tableau est un modèle de saut dans le temps, chaque colonne dans le tableau est un saut du modèle de saut dans le temps respectif en commençant à partir d'un deuxième saut, de sorte que chaque modèle de saut dans le temps présente 24 sauts, dans lequel chaque rangée du tableau indique une distance dans le temps entre un point de référence du saut respectif et un même point de référence d'un saut immédiatement suivant en - de préférence des multiples de - durées de symbole;
dans lequel le modèle de saut en fréquence est l'un parmi les huit modèles de saut de fréquence cités dans le tableau ci-après avec, chacun, 24 sauts:

| Nr. | # de sous-paquets de données dans le cadre principal SC | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 20 | 12 | 0 | 16 | 8 | 3 | 19 | 11 | 5 | 21 | 13 | 1 | 17 | 9 | 7 | 23 | 15 | 2 | 18 | 10 | 6 | 22 | 14 |
| 2 | 3 | 19 | 11 | 7 | 23 | 15 | 2 | 18 | 10 | 5 | 21 | 13 | 4 | 20 | 12 | 0 | 16 | 8 | 1 | 17 | 9 | 6 | 22 | 14 |
| 3 | 6 | 22 | 14 | 0 | 16 | 8 | 1 | 17 | 9 | 4 | 20 | 12 | 3 | 19 | 11 | 5 | 21 | 13 | 2 | 18 | 10 | 7 | 23 | 15 |
| 4 | 3 | 19 | 11 | 1 | 17 | 9 | 4 | 20 | 12 | 5 | 21 | 13 | 2 | 18 | 10 | 7 | 23 | 15 | 6 | 22 | 14 | 0 | 16 | 8 |
| 5 | 5 | 21 | 13 | 2 | 18 | 10 | 0 | 16 | 8 | 6 | 22 | 14 | 7 | 23 | 15 | 1 | 17 | 9 | 4 | 20 | 12 | 3 | 19 | 11 |
| 6 | 1 | 17 | 9 | 3 | 19 | 11 | 4 | 20 | 12 | 6 | 22 | 14 | 7 | 23 | 15 | 5 | 21 | 13 | 2 | 18 | 10 | 0 | 16 | 8 |
| 7 | 5 | 21 | 13 | 1 | 17 | 9 | 2 | 18 | 10 | 4 | 20 | 12 | 3 | 19 | 11 | 0 | 16 | 8 | 6 | 22 | 14 | 7 | 23 | 15 |
| 8 | 3 | 19 | 11 | 6 | 22 | 14 | 5 | 21 | 13 | 1 | 17 | 9 | 7 | 23 | 15 | 2 | 18 | 10 | 0 | 16 | 8 | 4 | 20 | 12 |

dans lequel chaque rangée dans le tableau est un modèle de saut en fréquence, chaque colonne dans le tableau est un saut du modèle de saut en fréquence respectif, chaque rangée dans le tableau indique une fréquence d'émission du saut respectif du modèle de saut en fréquence respectif dans les porteuses 0 à 23.

**11.** Emetteur de données (100) selon l'une des revendications précédentes, dans lequel

- le troisième modèle de saut (140) est
- ou le premier modèle de saut (140_1) et le deuxième modèle de saut (140_2) sont, chacun, un modèle de saut dans le temps, un modèle de saut en fréquence ou une combinaison du modèle de saut dans le temps et du modèle de saut en fréquence;

dans lequel le modèle de saut dans le temps est l'un parmi les huit modèles de saut dans le temps cités dans le tableau ci-après avec, chacun, 24 sauts:

| Nr. | # de sous-paquets de données dans le cadre principal SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

dans lequel chaque rangée dans le tableau est un modèle de saut dans le temps, chaque colonne dans le tableau est un saut du modèle de saut dans le temps respectif en commençant à partir d'un deuxième saut, de sorte que chaque modèle de saut dans le temps présente 24 sauts, dans lequel chaque rangée dans le tableau indique une distance dans le temps entre un point de référence du saut respectif et un même point de référence d'un saut immédiatement suivant en - de préférence des multiples de - durées de symbole;
dans lequel le modèle de saut en fréquence est l'un parmi les huit modèles de saut en fréquence cités dans le tableau ci-après avec, chacun, 24 sauts:

| Nr. | # de sous-paquets de données dans le cadre principal SC | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

dans lequel chaque rangée dans le tableau est un modèle de saut en fréquence respectif, dans lequel chaque colonne dans le tableau est un saut du modèle de saut en fréquence respectif, dans lequel chaque rangée dans le tableau indique une fréquence d'émission du saut respectif du modèle de saut en fréquence respectif dans les porteuses 0 à 23.

**12.** Récepteur de données (110) qui est conçu pour recevoir, dans un premier mode, des données (120) à l'aide d'un premier modèle de saut (140_1) et de manière répétée à l'aide d'un deuxième modèle de saut (140_2);
dans lequel l'émetteur de données (100) est conçu pour recevoir une fois, dans un deuxième mode, des données (120) à l'aide d'un troisième modèle de saut (140);
dans lequel les modèles de saut du premier mode et du deuxième mode sont différents, de sorte que les sauts du modèle de saut du premier mode et les sauts du modèle de saut du deuxième mode soient répartis de manière différente dans le temps et/ou en fréquence;
dans lequel le récepteur de données (110) est conçu pour sélectionner le premier modèle de saut (140_1) et le deuxième modèle de saut (140_2) parmi un premier ensemble de modèles de saut, et pour sélectionner le troisième modèle de saut (140) parmi un deuxième ensemble de saut modèles;
dans lequel les modèles de saut du premier ensemble de modèles de saut et les modèles de saut du deuxième ensemble de modèles de saut sont différents.

**13.** Récepteur de données (110) selon l'une des revendications précédentes, dans lequel

- le premier modèle de saut (140_1) et le deuxième modèle de saut (140_2) sont, chacun,
- ou le troisième modèle de saut (140) est

un modèle de saut dans le temps, un modèle de saut en fréquence ou une combinaison du modèle de saut dans le temps et du modèle de saut en fréquence;

dans lequel le modèle de saut dans le temps est l'un parmi les huit modèles de saut dans le temps cités dans le tableau ci-après avec, chacun, 24 sauts:

| | # de sous-paquets de données dans le cadre principal SC | | | | | | | | | | | | | | | | | | | | | | |
|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 545 | 373 | 319 | 443 | 373 | 319 | 349 | 373 | 319 | 454 | 373 | 319 | 578 | 373 | 319 | 436 | 373 | 319 | 398 | 373 | 319 |
| 2 | 373 | 319 | 371 | 373 | 319 | 410 | 373 | 319 | 363 | 373 | 319 | 354 | 373 | 319 | 379 | 373 | 319 | 657 | 373 | 319 | 376 | 373 | 319 |
| 3 | 373 | 319 | 414 | 373 | 319 | 502 | 373 | 319 | 433 | 373 | 319 | 540 | 373 | 319 | 428 | 373 | 319 | 467 | 373 | 319 | 409 | 373 | 319 |
| 4 | 373 | 319 | 396 | 373 | 319 | 516 | 373 | 319 | 631 | 373 | 319 | 471 | 373 | 319 | 457 | 373 | 319 | 416 | 373 | 319 | 354 | 373 | 319 |
| 5 | 373 | 319 | 655 | 373 | 319 | 416 | 373 | 319 | 367 | 373 | 319 | 400 | 373 | 319 | 415 | 373 | 319 | 342 | 373 | 319 | 560 | 373 | 319 |
| 6 | 373 | 319 | 370 | 373 | 319 | 451 | 373 | 319 | 465 | 373 | 319 | 593 | 373 | 319 | 545 | 373 | 319 | 380 | 373 | 319 | 365 | 373 | 319 |
| 7 | 373 | 319 | 393 | 373 | 319 | 374 | 373 | 319 | 344 | 373 | 319 | 353 | 373 | 319 | 620 | 373 | 319 | 503 | 373 | 319 | 546 | 373 | 319 |
| 8 | 373 | 319 | 367 | 373 | 319 | 346 | 373 | 319 | 584 | 373 | 319 | 579 | 373 | 319 | 519 | 373 | 319 | 351 | 373 | 319 | 486 | 373 | 319 |

dans lequel chaque rangée dans le tableau est un modèle de saut dans le temps, dans lequel chaque colonne dans le tableau est un saut du modèle de saut dans le temps respectif en commençant à partir d'un deuxième saut, de sorte que chaque modèle de saut dans le temps présente 24 sauts, dans lequel chaque rangée dans le tableau indique une distance dans le temps entre un point de référence du saut respectif et un même point de référence d'un saut immédiatement suivant en - de préférence des multiples de - durées de symbole;
dans lequel le modèle de saut en fréquence est l'un parmi les huit modèles de saut en fréquence cités dans le tableau ci-après avec, chacun, 24 sauts:

| | # de sous-paquets de données dans le cadre principal SC | | | | | | | | | | | | | | | | | | | | | | | |
|---|---|---|---|---|---|---|---|---|---|---|---|---|---|---|---|---|---|---|---|---|---|---|---|---|
| Nr. | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 20 | 12 | 0 | 16 | 8 | 3 | 19 | 11 | 5 | 21 | 13 | 1 | 17 | 9 | 7 | 23 | 15 | 2 | 18 | 10 | 6 | 22 | 14 |
| 2 | 3 | 19 | 11 | 7 | 23 | 15 | 2 | 18 | 10 | 5 | 21 | 13 | 4 | 20 | 12 | 0 | 16 | 8 | 1 | 17 | 9 | 6 | 22 | 14 |
| 3 | 6 | 22 | 14 | 0 | 16 | 8 | 1 | 17 | 9 | 4 | 20 | 12 | 3 | 19 | 11 | 5 | 21 | 13 | 2 | 18 | 10 | 7 | 23 | 15 |
| 4 | 3 | 19 | 11 | 1 | 17 | 9 | 4 | 20 | 12 | 5 | 21 | 13 | 2 | 18 | 10 | 7 | 23 | 15 | 6 | 22 | 14 | 0 | 16 | 8 |
| 5 | 5 | 21 | 13 | 2 | 18 | 10 | 0 | 16 | 8 | 6 | 22 | 14 | 7 | 23 | 15 | 1 | 17 | 9 | 4 | 20 | 12 | 3 | 19 | 11 |
| 6 | 1 | 17 | 9 | 3 | 19 | 11 | 4 | 20 | 12 | 6 | 22 | 14 | 7 | 23 | 15 | 5 | 21 | 13 | 2 | 18 | 10 | 0 | 16 | 8 |
| 7 | 5 | 21 | 13 | 1 | 17 | 9 | 2 | 18 | 10 | 4 | 20 | 12 | 3 | 19 | 11 | 0 | 16 | 8 | 6 | 22 | 14 | 7 | 23 | 15 |
| 8 | 3 | 19 | 11 | 6 | 22 | 14 | 5 | 21 | 13 | 1 | 17 | 9 | 7 | 23 | 15 | 2 | 18 | 10 | 0 | 16 | 8 | 4 | 20 | 12 |

dans lequel chaque rangée dans le tableau est un modèle de saut en fréquence, dans lequel chaque colonne dans le tableau est un saut du modèle de saut en fréquence respectif, dans lequel chaque rangée dans le tableau indique une fréquence d'émission du saut respectif du modèle de saut en fréquence respectif dans les porteuses 0 à 23.

**14.** Récepteur de données (110) selon l'une des revendications précédentes, dans lequel

- le troisième modèle de saut (140) est
- ou le premier modèle de saut (140_1) et le deuxième modèle de saut (140_2) sont, chacun, un modèle de saut dans le temps, un modèle de saut en fréquence ou une combinaison du modèle de saut dans le temps et du modèle de saut en fréquence;

dans lequel le modèle de saut dans le temps est l'un parmi les huit modèles de saut dans le temps cités dans le tableau ci-après avec, chacun, 24 sauts:

| Nr. | # de sous-paquets de données dans le cadre principal SC | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

dans lequel chaque rangée dans le tableau est un modèle de saut dans le temps, dans lequel chaque colonne dans tableau est un saut du modèle de saut dans le temps respectif en commençant à partir d'un deuxième saut, de sorte que chaque modèle de saut dans le temps présente 24 sauts, dans lequel chaque rangée du tableau indique une distance dans le temps entre un point de référence du saut respectif et un même point de référence d'un saut immédiatement suivant en - de préférence des multiples de - durées de symbole;
dans lequel le modèle de saut en fréquence est l'un parmi les huit modèles de saut en fréquence cités dans le tableau ci-après avec, chacun, 24 sauts:

| Nr. | # de sous-paquets de données dans le cadre principal SC | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

dans lequel chaque rangée du tableau est un modèle de saut en fréquence, dans lequel chaque colonne du tableau est un saut du modèle de saut en fréquence respectif, dans lequel chaque rangée du tableau indique une fréquence d'émission du saut respectif du modèle de saut en fréquence respectif dans les porteuses 0 à 23.

**15.** Système, aux caractéristiques suivantes:

un émetteur de données (100) selon l'une quelconque des revendications 1 à 11; et
un récepteur de données (110) selon l'une des revendications 12 à 14.

**16.** Procédé (160) pour envoyer des données par un émetteur de données, le procédé comprenant le fait de:

envoyer (162) des données dans un premier mode à l'aide d'un premier modèle de saut et de manière répétée à l'aide d'un deuxième modèle de saut;
envoyer des données (164) dans un deuxième mode une fois à l'aide d'un troisième modèle de saut;
dans lequel les modèles de saut du premier mode et du deuxième mode sont différents, de sorte que les sauts du modèle de saut du premier mode et les sauts du modèle de saut du deuxième mode soient répartis de manière différente dans le temps et/ou en fréquence,
dans lequel le premier modèle de saut et le deuxième modèle de saut sont sélectionnés parmi un premier ensemble de modèles de saut, et dans lequel le troisième modèle de saut est sélectionné parmi un deuxième ensemble de modèles de saut,
dans lequel les modèles de saut du premier ensemble de modèles de saut et les modèles de saut du deuxième ensemble de modèles de saut sont différents.

**17.** Procédé (170) pour recevoir des données par un récepteur de données, le procédé comprenant le fait de:

recevoir (172) des données dans un premier mode à l'aide d'un premier modèle de saut et de manière répétée à l'aide d'un deuxième modèle de saut;
recevoir (174) des données dans un deuxième mode une fois à l'aide d'un troisième modèle de saut;
dans lequel les modèles de saut du premier mode et du deuxième mode sont différents, de sorte que les sauts du modèle de saut du premier mode et les sauts du modèle de saut du deuxième mode soient répartis de manière différente dans le temps et/ou en fréquence,
dans lequel le premier modèle de saut et le deuxième modèle de saut sont sélectionnés parmi un premier ensemble de modèles de saut, et dans lequel le troisième modèle de saut est sélectionné parmi un deuxième ensemble de modèles de saut,
dans lequel les modèles de saut du premier ensemble de modèles de saut et les modèles de saut du deuxième ensemble de modèles de saut sont différents.

**18.** Programme d'ordinateur comportant des instructions qui, lorsque le programme est exécuté par un ordinateur, amènent ce dernier à réaliser le procédé selon l'une des revendications 16 à 17.

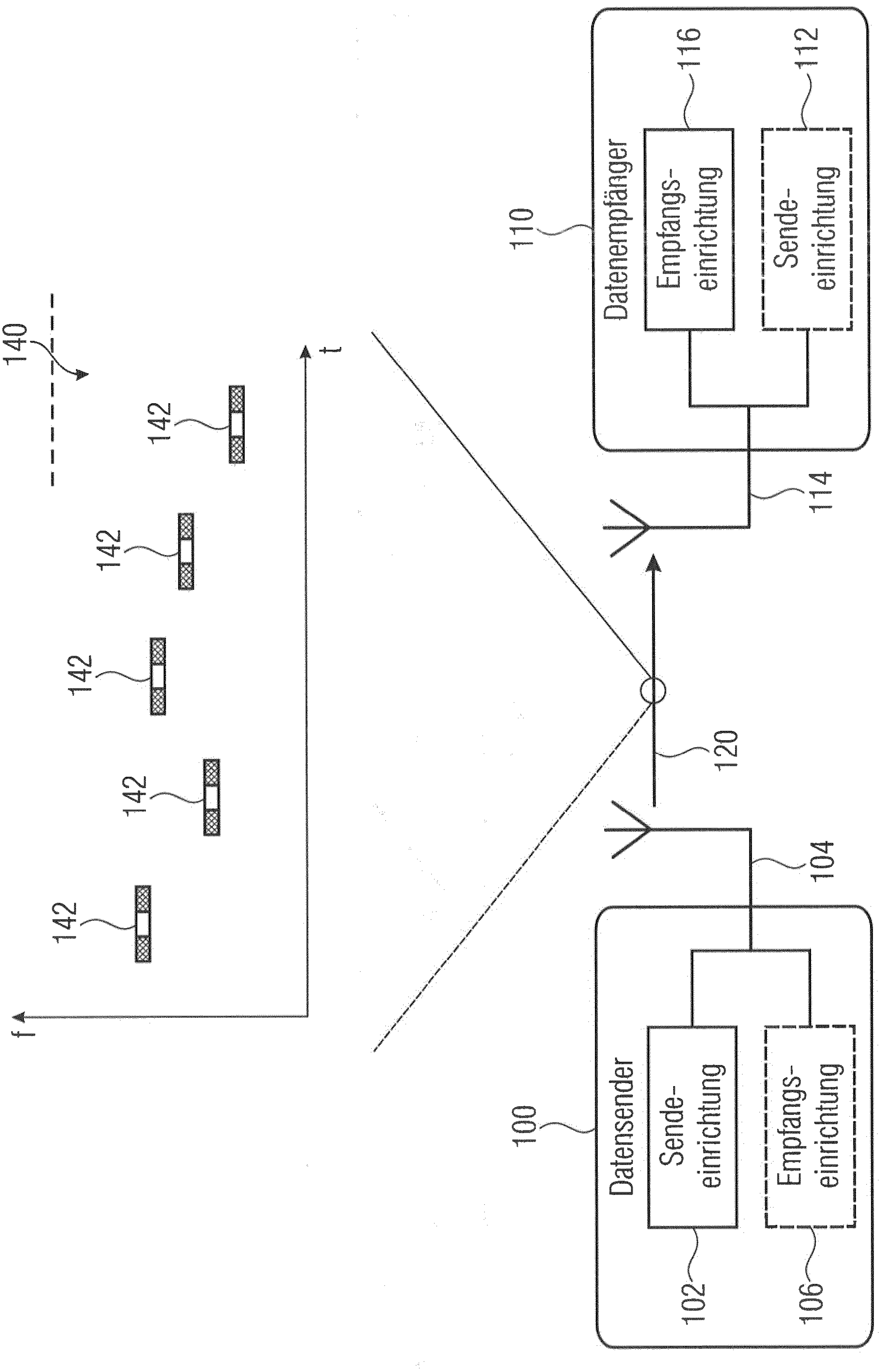

140
142
142
142
142
142
f
t
110
Datenempfänger
116
Empfangs-
einrichtung
112
Sende-
einrichtung
114
120
104
100
Datensender
Sende-
einrichtung
Empfangs-
einrichtung
102
106


Fig. 1

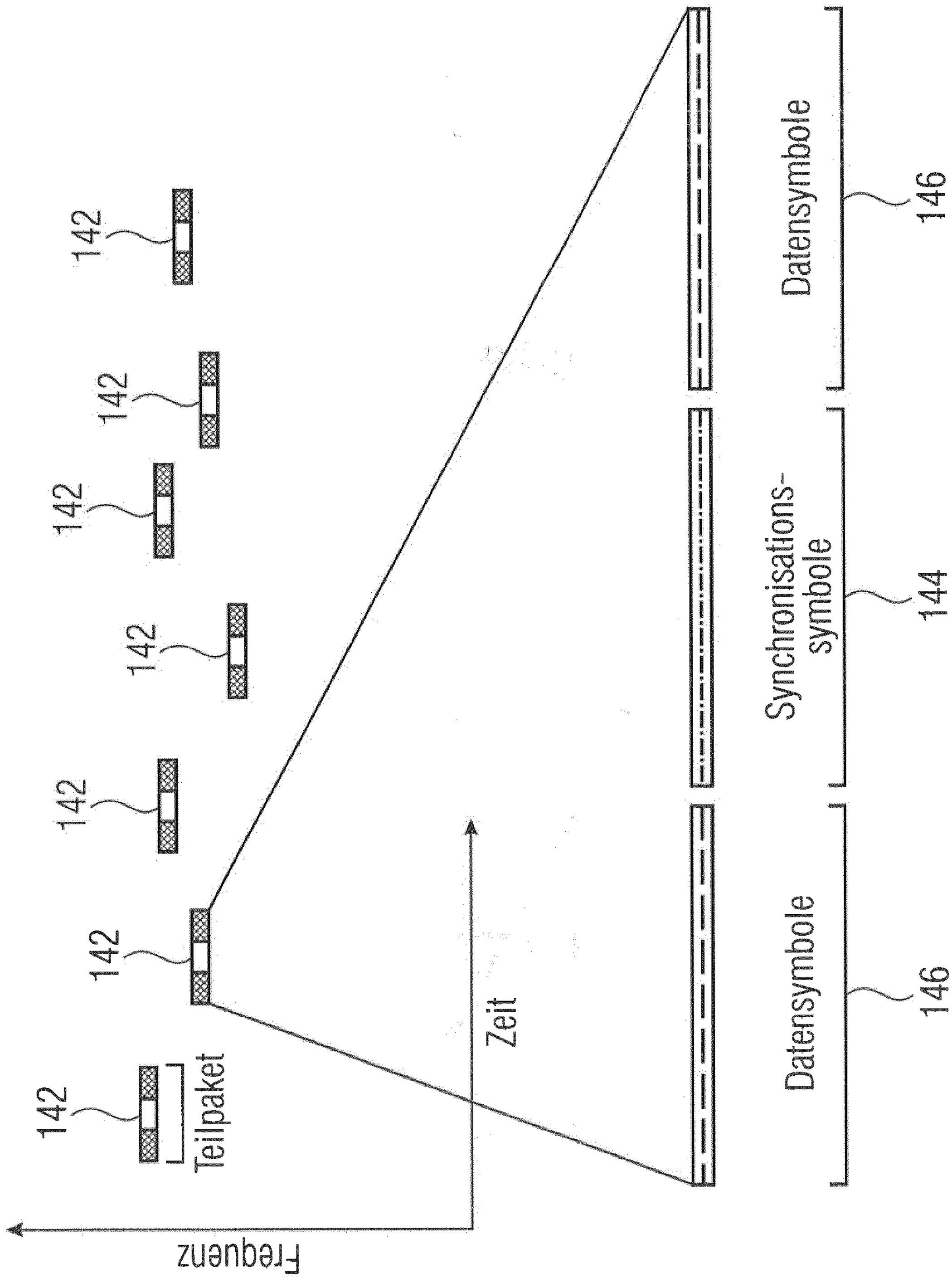
142
142
142
142
142
142
142
Teilpaket
Zeit
Frequenz
Datensymbole
Synchronisations-
symbole
Datensymbole
146
144
146

Fig. 2

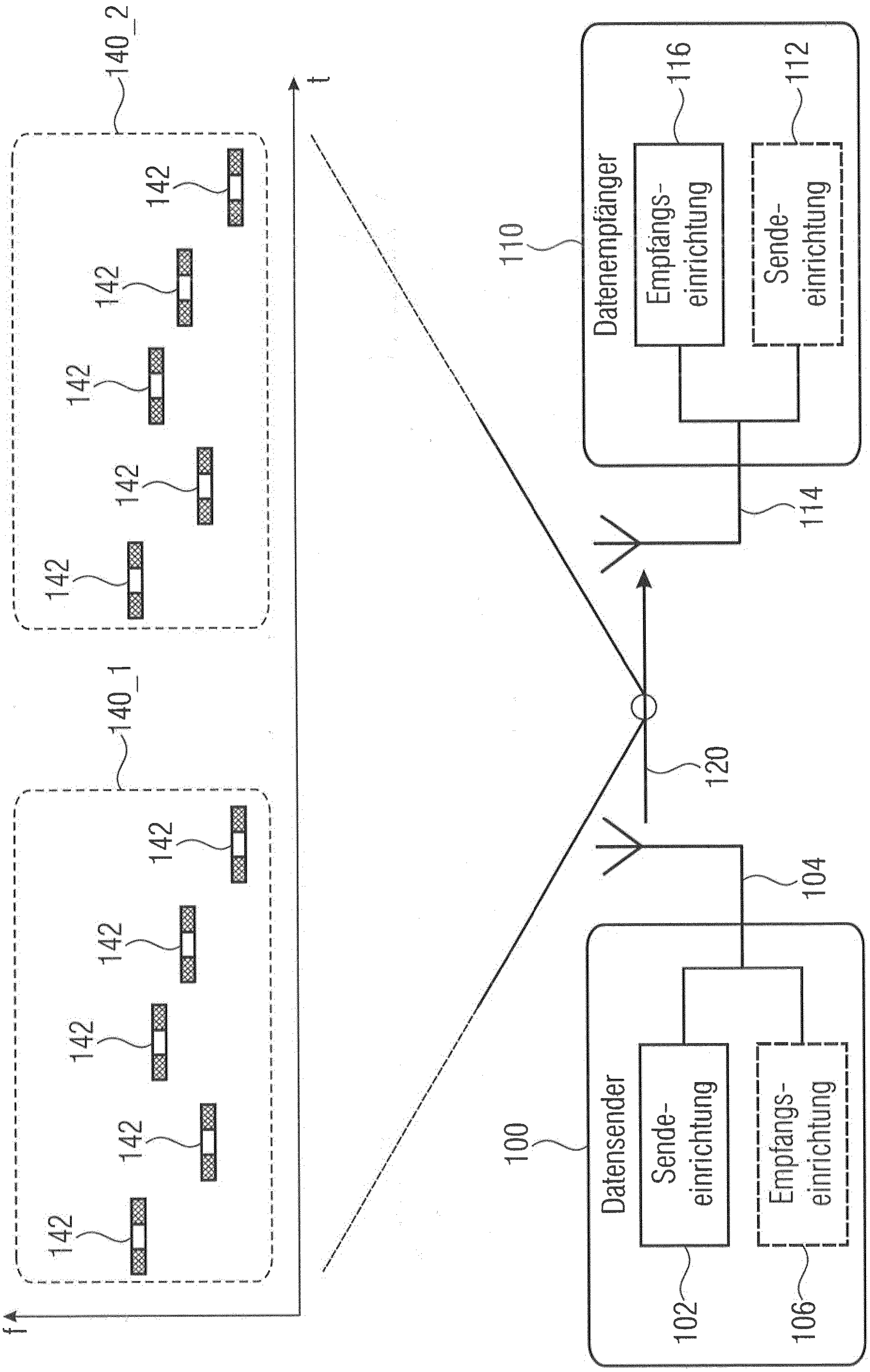

140_2
140_1
142
t
f
120
110
Datenempfänger
Empfangs-
einrichtung
116
Sende-
einrichtung
112
114
100
Datensender
Sende-
einrichtung
102
Empfangs-
einrichtung
106
104


Fig. 3

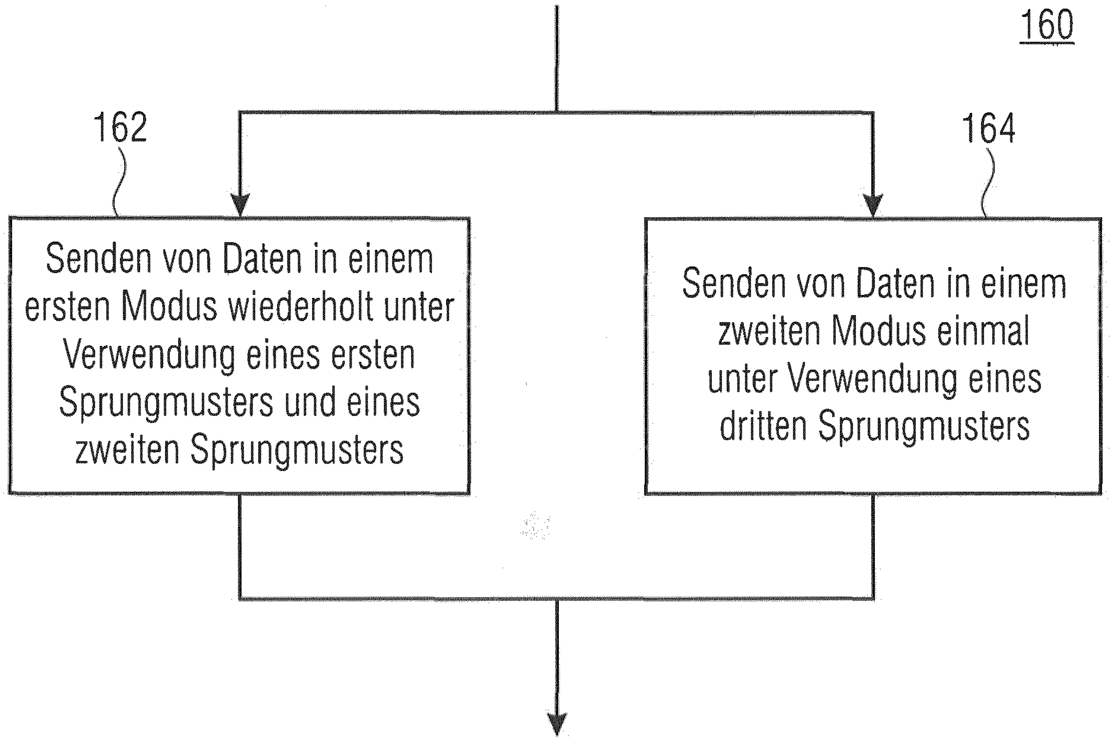
160
162
164
Senden von Daten in einem ersten Modus wiederholt unter Verwendung eines ersten Sprungmusters und eines zweiten Sprungmusters
Senden von Daten in einem zweiten Modus einmal unter Verwendung eines dritten Sprungmusters

Fig. 4

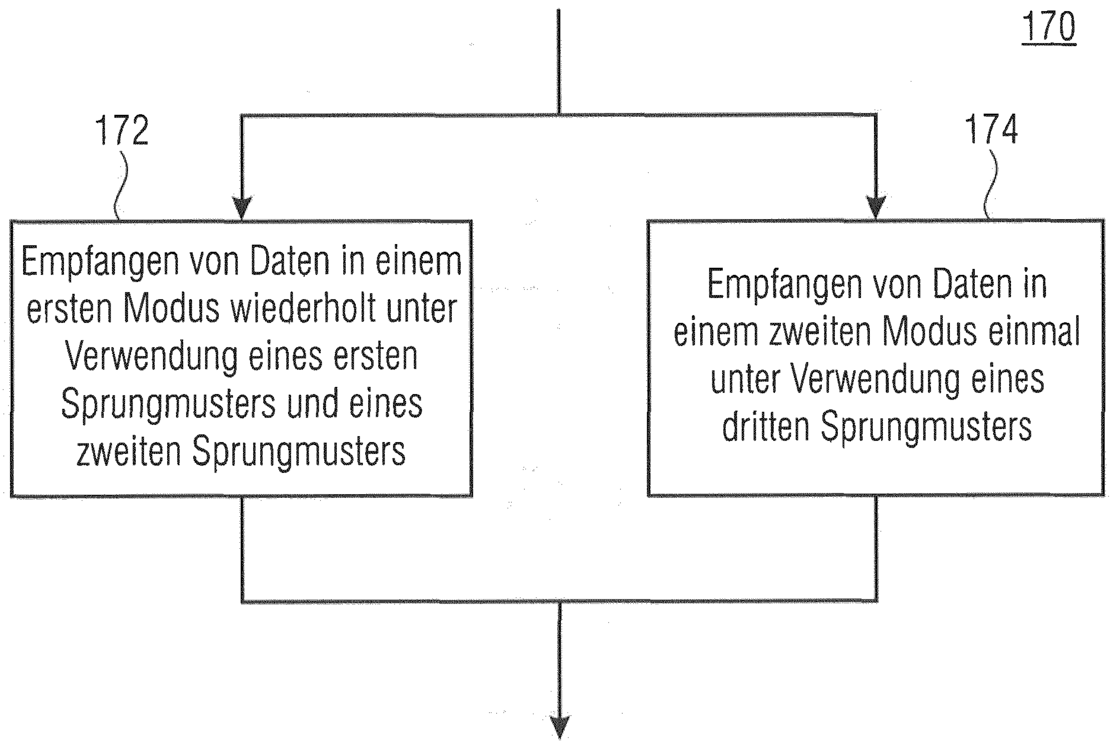
170
172
174
Empfangen von Daten in einem ersten Modus wiederholt unter Verwendung eines ersten Sprungmusters und eines zweiten Sprungmusters
Empfangen von Daten in einem zweiten Modus einmal unter Verwendung eines dritten Sprungmusters

Fig. 5

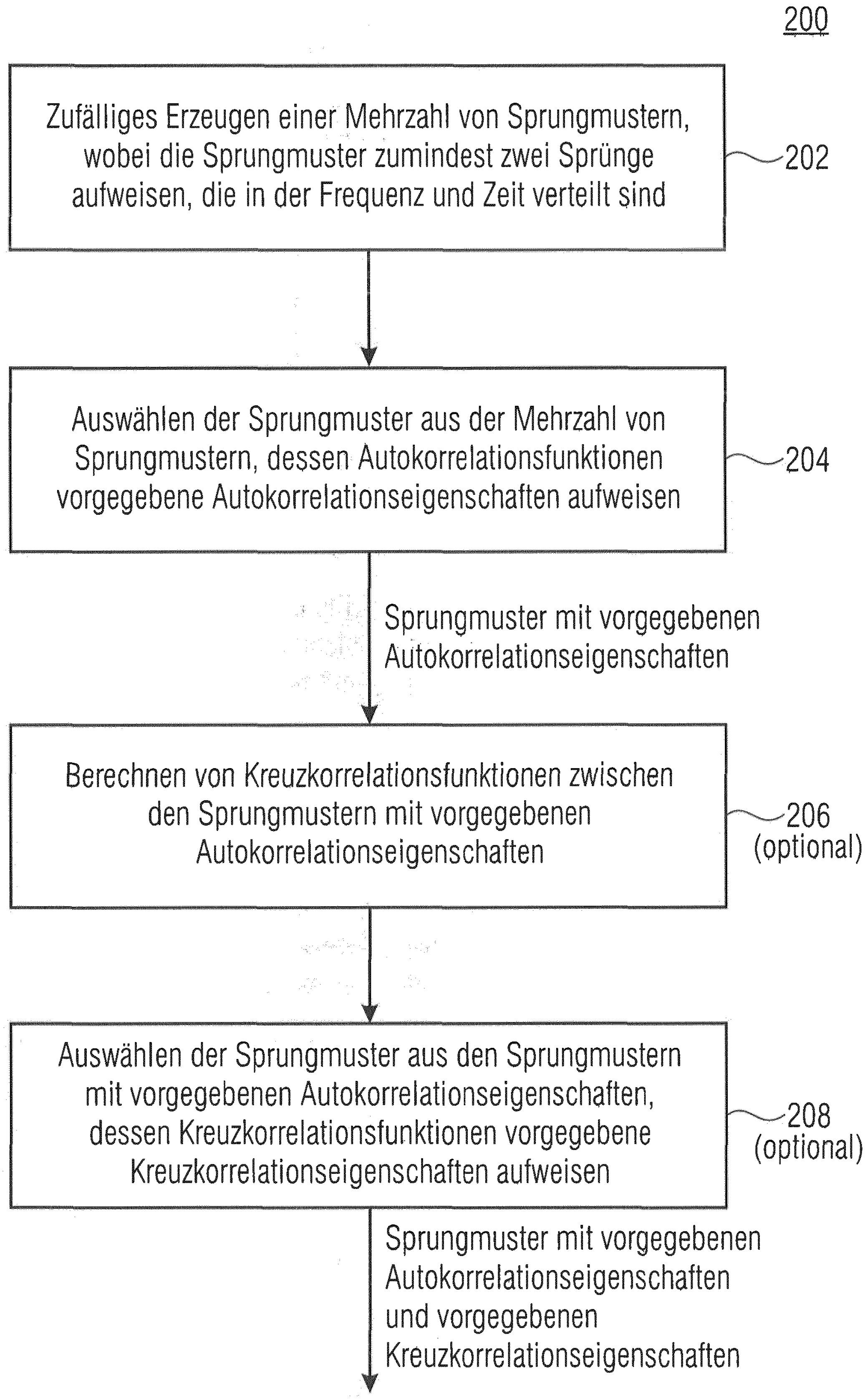
200
Zufälliges Erzeugen einer Mehrzahl von Sprungmustern, wobei die Sprungmuster zumindest zwei Sprünge aufweisen, die in der Frequenz und Zeit verteilt sind
202
Auswählen der Sprungmuster aus der Mehrzahl von Sprungmustern, dessen Autokorrelationsfunktionen vorgegebene Autokorrelationseigenschaften aufweisen
204
Sprungmuster mit vorgegebenen Autokorrelationseigenschaften
Berechnen von Kreuzkorrelationsfunktionen zwischen den Sprungmustern mit vorgegebenen Autokorrelationseigenschaften
206 (optional)
Auswählen der Sprungmuster aus den Sprungmustern mit vorgegebenen Autokorrelationseigenschaften, dessen Kreuzkorrelationsfunktionen vorgegebene Kreuzkorrelationseigenschaften aufweisen
208 (optional)
Sprungmuster mit vorgegebenen Autokorrelationseigenschaften und vorgegebenen Kreuzkorrelationseigenschaften

Fig. 6

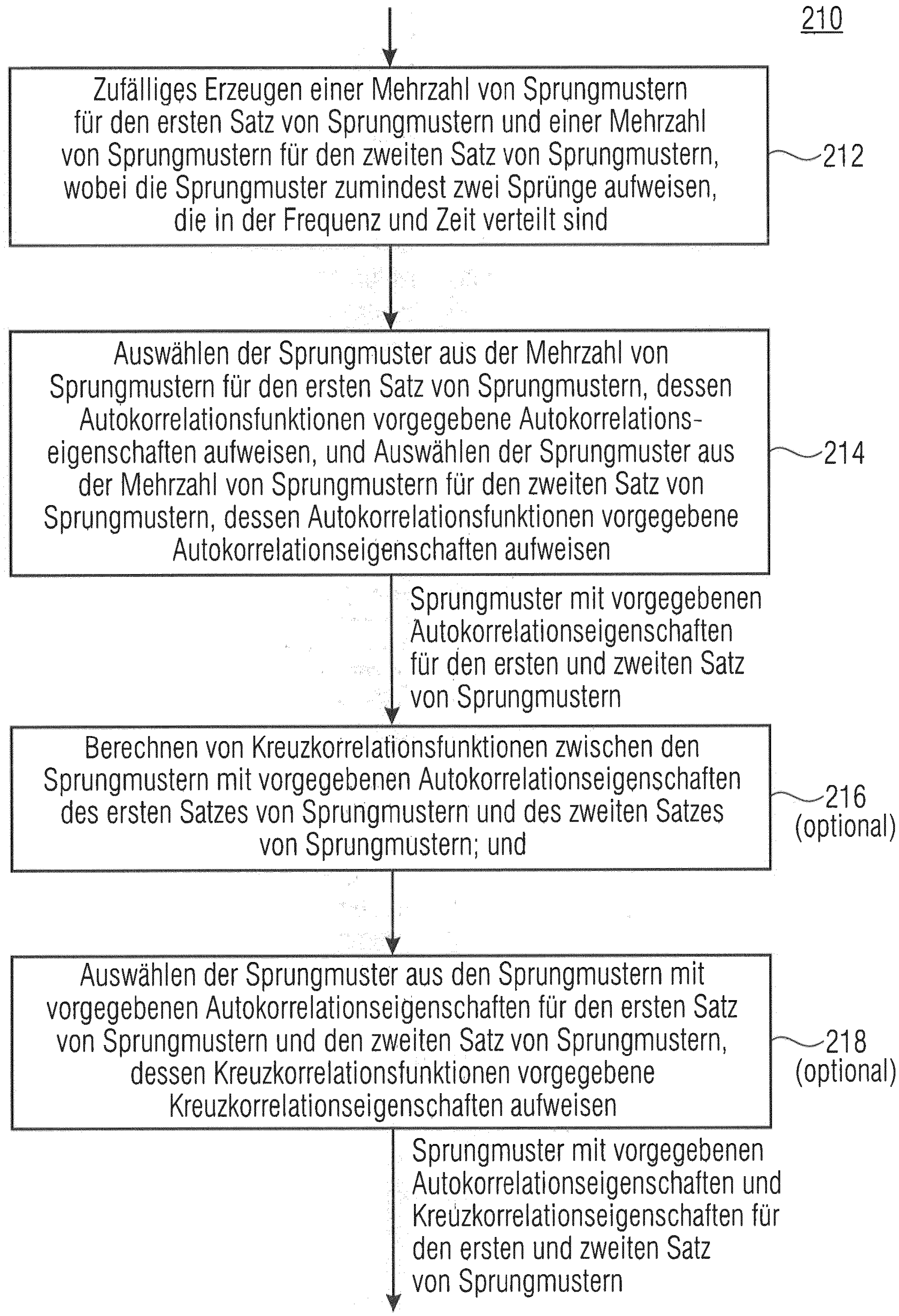
210
Zufälliges Erzeugen einer Mehrzahl von Sprungmustern für den ersten Satz von Sprungmustern und einer Mehrzahl von Sprungmustern für den zweiten Satz von Sprungmustern, wobei die Sprungmuster zumindest zwei Sprünge aufweisen, die in der Frequenz und Zeit verteilt sind
212
Auswählen der Sprungmuster aus der Mehrzahl von Sprungmustern für den ersten Satz von Sprungmustern, dessen Autokorrelationsfunktionen vorgegebene Autokorrelationseigenschaften aufweisen, und Auswählen der Sprungmuster aus der Mehrzahl von Sprungmustern für den zweiten Satz von Sprungmustern, dessen Autokorrelationsfunktionen vorgegebene Autokorrelationseigenschaften aufweisen
214
Sprungmuster mit vorgegebenen Autokorrelationseigenschaften für den ersten und zweiten Satz von Sprungmustern
Berechnen von Kreuzkorrelationsfunktionen zwischen den Sprungmustern mit vorgegebenen Autokorrelationseigenschaften des ersten Satzes von Sprungmustern und des zweiten Satzes von Sprungmustern; und
216 (optional)
Auswählen der Sprungmuster aus den Sprungmustern mit vorgegebenen Autokorrelationseigenschaften für den ersten Satz von Sprungmustern und den zweiten Satz von Sprungmustern, dessen Kreuzkorrelationsfunktionen vorgegebene Kreuzkorrelationseigenschaften aufweisen
218 (optional)
Sprungmuster mit vorgegebenen Autokorrelationseigenschaften und Kreuzkorrelationseigenschaften für den ersten und zweiten Satz von Sprungmustern

Fig. 7

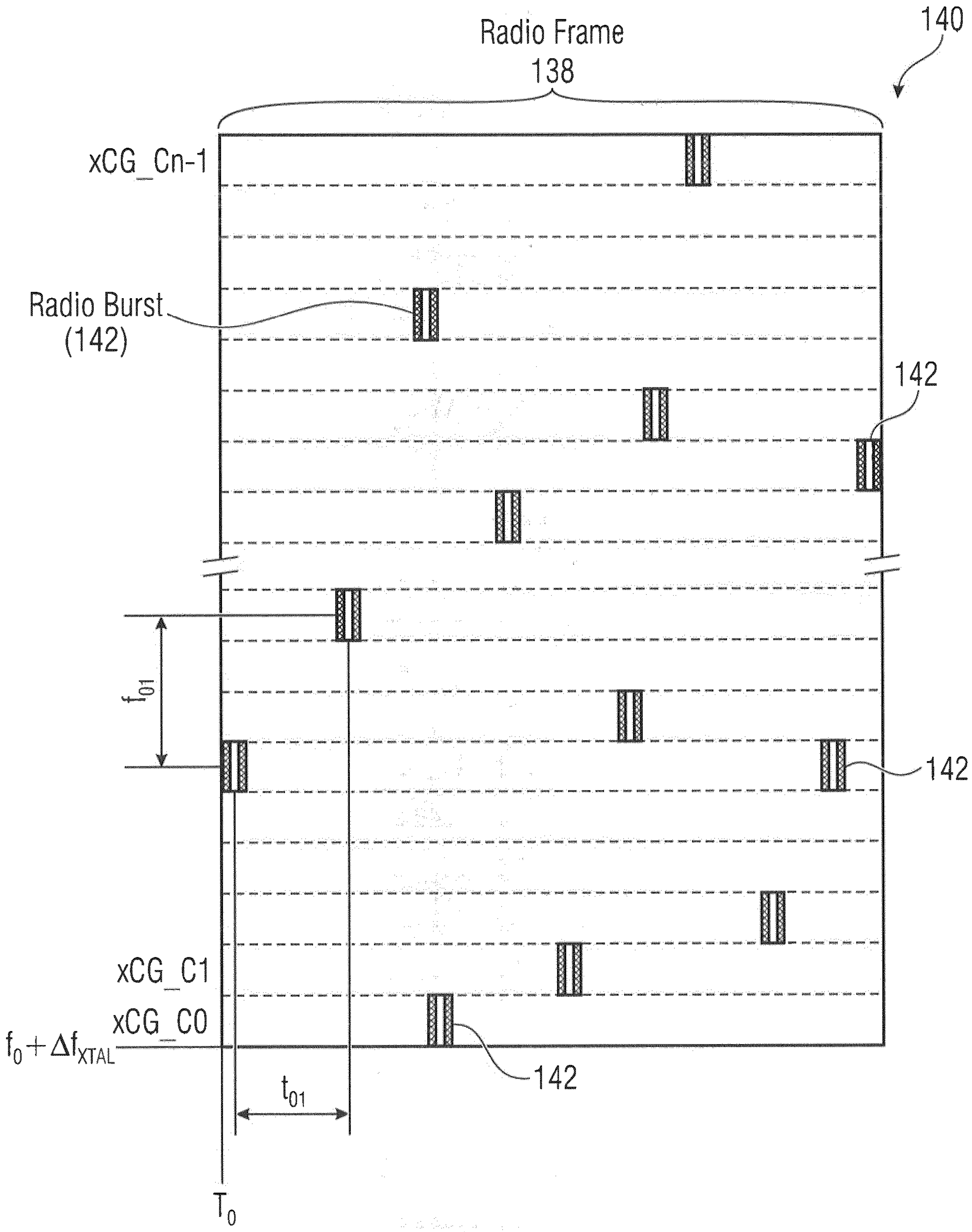
Radio Frame
138
140
xCG_Cn-1
Radio Burst
(142)
142
$f_{01}$
142
xCG_C1
xCG_C0
$f_0+\Delta f_{XTAL}$
142
$t_{01}$
$T_0$

Fig. 8a

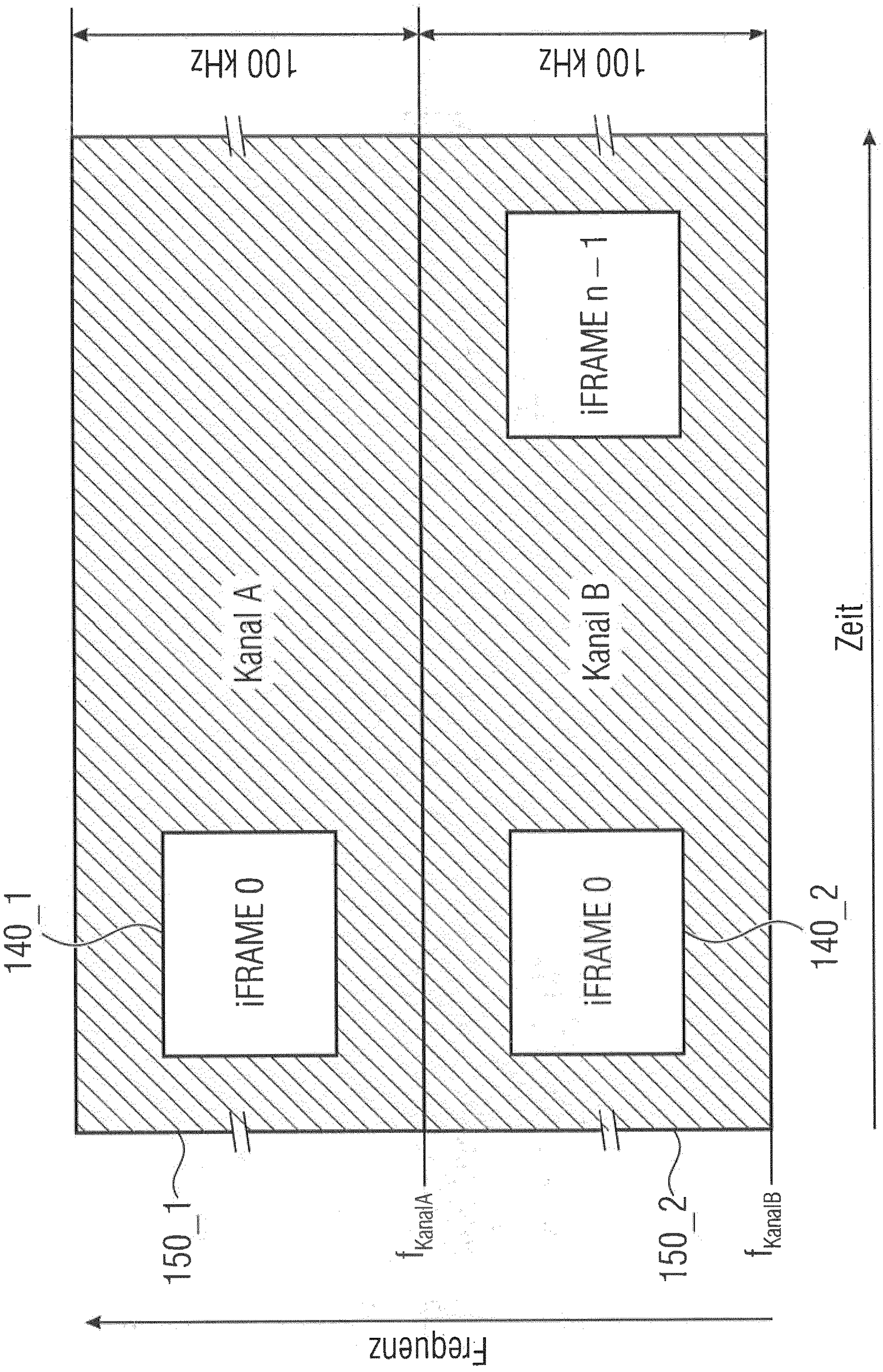
100 KHz
100 KHz
140_1
iFRAME 0
Kanal A
iFRAME 0
140_2
Kanal B
iFRAME n − 1
150_1
$f_{KanalA}$
150_2
$f_{KanalB}$
Frequenz
Zeit

Fig. 8b

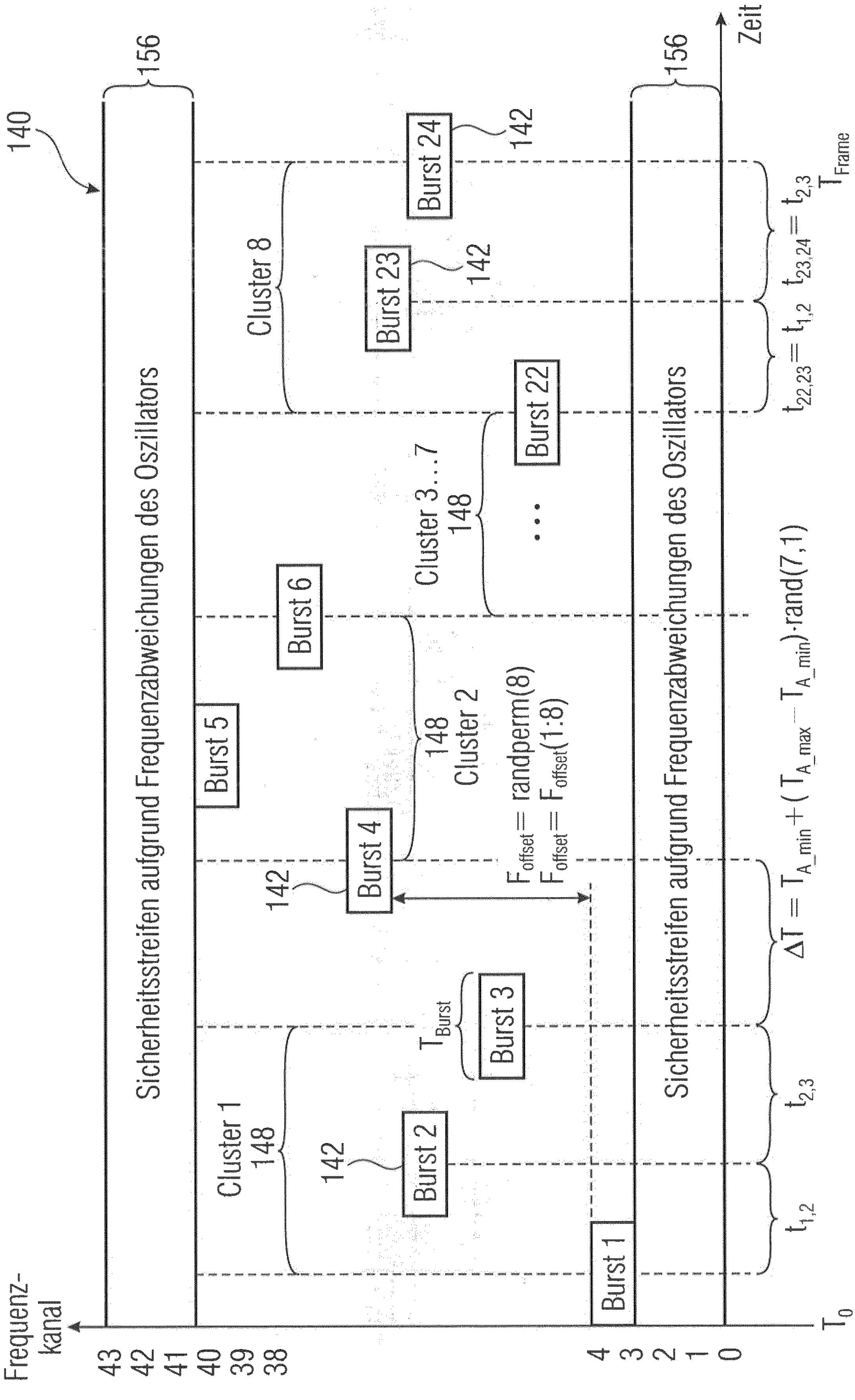

140
156
Frequenz-
kanal
43
42
41
40
39
38
4
3
2
1
0
Sicherheitsstreifen aufgrund Frequenzabweichungen des Oszillators
Sicherheitsstreifen aufgrund Frequenzabweichungen des Oszillators
Burst 1
Burst 2
Burst 3
Burst 4
Burst 5
Burst 6
Burst 22
Burst 23
Burst 24
142
148
Cluster 1
Cluster 2
Cluster 3…7
Cluster 8
$T_{Burst}$
$F_{offset}$ = randperm(8)
$F_{offset}$ = $F_{offset}$(1:8)
$t_{1,2}$
$t_{2,3}$
$\Delta T = T_{A_min} + (T_{A_max} - T_{A_min}) \cdot rand(7,1)$
$t_{22,23} = t_{1,2}$
$t_{23,24} = t_{2,3}$
$T_{Frame}$
$T_0$
Zeit


Fig. 9

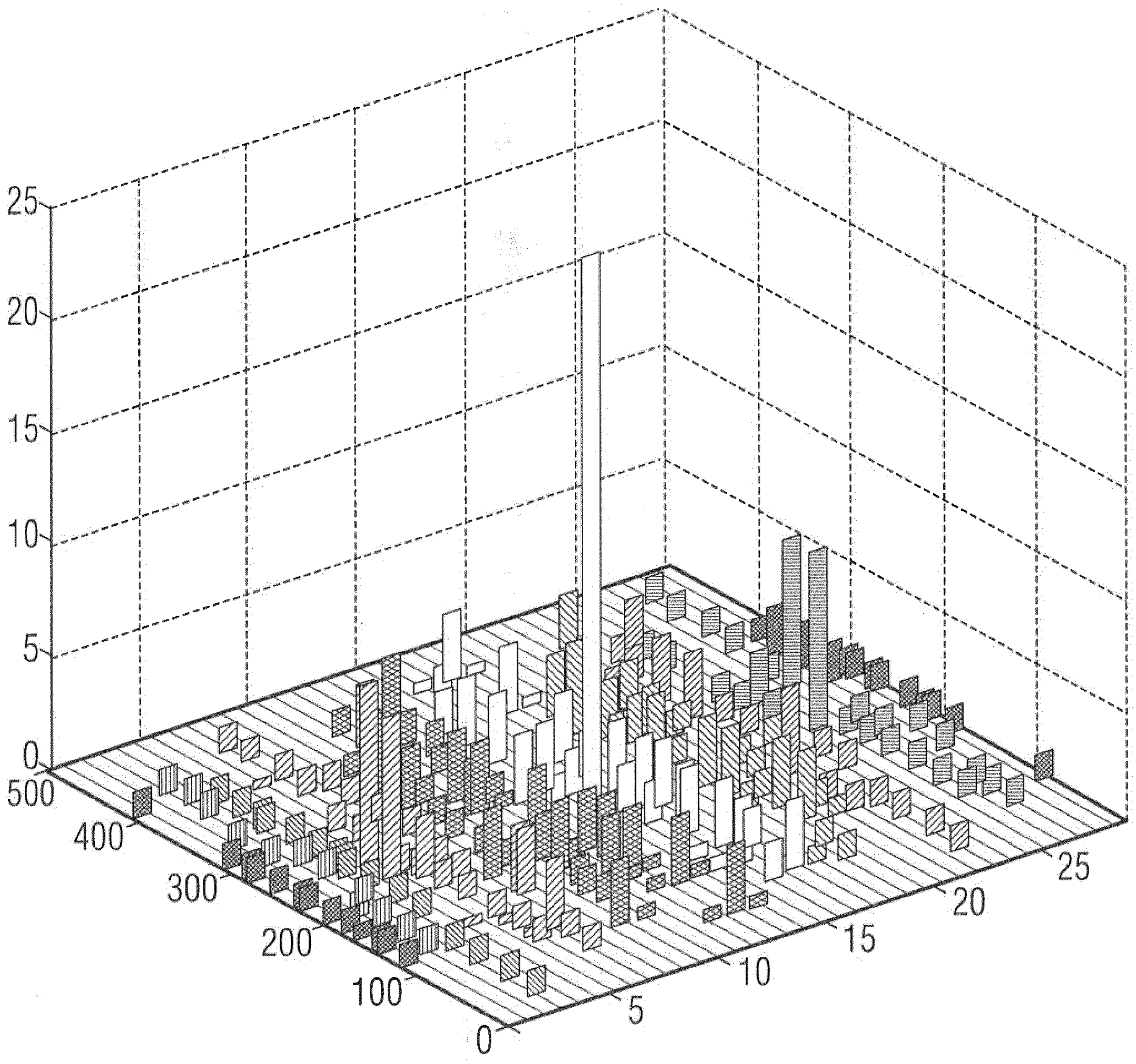


Fig. 10a

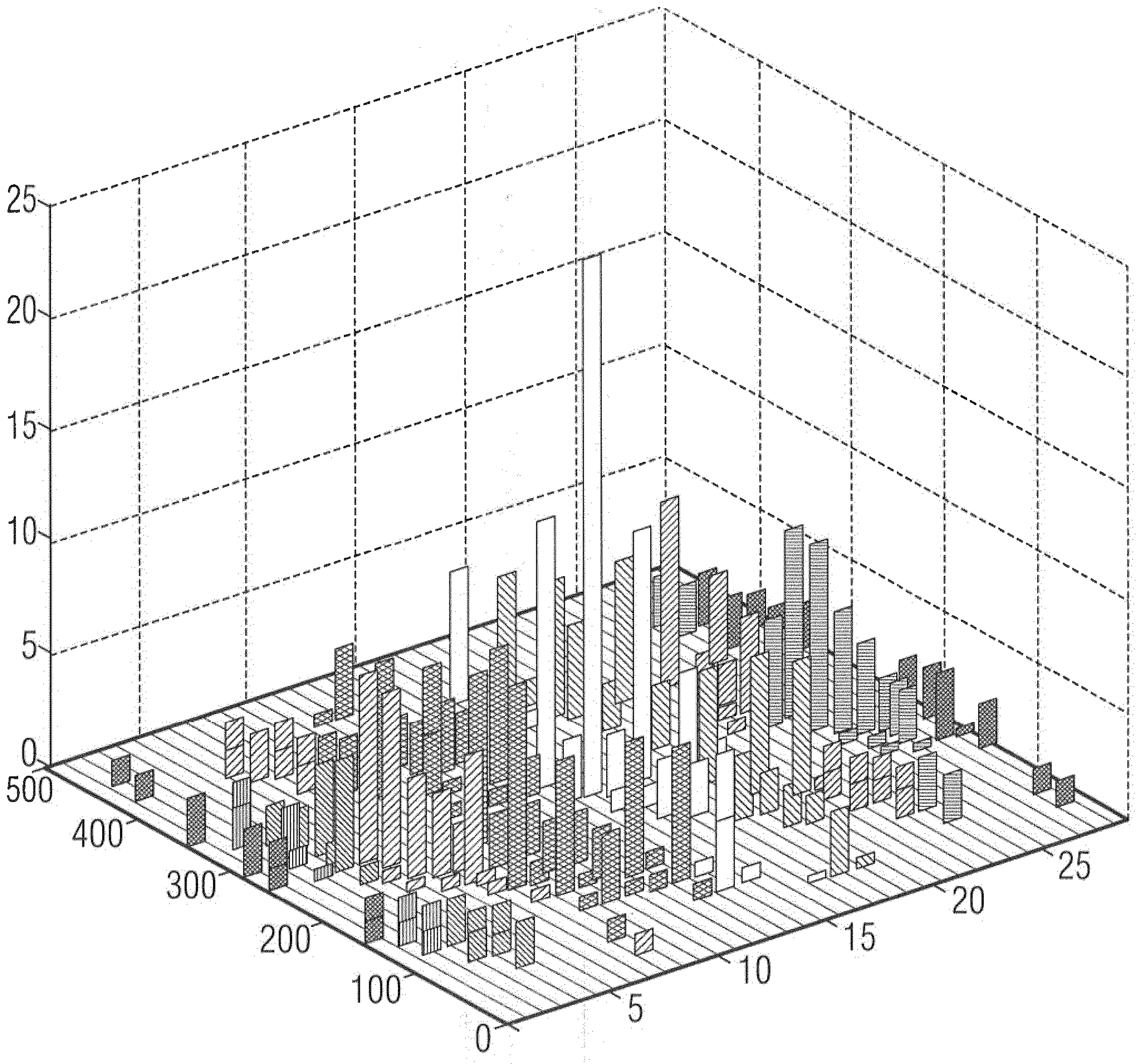


Fig. 10b

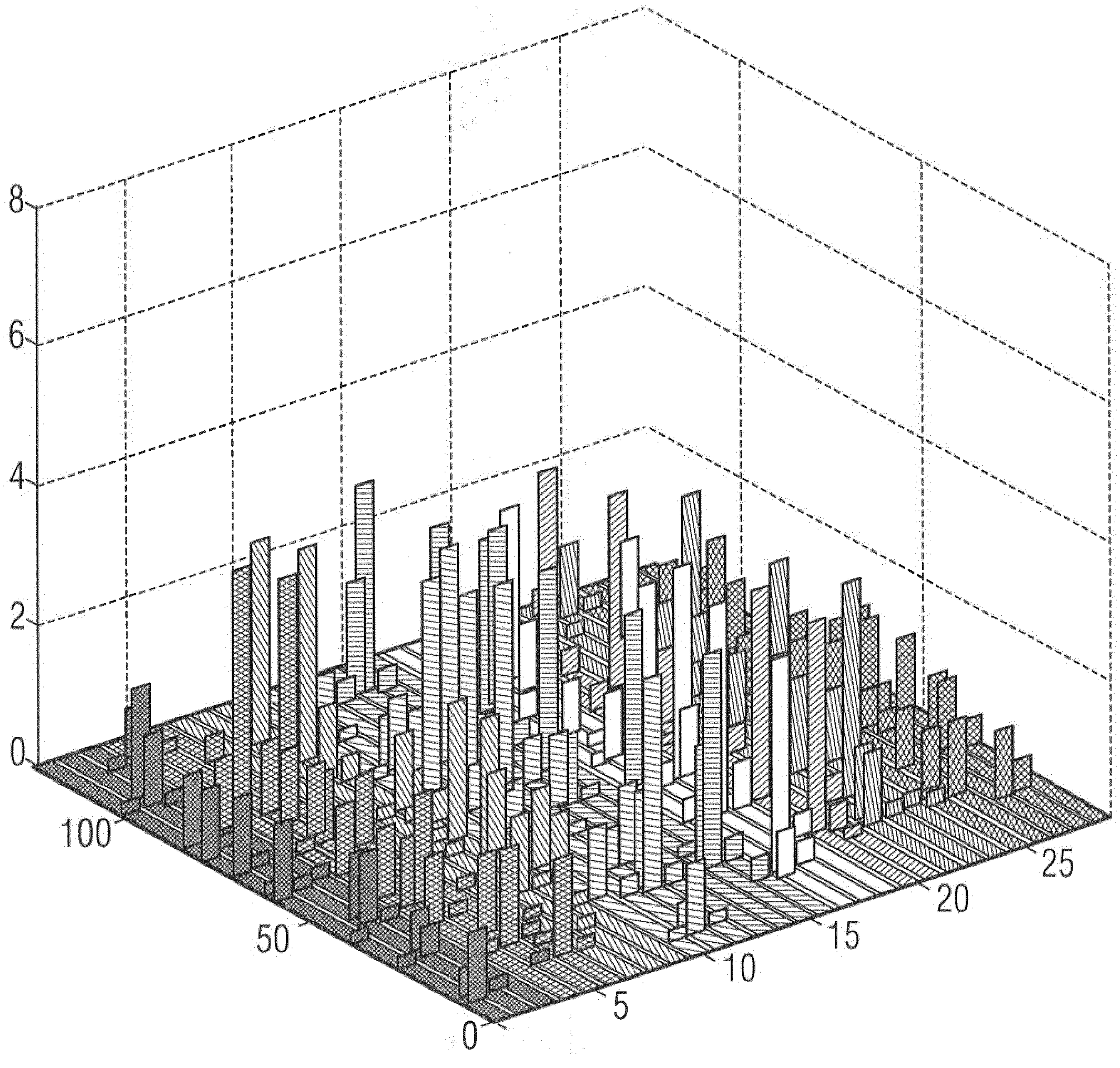


Fig. 11a

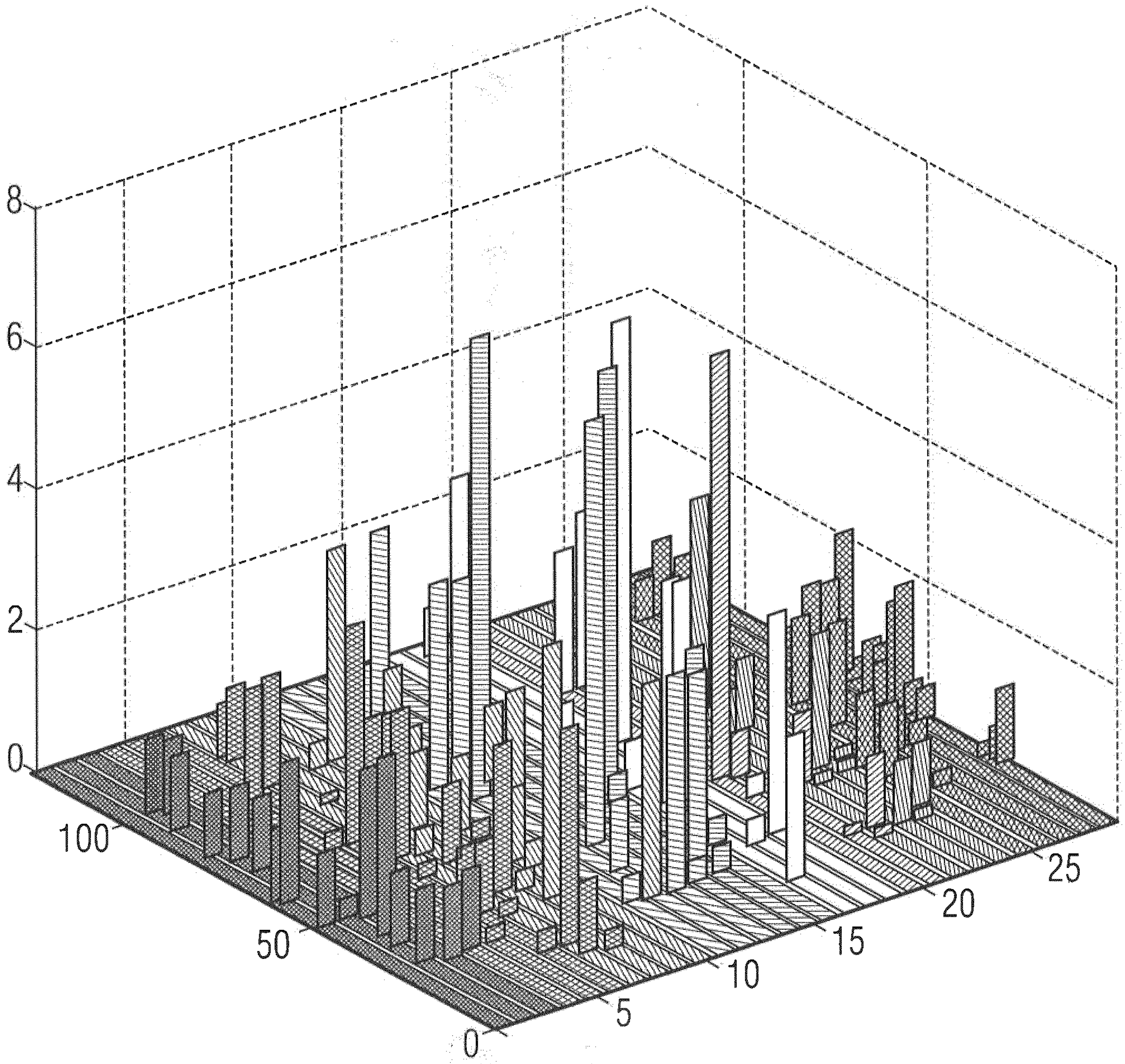


Fig. 11b

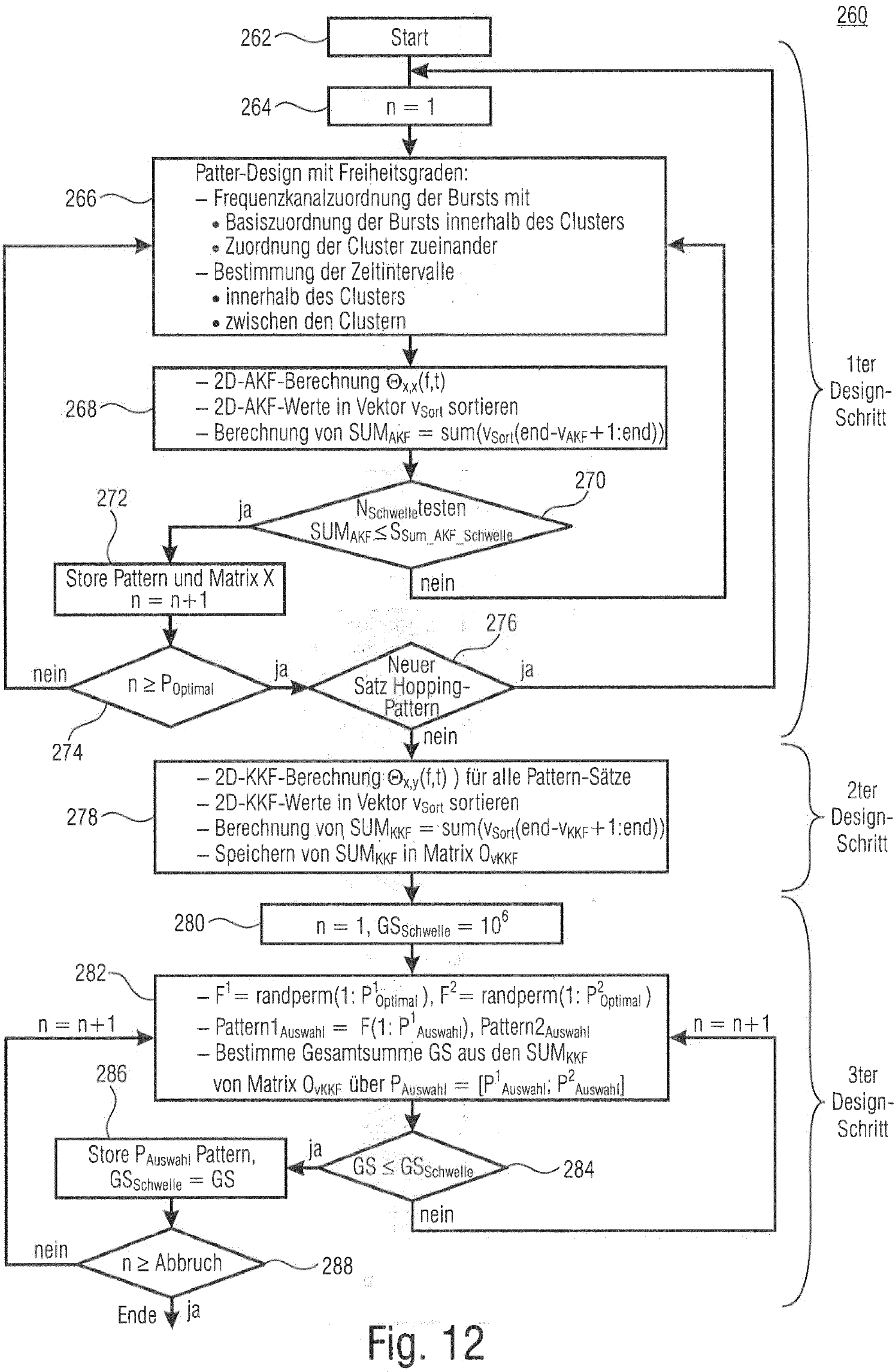
260
262
Start
264
n = 1
266
Patter-Design mit Freiheitsgraden:
– Frequenzkanalzuordnung der Bursts mit
• Basiszuordnung der Bursts innerhalb des Clusters
• Zuordnung der Cluster zueinander
– Bestimmung der Zeitintervalle
• innerhalb des Clusters
• zwischen den Clustern
268
– 2D-AKF-Berechnung $\Theta_{x,x}(f,t)$
– 2D-AKF-Werte in Vektor $v_{Sort}$ sortieren
– Berechnung von $SUM_{AKF} = sum(v_{Sort}(end-v_{AKF}+1:end))$
270
$N_{Schwelle}$testen
$SUM_{AKF} \leq S_{Sum_AKF_Schwelle}$
ja
nein
272
Store Pattern und Matrix X
n = n+1
274
$n \geq P_{Optimal}$
nein
ja
276
Neuer Satz Hopping-Pattern
ja
nein
1ter Design-Schritt
278
– 2D-KKF-Berechnung $\Theta_{x,y}(f,t)$ ) für alle Pattern-Sätze
– 2D-KKF-Werte in Vektor $v_{Sort}$ sortieren
– Berechnung von $SUM_{KKF} = sum(v_{Sort}(end-v_{KKF}+1:end))$
– Speichern von $SUM_{KKF}$ in Matrix $O_{vKKF}$
2ter Design-Schritt
280
$n = 1, GS_{Schwelle} = 10^6$
282
– $F^1 = randperm(1: P^1_{Optimal}), F^2 = randperm(1: P^2_{Optimal})$
– $Pattern1_{Auswahl} = F(1: P^1_{Auswahl}), Pattern2_{Auswahl}$
– Bestimme Gesamtsumme GS aus den $SUM_{KKF}$
von Matrix $O_{vKKF}$ über $P_{Auswahl} = [P^1_{Auswahl}; P^2_{Auswahl}]$
n = n+1
n = n+1
284
$GS \leq GS_{Schwelle}$
ja
nein
286
Store $P_{Auswahl}$ Pattern, $GS_{Schwelle} = GS$
288
$n \geq Abbruch$
nein
Ende
ja
3ter Design-Schritt

Fig. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102011082098 B4
- WO 2015128385 A1
- US 2016044729 A1
- US 20050176371 A1


### In der Beschreibung aufgeführte Nicht-Patentliteratur


- **G. KILIAN ; H. PETKOV ; R. PSIUK ; H. LIESKE ; F. BEER ; J. ROBERT ; A. HEUBERGER.** Improved coverage for low-power telemetry systems using telegram splitting. *Proceedings of 2013 European Conference on Smart Objects, Systems and Technologies (SmartSysTech),* 2013
- **G. KILIAN ; M. BREILING ; H. H. PETKOV ; H. LIESKE ; F. BEER ; J. ROBERT ; A. HEUBERGER.** Increasing Transmission Reliability for Telemetry Systems Using Telegram Splitting. *IEEE Transactions on Communications,* Marz 2015, vol. 63 (3), 949-961
- **ALEX E LAM et al.** *Time-Hopping and Frequency-Hopping Multiple-Access Packet Communications*
- ERM-Short Range Devices - Low Throughput Networks; Protocols for Interfaces A, B and C. ETSI TS 103 357 V0.0.5. Marz 2017